(19) Europäisches Patentamt
European Patent Office
Office européen des brevets

(11) **EP 3 729 623 B1**

(12) **EUROPÄISCHE PATENTSCHRIFT**

(45) Veröffentlichungstag und Bekanntmachung des Hinweises auf die Patenterteilung:
**23.02.2022  Patentblatt 2022/08**

(21) Anmeldenummer: **18825728.1**

(22) Anmeldetag: **21.12.2018**

(51) Internationale Patentklassifikation (IPC):
**H02M 1/15** (2006.01)   **H02M 3/158** (2006.01)
**G05F 1/46** (2006.01)   **H02J 1/02** (2006.01)
**H05B 33/08** (2020.01)   **H02M 1/00** (2006.01)
**H02M 3/00** (2006.01)   **H02M 3/155** (2006.01)

(52) Gemeinsame Patentklassifikation (CPC):
**H02M 1/15; H02M 3/156;** G05F 1/46; H02J 1/02;
H02M 1/0045; H02M 3/005; H02M 3/1557

(86) Internationale Anmeldenummer:
**PCT/EP2018/086798**

(87) Internationale Veröffentlichungsnummer:
**WO 2019/122432 (27.06.2019 Gazette 2019/26)**

(54) **SPANNUNGSWANDLERANORDNUNG MIT EINEM EINGANGSREGELELEMENT UND VERFAHREN ZUM BETRIEB EINER SPANNUNGSWANDLERANORDNUNG**

VOLTAGE CONVERTER ARRANGEMENT COMPRISING AN INPUT CONTROL ELEMENT, AND METHOD FOR OPERATING A VOLTAGE CONVERTER ARRANGEMENT

DISPOSITIF CONVERTISSEUR DE TENSION COMPRENANT UN ÉLÉMENT DE RÉGLAGE D'ENTRÉE ET PROCÉDÉ PERMETTANT DE FAIRE FONCTIONNER UN DISPOSITIF CONVERTISSEUR DE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2017  EP 17210522**

(43) Veröffentlichungstag der Anmeldung:
**28.10.2020   Patentblatt 2020/44**

(73) Patentinhaber: **FRAUNHOFER-GESELLSCHAFT zur Förderung
der angewandten Forschung e.V.
80686 München (DE)**

(72) Erfinder:
• **RADECKER, Matthias
09394 Hohndorf (DE)**
• **NUNES MARCHESAN, Ricardo
97105-160 Santa  Maria / RS (BR)**

(74) Vertreter: **Burger, Markus et al
Schoppe, Zimmermann, Stöckeler
Zinkler, Schenk & Partner mbB
Patentanwälte
Radlkoferstraße 2
81373 München (DE)**

(56) Entgegenhaltungen:
**WO-A1-2013/182813     US-A- 4 355 352
US-B1- 9 256 238**

• **MARTÍNEZ-GARCÍA HERMINIO ET AL: "Four-quadrant linear-assisted DC/DC voltage regulator", ANALOG INTEGRATED CIRCUITS AND SIGNAL PROCESSING, SPRINGER NEW YORK LLC, US, Bd. 88, Nr. 1, 23. April 2016 (2016-04-23) , Seiten 151-160, XP035898949, ISSN: 0925-1030, DOI: 10.1007/S10470-016-0747-8 [gefunden am 2016-04-23]**

EP 3 729 623 B1

- MARTINEZ H ET AL: "Linear-assisted DC-DC converter based on CMOS technology", POWER ELECTRONICS SPECIALISTS CONFERENCE, 2008. PESC 2008. IEEE, IEEE, PISCATAWAY, NJ, USA, 15. Juni 2008 (2008-06-15), Seiten 3735-3740, XP031300540, ISBN: 978-1-4244-1667-7
- COSP-VILELLA JORDI ET AL: "Design of an on-chip linear-assisted DC-DC voltage regulator", 2013 IEEE 20TH INTERNATIONAL CONFERENCE ON ELECTRONICS, CIRCUITS, AND SYSTEMS (ICECS), IEEE, 8. Dezember 2013 (2013-12-08), Seiten 353-356, XP032595300, DOI: 10.1109/ICECS.2013.6815427 [gefunden am 2014-05-13]

**Beschreibung**

Ausführungsbeispiele gemäß der vorliegenden Erfindung beziehen sich auf eine Spannungswandleranordnung.

Weitere Ausführungsbeispiele gemäß der vorliegenden Erfindung beziehen sich auf ein Verfahren zum Betrieb einer Spannungswandleranordnung.

Weitere Ausführungsbeispiele gemäß der Erfindung beziehen sich auf einen Aufwärts-Abwärts-Wandler mit bidirektional parallelem Linearregler.

**Hintergrund der Erfindung**

Im Folgenden wird ein der Erfindung zugrunde liegendes technisches Problem erläutert.

Schaltregler, meist pulsweitenmodulierte Konverter (PWM-Konverter) finden weitverbreitete Anwendung in DC-DC-Wandlern (Gleichspannungs-Gleichspannungs-Wandlern) oder AC-DC-Wandlern (Wechselspannungs-Gleichspannungs-Wandlern), bei welchen am Ausgang oder Eingang eine möglichst rippelfreie Gleichspannung oder ein rippelfreier Gleichstrom erzeugt werden sollen. Der Wirkungsgrad solcher Schaltregler ist meist sehr hoch, da ein adiabatisches Schalten über Energiespeicher erfolgt.

Nachteilhaft ist jedoch, dass solche Konverter Glättungskapazitäten und weitere Filterelemente wie doppelt kompensierte Stromdrosseln am Eingang und Filterkondensatoren bzw. zusätzliche Filterdrosseln am Ausgang benötigen, um den Rippel weitgehend zu unterdrücken. Glättungskondensatoren sind voluminös und meist lebensdauerbegrenzend, in vielen Fällen auch ungeeignet für Temperaturen über 100 °C, so dass man vor allem Glättungskondensatoren vermeiden möchte.

Eine Möglichkeit, die Kondensatoren am Eingang oder Ausgang zu vermeiden, ist der Einsatz von ideal gekoppelten Induktivitäten, welche die Stromschwankung einer geschalteten Induktivität minimiert. Diese Maßnahme ist jedoch sehr stark von Betriebsparametern abhängig und führt meist nur in einem Arbeitspunkt oder einem eingeschränkten Arbeitsbereich zur völligen Stromglättung an Ausgang oder Eingang, während in anderen Arbeitsbereichen wiederum Strom- und Spannungsrippel auftreten. Ein Beispiel vom Stand der Technik ist die US 4 355 352 A.

Ein weiterer Nachteil ist die begrenzte Dynamik (Regelgeschwindigkeit) eines Schaltreglers, da dieser zumindest durch die Periodendauer der Schaltfrequenz limitiert wird, mit dem der Schaltregler arbeitet.

Es wurde erkannt, dass ein wesentliches technisches Problem die Netzrückwirkung von PWM-Schaltreglern (pulsweitenmodulierten Schaltreglern) durch den Stromrippel ist, welcher von einer eingangsseitigen Glättungskapazität vom Wandler entnommen wird und somit zu aufwendigen Netzfiltern für die hochfrequenten Harmonischen (Störspannung) am Netzeingang führt. Es wird geschätzt, dass Netzfilter zwischen 20% und 30% des Volumens und Kostenaufwands einer Stromversorgung ausmachen. Eingangsstufen solcher Netzgeräte sind meist Boost-Konverter (Aufwärts-Konverter) oder Sepic-Konverter, welche eine Leistungsfaktorkorrektur (PFC) vornehmen, um einen sinusförmigen Eingangsstrom in Phase mit der Netzspannung zu erzeugen und somit niederfrequente Harmonische zum Netz hin zu unterdrücken.

Im Folgenden werden einige bisherige Lösungen des technischen Problems genannt.

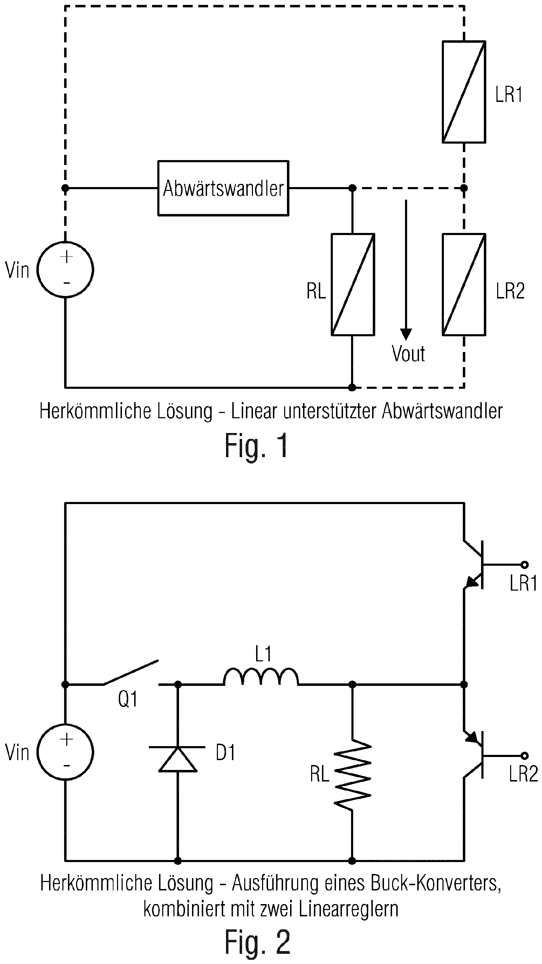

Eine bisherige Lösung zur Überwindung dieser Nachteile ist ein linear unterstützter Abwärtswandler, der aus einem PWM-Abwärtswandler und einem parallelen Linearregler LR1 nach Fig. 1 besteht. Der Abwärtswandler wandelt die Eingangsspannung Vin in die Ausgangsspannung Vout um und versorgt die Last RL mit Strom, während zugleich ein Linearregler LR1 einen Strom vom Eingang zum Ausgang liefert und ein weiterer Linearregler LR2 einen Strom vom Ausgang des Abwärtswandlers über der Last ableitet.

Eine typische Schaltung für dieses Prinzip ist in Fig. 2 gezeigt [1]. Der Schaltregler besteht aus einer Buck-Topologie mit Schalter Q1, Glättungsinduktivität L1 und einem passiven Schalter D1 in Form einer Diode. Die Linearregler LR1 und LR2 sind beispielsweise als schnelle Bipolartransistoren ausgeführt.

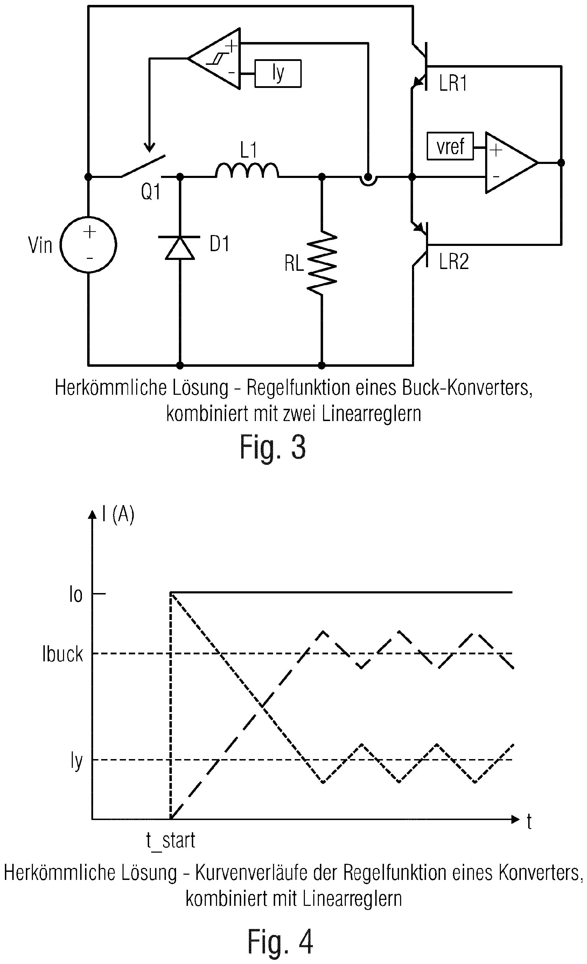

In Fig. 3 und Fig. 4 ist die vorzugsweise Funktion des linear unterstützten Abwärtswandlers gezeigt, um die genannten Nachteile zu beseitigen. Beide Linearregler LR1 und LR2 werden durch einen Verstärker so gesteuert, dass sie die Ausgangsspannung Vout über der Last konstant halten. Dabei wird die Ausgangsspannung mit einer Referenzspannung vref verglichen, welche als Sollwert geregelt werden soll. Ist die Ausgangsspannung kleiner als der Sollwert, weil der Strom, der von L1 an die Last geliefert wird, zu klein ist, so wird der Regler LR1 aktiviert und ein Strom von der Eingangsspannung zusätzlich an die Last geliefert. Ist die Ausgangsspannung hingegen zu groß, weil der Strom durch L1 zu groß ist, um die Ausgangsspannung über der Last auf den Sollwert zu bringen, wird der Regler LR2 aktiviert und der überschüssige Strom wird über die Last abgeleitet. Der Strom, welcher jeweils von einem der Linearregler an die Last geliefert wird (LR1) oder abgeführt wird (LR2), wird zusätzlich gemessen und an einen Komparator mit Hysterese weitergeleitet, um mit einem Stromreferenzwert ly verglichen zu werden und somit die Pulsweitenmodulation des Abwärtswandlers am aktiven Schalter Q1 zu erreichen. Wird der Referenzwert ly auf einen positiven Wert eingestellt, wie in Figur 3b gezeigt ist, so ist lediglich der Linearregler LR1 aktiv, da der Strom stets in positiver Richtung zur Last fließt.

Diese Betriebsweise ist sinnvoll, wenn die Differenz zwischen Eingangsspannung und Ausgangsspannung kleiner ist als die Ausgangsspannung selbst, da die Verlustleistung in den Linearreglern möglichst klein gehalten werden soll. Andererseits würde die Verlustleistung des Linearreglers möglichst klein, wenn die Ausgangsspannung kleiner als die Differenz zwischen Eingangs- und Ausgangsspannung ist und somit nur LR2 aktiv wäre, um den überschüssigen Strom über der Last abzuleiten.

Es wurde erkannt, dass eine optimale Ausführung zur Verringerung der Verluste und zur Erzielung eines maximalen Wirkungsgrades darin besteht, den sogenannten Rippelstrom des Abwärtswandlers aus der Drossel L1 entweder durch LR1 oder durch LR2 zu kompensieren, je nachdem ob die Spannungsdifferenz zwischen Eingang und Ausgang kleiner oder größer als die Ausgangsspannung selbst ist. Die Verluste in den Linearreglern werden so jeweils nur aus dem Rippelstrom multipliziert mit der kleinsten Spannungsdifferenz zwischen entweder Eingang und Ausgang oder der Ausgangsspannung selbst gebildet, so dass der gesamte Wirkungsgrad dieser Anordnung nahezu so hoch ist wie der des Abwärtswandlers ohne Linearregler-Assistenz.

In Fig. 4 ist ersichtlich, dass bei dynamischen Regelvorgängen der Ausgangsstrom an die Last sofort als konstanter Gleichstrom geliefert wird, indem der Linearregler und der Schaltregler zum Zeitpunkt t_start eingeschaltet werden. Bei allen dynamischen Lastwechseln oder Eingangsspannungsänderungen wird somit einer der Linearregler die langsamere Reaktion des Schaltreglers, welcher über die Zeitkonstante aus dem Speicherelement L1 und der Last RL selbst verzögert ist, vollständig ausgleichen.

Trotz der einfachen Ausführung einer solchen Anordnung kann einer der Nachteile nicht beseitigt werden, da die Eingangsspannung immer größer sein muss als die Ausgangsspannung. Damit ist diese Ausführung nicht für Anwendungen geeignet, welche eine kleinere Eingangsspannung als die Ausgangsspannung erfordern, und außerdem wird der Nachteil der Kompensation des Stromrippels am Eingang eines Schaltreglers nicht beseitigt.

Weitere Möglichkeiten, die Nachteile vollständig zu beseitigen, sind nicht bekannt oder beseitigen nur einen Teil der Nachteile und schränken somit die Anwendungsfelder ein (zum Beispiel Zusatzschaltungen mit Kapazitäten zur Erzielung eines rippelfreien Ausgangsstromes [4]).

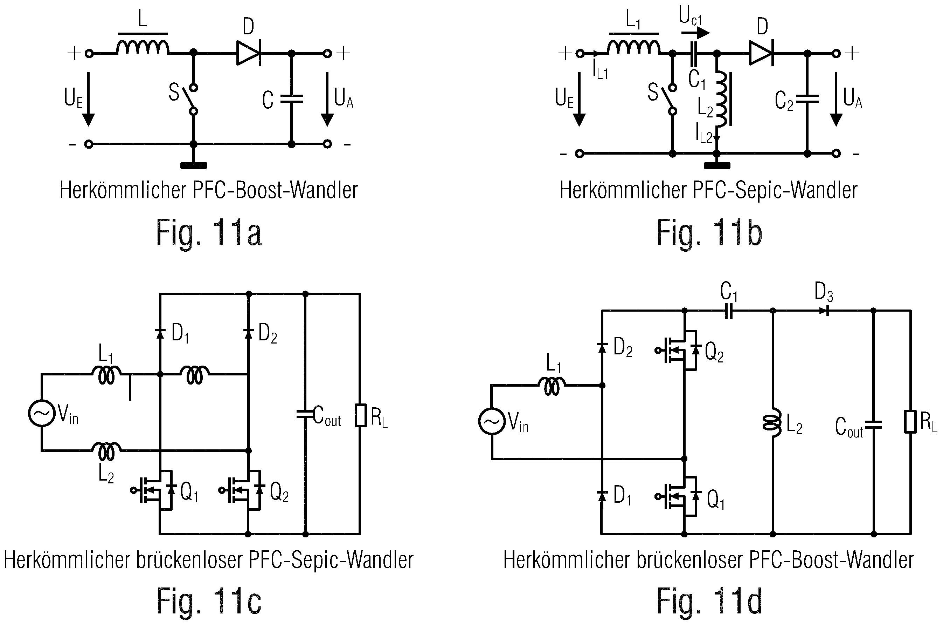

Als herkömmliche Lösungen für den Boost-Konverter oder den Sepic-Konverter als Eingangsstufe eines Netzgerätes mit sinusförmiger Netzspannung sind die in Fig. 11a und Fig. 11b gezeigten Topologien bekannt, wobei die Unterdrückung des hochfrequenten Stromrippels durch ein Netzfilter erfolgt, welches technisch aufwendig und ebenso mit - wenn auch geringen - thermischen Verlusten behaftet ist.

Weiterhin gibt es sogenannte brückenlose Aufwärtswandler [7], [8] bzw. Aufwärts/AbwärtsWandler [9], oder brückenlose Abwärtswandler [10], welche für einen Wechselstromeingang Vin_AC geeignet sind und für die Leistungsfaktorkorrektur eingesetzt werden, indem die Gleichrichterbrücke, welche vor einem Boost- oder Sepic-Konverter zum Zweck der Leistungsfaktorkorrektur geschaltet wird, teilweise eingespart werden kann. Fig. 11c und 11d zeigen solche Topologien.

Diese Topologien weisen eine eingangsseitige Glättungsinduktivität auf, welche jedoch den Schaltrippel des Stroms nicht vollständig unterdrücken kann, auch wenn im kontinuierlichen Betrieb gearbeitet wird. Es müssen deshalb noch weitere Filterkondensatoren und ggf. doppelt stromkompensierte Drosseln zwischen den Netzeingang Vin_AC und die Eingangsdrosseln geschaltet werden, um hochfrequente Störungen zu unterdrücken.

In Anbetracht des Stands der Technik besteht ein Bedarf an einem Spannungswandlerkonzept, das einen verbesserten Kompromiss zwischen Wirkungsgrad, Realisierungsaufwand und Rippel liefert.

## Zusammenfassung der Erfindung

Ein Ausführungsbeispiel gemäß der vorliegenden Erfindung schafft eine Spannungswandleranordnung. Die Spannungswandleranordnung umfasst einen getakteten Spannungswandler, der in der Lage ist (bzw. ausgelegt ist), basierend auf einer Eingangsspannung eine Ausgangsspannung zu erzeugen. Die Spannungswandleranordnung umfasst ferner ein erstes Eingangsregelelement, das zwischen einen ersten Eingangsspannungsknoten und einen zweiten Eingangsspannungsknoten geschaltet ist, wobei der zweite Eingangsspannungsknoten ein Bezugspotential aufweist (und beispielsweise als Bezugspotentialknoten betrachtet werden kann). Das erste Eingangsregelelement ist ausgelegt, um einen Stromfluss zu ermöglichen, um Schwankungen eines Eingangsstroms der Spannungswandleranordnung (der sich beispielsweise als Summe des Stroms durch das Regelelement und des Eingangsstroms des getakteten Spannungswandlers ergibt) entgegenzuwirken, beispielsweise so, dass Schwankungen eines Eingangsstroms des Spannungswandlers zumindest teilweise kompensiert werden.

Die entsprechende Spannungswandleranordnung basiert auf der Überlegung, dass ein Eingangsrippel (also beispielsweise Schwankungen eines Eingangsstroms der Spannungswandleranordnung) in effizienter Weise verringert werden kann, indem das erste Eingangsregelelement einen zeitlich variablen Stromfluss ermöglicht, der beispielsweise Schwankungen des Eingangsstroms der Spannungswandleranordnung entgegenwirkt. Beispielsweise kann der durch das erste Eingangsregelelement fließende Strom ansteigen, wenn der Eingangsstrom des getakteten Spannungswandlers kleiner als ein Maximalwert (beispielsweise ein gleitender Maximalwert) (beispielsweise des Eingangsstroms des getakteten Spannungswandlers) wird. Beispielsweise kann der Strom durch das erste Eingangsregelelement so gesteuert bzw. geregelt werden, dass eine Summe aus dem durch das erste Eingangsregelelement fließenden Strom und dem Eingangsstrom des getakteten Spannungswandlers zumindest näherungsweise konstant ist, wodurch folglich der Eingangsstrom der Spannungswandleranordnung (der sich typischerweise als Summe des Stroms durch das erste Eingangsregelelement und des Eingangsstroms des getakteten Spannungswandlers ergibt) näherungsweise konstant bleibt.

Das entsprechende Eingangsregelelement bringt zwar typischerweise eine gewisse Verlustleistung mit sich, trägt aber typischerweise auch zu einer deutlichen Verringerung des Eingangsrippels (beispielsweise des Rippels des Eingangsstroms der Spannungswandleranordnung) bei, so dass beispielsweise platz- und kostenintensive Eingangsfilterbauteile wie Kapazitäten und/oder Drosselspulen kleiner dimensioniert werden können oder sogar ganz entfallen können. Somit kann insgesamt ein guter Kompromiss zwischen Effizienz,

Implementierungsaufwand, Zuverlässigkeit und elektromagnetischer Verträglichkeit (z. B. im Hinblick auf den Eingangsrippel) erreicht werden.

Bei einem von den Ansprüchen nicht abgedeckten Ausführungsbeispiel ist die Spannungswandleranordnung ausgelegt, um Spannungsschwankungen zwischen dem ersten Eingangsspannungsknoten und dem zweiten Eingangsspannungsknoten auszugleichen. Beispielsweise kann der getaktete Spannungswandler in der Lage sein, auch bei deutlichen Schwankungen der Spannung zwischen dem ersten Eingangsspannungsknoten und dem zweiten Eingangsspannungsknoten eine konstante Ausgangsspannung zu liefern (wobei unter Umständen Schwankungen der Spannung zwischen dem ersten Eingangsspannungsknoten und dem zweiten Eingangsspannungsknoten in einem Verhältnis von zumindest 2 zu 1 durch den getakteten Spannungswandler ausgeglichen werden können).

Bei einem von den Ansprüchen nicht abgedeckten Ausführungsbeispiel ist der getaktete Spannungswandler ein nichtinvertierender Spannungswandler. Es hat sich gezeigt, dass das oben erläuterte Eingangsregelelement in sehr vorteilhafter Weise bei einem solchen nicht-invertierenden Spannungswandler eingesetzt werden kann, um Schwankungen des Eingangsstroms entgegenzuwirken.

Bei einem bevorzugten Ausführungsbeispiel ist die Spannungswandleranordnung ausgelegt, um einen Stromfluss über ein zweites Eingangsregelelement zu ermöglichen, um Schwankungen des Eingangsstroms der Spannungswandleranordnung entgegenzuwirken. Das zweite Eingangsregelelement kann also die Wirkung des ersten Eingangsregelelements ergänzen, wobei beispielsweise abhängig von den Spannungsverhältnissen durch eine Steuerung entschieden werden kann, welches der Eingangsregelelemente wie viel Strom übernehmen soll. Das erste Eingangsregelelement und das zweite Eingangsregelelement können im Übrigen auch abwechselnd wirksam werden, so dass beispielsweise das erste Eingangsregelelement während eines ersten Teils einer Periodendauer (beispielsweise einer Eingangsspannung oder einer Schaltperiode des getakteten Spannungswandlers) einen Stromfluss übernimmt und so dass beispielsweise das zweite Eingangsregelelement während eines zweiten Teils der Periodendauer einen Stromfluss übernimmt. Dadurch können bei manchen Ausführungsbeispielen die Verluste weiter reduziert werden.

Bei einem bevorzugten Ausführungsbeispiel weist die Spannungswandleranordnung ein zweites Eingangsregelelement auf, wobei das zweite Eingangsregelelement zwischen den ersten Eingangsspannungsknoten und einen ersten Ausgangsspannungsknoten geschaltet ist. Der erste Ausgangsspannungsknoten weist dabei bevorzugt ein Potential auf, das sich von dem Bezugspotential unterscheidet. Das zweite Eingangsregelelement ist in diesem Fall bevorzugt ausgelegt, um zumindest zeitweise einen Stromfluss zwischen dem ersten Ausgangsspannungsknoten und dem ersten Eingangsspannungsknoten zu ermöglichen (beispielsweise von dem ersten Ausgangsspannungsknoten zu dem ersten Eingangsspannungsknoten).

Auf diese Weise kann beispielsweise erreicht werden, dass während eines ersten Teils einer Periodendauer das erste Eingangsregelelement einen Stromfluss von dem ersten Eingangsspannungsknoten wegführt und dass das zweite Eingangsregelelement während eines zweiten Teils der Periodendauer einen Stromfluss hin zu dem ersten Eingangsspannungsknoten führt. Alternativ dazu kann aber auch, abhängig von dem jeweiligen Betriebszustand, entweder nur das erste Eingangsregelelement oder nur das zweite Eingangsregelelement aktiv sein.

Durch die Verwendung der beschriebenen zwei Eingangsregelelemente können beispielsweise Verluste reduziert werden, indem jeweils dasjenige der Eingangsregelelemente aktiv wird (einen Strom leitet), das in dem jeweiligen Betriebszustand die geringsten Verluste zur Folge hat. Je nach den Spannungsverhältnissen kann damit durch eine Steuerung, die die Eingangsregelelemente ansteuert und die bevorzugt auch den getakteten Spannungswandler ansteuert, ein minimaler Strom bzw. ein maximaler Strom bzw. ein mittlerer Strom des getakteten Spannungswandlers festgelegt werden, beispielsweise derart, dass der durch eines der Eingangsregelelemente fließende Strom bzw. der durch beide Eingangsregelelemente (bevorzugt abwechselnd) fließende Strom minimale Verluste hervorruft.

Bei einem bevorzugten Ausführungsbeispiel ist das zweite Eingangsregelelement ausgelegt, um einen Stromfluss zwischen dem ersten Eingangsspannungsknoten und dem ersten Ausgangsspannungsknoten zu ermöglichen, um Schwankungen des Eingangsstroms der Spannungswandleranordnung entgegenzuwirken. Es kann also beispielsweise über das zweite Eingangsregelelement ein Stromfluss von dem ersten Eingangsspannungsknoten zu dem ersten Ausgangsspannungsknoten fließen oder es kann beispielsweise durch das zweite Eingangsregelelement ein Stromfluss von dem ersten Ausgangsspannungsknoten zu dem ersten Eingangsspannungsknoten fließen. Der Stromfluss durch das zweite Eingangsregelelement kann also beispielsweise zu dem ersten Eingangsspannungsknoten hinfließen, während der Stromfluss durch das erste Eingangsregelelement von dem ersten Eingangsspannungsknoten wegfließen kann (oder umgekehrt). Damit kann durch eine geeignete Kombination bzw. Ansteuerung der beiden Eingangsregelelemente erreicht werden, dass Schwankungen (beispielweise rippel-artige Schwankungen) des Eingangsstroms des getakteten Spannungswandlers gegenüber einem gewünschten Eingangsstrom der Spannungswandleranordnung zumindest teilweise ausgeglichen werden, indem ein Strom von dem ersten Ausgangsspannungsknoten über das zweite Eingangsregelelement zu dem ersten Eingangsspannungsknoten hinfließt, und/oder indem ein Eingangsstrom des getakteten Spannungswandlers, der kleiner ist als ein gewünschter Eingangsstrom der Spannungswandleranordnung, durch einen Stromfluss von dem ersten Eingangsspannungsknoten über das erste Eingangsregelelement hin zu dem zweiten Eingangsspannungsknoten ausgeglichen wird. Somit kann beispielsweise ein näherungsweise konstanter Eingangsstrom der Spannungswandleranordnung erzielt werden, und zwar unabhängig davon, ob ein aktueller (instantaner) Eingangsstrom des getakteten Spannungswandlers größer oder kleiner als ein gewünschter (z.B. aktueller oder instantaner) Eingangsstrom der Spannungswandleranordnung ist.

Bei einem von den Ansprüchen nicht abgedeckten Ausführungsbeispiel ist die Spannungswandleranordnung ausgelegt, um basierend auf dem Eingangsstrom die Ausgangsspannung bereitzustellen, wobei ein Betrag der Ausgangsspannung größer ist als ein Betrag der Eingangsspannung. In einem solchen Ausführungsbeispiel ist das Vorhandensein des ersten Eingangsregelelements besonders nützlich, da es hierbei oftmals nicht in effizienter Weise möglich ist, den Schwankungen des Eingangsstroms der Spannungswandleranordnung durch ein Regelelement, das zwischen den ersten Eingangsspannungsknoten und dem ersten Ausgangsspannungsknoten geschaltet ist, in effizienter Weise entgegenzuwirken.

In einem bevorzugten Ausführungsbeispiel ist die Spannungswandleranordnung so ausgelegt, dass ein Eingangsstrom des getakteten Spannungswandlers, abgesehen von Stromschwankungen, die höchstens 10% einer Stromamplitude des Eingangsstroms des getakteten Spannungswandlers betragen, in einem Zeitabschnitt (z. B. innerhalb einer Periode der Eingangsspannung) proportional zu einer Eingangsspannung verläuft, wobei eine Frequenz der Eingangsspannung kleiner ist (oder deutlich kleiner ist, beispielsweise zumindest um einen Faktor 10) als eine Schaltfrequenz des getakteten Spannungswandlers (welcher beispielsweise einen sinusförmigen Verlauf bzw. einen Verlauf in Form einer Sinus-Halbwelle aufweist). Die Spannungswandleranordnung ist dabei bevorzugt ausgelegt, um einen Stromfluss durch das erste Eingangsregelelement (beispielsweise in zeitlich veränderlicher Weise) so anzupassen (beispielsweise zu steuern oder zu regeln), dass der Stromfluss durch das erste Eingangsregelelement zumindest zeitweise (oder auch während der gesamten Sinus-Halbwelle) den Stromschwankungen des Eingangsstroms des getakteten Spannungswandlers (beispielsweise Abweichungen von einem idealen sinusförmigen Verlauf) entgegenwirkt (beispielsweise um somit Stromschwankungen eines Eingangsstroms der Spannungswandleranordnung geringer zu halten als Stromschwankungen des getakteten Spannungswandlers, oder um einen Eingangsstrom der Spannungswandleranordnung an einen sinusförmigen Verlauf anzunähern).

Durch die entsprechende Auslegung der Spannungswandleranordnung werden beispielsweise Harmonische vergleichsweise gering gehalten. Das Eingangsregelelement bewirkt dabei beispielsweise, dass Schwankungen des Eingangsstroms des getakteten Spannungswandlers (die sich beispielsweise durch den getakteten Betrieb des getakteten Spannungswandlers ergeben) sich nicht voll, sondern nur abgeschwächt auf den Eingangsstrom der Spannungswandleranordnung auswirken können. Indem der Stromfluss durch das erste Eingangsregelelement den Stromschwankungen des getakteten Spannungswandlers (die beispielsweise eine deutlich geringere Periodendauer haben als die Eingangsspannung) entgegenwirkt, kann erreicht werden, dass ein Rippel auf dem Eingangsstrom der Spannungswandleranordnung verkleinert wird. Somit kann erreicht werden, dass der Eingangsstrom der Spannungswandleranordnung zumindest näherungsweise proportional zu der Eingangsspannung der Spannungswandleranordnung ist, wodurch eine elektromagnetische Verträglichkeit dieser Spannungswandleranordnung auch ohne aufwendige Eingangsfilter verbessert werden kann. Somit ergibt sich ein guter Kompromiss zwischen Kosten und unerwünschten Netzrückwirkungen.

Bei einem bevorzugten Ausführungsbeispiel weist die Spannungswandleranordnung ein drittes Eingangsregelelement auf, wobei das dritte Eingangsregelelement zwischen den ersten Eingangsspannungsknoten und den ersten Ausgangsspannungsknoten geschaltet ist, wobei der erste Ausgangsspannungsknoten ein Potential aufweist, das sich von dem Bezugspotential unterscheidet. Beispielsweise kann das dritte Eingangsregelelement parallel zu dem oben genannten zweiten Eingangsregelelement sein, aber einen Stromfluss in entgegengesetzter Richtung wie das zweite Eingangsregelelement ermöglichen. Das dritte Eingangsregelelement ist beispielsweise ausgelegt, um zumindest zeitweise einen Stromfluss zwischen dem ersten Eingangsspannungsknoten und dem ersten Ausgangsspannungsknoten zu ermöglichen, der beispielsweise einem Stromfluss durch das zweite Eingangsregelelement entgegengerichtet ist.

Bei einer entsprechenden Spannungswandleranordnung, die beispielsweise drei Eingangsregelelemente aufweisen kann, kann abhängig von dem jeweiligen Betriebszustand, beispielsweise abhängig von der Relation zwischen einer Eingangsspannung und einer Ausgangsspannung, durch eine Steuerung flexibel entschieden werden, durch welches bzw. durch welche der Eingangsregelelemente ein Stromfluss fließen soll. Durch die Verwendung (bzw. das Vorhandensein) sowohl des zweiten Eingangsregelelements als auch des dritten Eingangsregelelements kann beispielsweise erreicht werden, dass ein Stromfluss sowohl von dem ersten Eingangsspannungsknoten zu dem ersten Ausgangsspannungsknoten als auch von dem ersten Ausgangsspannungsknoten zu dem ersten Eingangsspannungsknoten erfolgen kann. Zusätzlich kann durch das erste Eingangsregelelement auch ein Stromfluss von dem ersten Eingangsspannungsknoten zu dem zweiten Eingangsspannungsknoten (oder auch umgekehrt) erfolgen. Somit ist (beispielsweise durch eine Steuerung der Spannungswandleranordnung) flexibel wählbar, durch welches der Eingangsregelelemente ein Strom fließen soll, um den Eingangsstrom der Spannungswandleranordnung zumindest näherungsweise konstant zu halten, selbst wenn der Eingangsstrom des getakteten Spannungswandlers variiert.

Bei einem bevorzugten Ausführungsbeispiel weist die Spannungswandleranordnung ein zweites Eingangsregelelement auf, wobei das zweite Eingangsregelelement zwischen den ersten Eingangsspannungsknoten und den ersten Ausgangsspannungsknoten geschaltet ist. Die Spannungswandleranordnung weist auch ein drittes Eingangsregelelement auf, wobei das dritte Eingangsregelelement zwischen den ersten Eingangsspannungsknoten und den ersten Ausgangsspannungsknoten geschaltet ist. Die Spannungswandleranordnung ist ausgelegt, um (beispielsweise selektiv) einen Stromfluss über das zweite Eingangsregelelement zu ermöglichen, wenn die Eingangsspannung (oder ein Betrag der Eingangsspannung) der Spannungswandleranordnung größer ist als eine Differenz der Ausgangsspannung der Spannungswandleranordnung und der Eingangsspannung (oder als ein Betrag der Potentialdifferenz zwischen dem ersten Eingangsspannungsknoten und dem ersten Ausgangsspannungsknoten). Die Spannungswandleranordnung ist ferner ausgelegt, um (beispielsweise selektiv) einen Stromfluss über das erste Eingangsregelelement zu ermöglichen, wenn die Eingangsspannung von der Ausgangsspannung um höchstens 10% abweicht (oder um höchstens +/-1V abweicht, oder um höchstens +/-2V abweicht, oder um höchstens +/-5V abweicht). Die Spannungswandleranordnung ist ferner ausgelegt, um (beispielsweise selektiv) einen Stromfluss über das erste Eingangsregelelement zu ermöglichen, wenn die Eingangsspannung (oder ein Betrag der Eingangsspannung) kleiner ist als die Differenz der Ausgangsspannung und der Eingangsspannung (oder als ein Betrag der Potentialdifferenz zwischen dem ersten Eingangsspannungsknoten und dem ersten Ausgangsspannungsknoten). Die Spannungswandleranordnung ist ferner ausgelegt, (beispielsweise selektiv) einen Stromfluss über das zweite Eingangsregelelement und/oder das erste Eingangsregelelement zu ermöglichen, wenn die Eingangsspannung um höchstens 10% (oder um höchstens +/-1V, oder um höchstens +/-2V, oder um höchstens +/-5V) von der Hälfte der Ausgangsspannung abweicht. Die Spannungswandleranordnung ist ferner ausgelegt, um (beispielsweise selektiv) einen Stromfluss über das dritte Eingangsregelelement zu ermöglichen, wenn die Eingangsspannung (oder ein Betrag der Eingangsspannung) größer ist als die Ausgangsspannung.

Durch einen entsprechenden Mechanismus wird ermöglicht, dass die Kompensation von Schwankungen des Eingangsstroms des getakteten Spannungswandlers in verschiedenen Betriebszuständen (oder auch während verschiedenen Phasen einer Periode der Eingangsspannung) jeweils mit guter Effizienz kompensiert wird.

Bei einem von den Ansprüchen nicht abgedeckten Ausführungsbeispiel ist der getaktete Spannungswandler ein Boost-Wandler (Aufwärts-Wandler bzw. Aufwärts-Konverter) und/oder ein SEPIC-Konverter und/oder ein Cuk-Konverter. Es hat sich gezeigt, dass das hierin beschriebene Konzept mit solchen Wandlertypen besonders gut einsetzbar ist.

Bei einem bevorzugten Ausführungsbeispiel ist das zweite Eingangsregelelement und/oder das dritte Eingangsregelelement und/oder das erste Eingangsregelelement unter Verwendung eines Bipolartransistors realisiert. Es hat sich gezeigt, dass Bipolartransistoren für eine entsprechende Regelung besonders gut geeignet sind.

Bei einem bevorzugten Ausführungsbeispiel weist die Spannungswandleranordnung ein zweites Eingangsregelelement auf, das zwischen den ersten Eingangsspannungsknoten und einen ersten Ausgangsspannungsknoten, der von einem Bezugspotentialknoten verschieden ist, geschaltet ist (wobei der erste Ausgangsspannungsknoten beispielsweise ein Potential aufweist, das sich von dem Bezugspotential unterscheidet). Der getaktete Spannungswandler ist bevorzugt ausgelegt, um in einem Betriebszustand, in dem ein Betrag der Eingangsspannung dem Betrag einer Potentialdifferenz zwischen dem ersten Eingangsspannungsknoten und dem ersten Ausgangsspannungsknoten entspricht (oder beispielsweise um höchstens 10% abweicht, oder um höchstens +/-1V abweicht, oder um höchstens +/-2V abweicht, oder um höchstens +/-5V abweicht) und in dem der Betrag der Eingangsspannung kleiner ist als ein Betrag der Ausgangsspannung (im Folgenden auch als "Fall 4" beschrieben), einen pulsierenden Eingangsstrom aufzuweisen (dessen Maximalbetragswert beispielsweise größer ist als ein benötigter oder gewünschter Stromwert der Spannungswandleranordnung und dessen Minimalbetragswert beispielsweise kleiner ist als der benötigte oder gewünschte Eingangs-Stromwert der Spannungswandleranordnung). Das erste Eingangsregelelement und das zweite Eingangsregelelement sind beispielsweise ausgelegt, um in dem Betriebszustand, in dem der Betrag der Eingangsspannung dem Betrag der Potentialdifferenz zwischen dem ersten Eingangsspannungsknoten und dem ersten Ausgangsspannungsknoten entspricht, und in dem der Betrag der Eingangsspannung kleiner ist als der Betrag der Ausgangsspannung, Schwankungen des Eingangsstroms des getakteten Spannungswandlers zumindest teilweise zu kompensieren, indem das erste Eingangsregelelement einen zeitlich pulsierenden Stromfluss zwischen dem ersten Eingangsspannungsknoten und dem Bezugspotentialknoten ermöglicht und indem das zweite Eingangsregelelement einen zeitlich pulsierenden Stromfluss zwischen dem ersten Ausgangsspannungsknoten und dem ersten Eingangsspannungsknoten ermöglicht.

Der pulsierende Stromfluss durch das zweite Eingangsregelelement und der pulsierende Stromfluss durch das erste Eingangsregelelement wechseln sich beispielsweise zeitlich ab (finden also nicht gleichzeitig statt). Beispielsweise erfolgt ein Stromfluss durch das zweite Eingangsregelelement, falls ein Momentanstrom des Eingangsstroms kleiner ist als ein benötigter Stromwert (oder gewünschter Stromwert) der Spannungswandleranordnung. Beispielsweise erfolgt ein Stromfluss durch das erste Eingangsregelelement, falls ein Momentanstrom des Eingangsstroms der getakteten Spannungswandleranordnung kleiner ist als ein benötigter Stromwert Stromwert (oder gewünschter Stromwert) der Spannungswandleranordnung. Der Stromfluss erfolgt beispielsweise so, dass der Eingangsstrom der Spannungswandleranordnung zeitweise kleiner ist als der Eingangsstrom des getakteten Spannungswandlers und dass der Eingangsstrom der Spannungswandleranordnung zeitweise größer ist als ein Eingangsstrom des getakteten Spannungswandlers bzw. dass ein zeitlicher Verlauf der Eingangsstroms der Spannungswandleranordnung eine zeitlich geglättete Version des zeitlichen Verlaufs des Eingangsstroms des getakteten Spannungswandlers ist. Durch die genannte Ansteuerung kann beispielsweise erreicht werden, dass die Spannungswandleranordnung bei ganz verschiedenen Betriebszuständen Schwankungen des Eingangsstroms des getakteten Spannungswandlers kompensiert, wobei Verluste gering gehalten werden.

Bei einem bevorzugten Ausführungsbeispiel weist die Spannungswandleranordnung ein zweites Eingangsregelelement auf, das zwischen den ersten Eingangsspannungsknoten und einen ersten Ausgangsspannungsknoten, der von einem Bezugspotentialknoten verschieden ist, geschaltet ist. Der erste Ausgangsspannungsknoten weist beispielsweise ein Potential auf, das sich von dem Bezugspotential unterscheidet. Der getaktete Spannungswandler ist beispielsweise ausgelegt (bzw. wird angesteuert), um in einem Betriebszustand, in dem ein Betrag der Eingangsspannung größer ist als ein Betrag der Potentialdifferenz zwischen dem ersten Eingangsspannungsknoten und dem ersten Ausgangsspannungsknoten, und in dem der Betrag der Eingangsspannung kleiner ist als ein Betrag der Ausgangsspannung (hierin auch als "Fall 1" beschrieben), einen pulsierenden Eingangsstrom aufzuweisen, dessen Minimalbetragswert beispielsweise mindestens so groß ist wie ein benötigter oder gewünschter Eingangs-Stromwert der Spannungswandleranordnung). Das zweite Eingangsregelelement ist beispielsweise ausgelegt, um in dem Betriebszustand, in dem der Betrag der Eingangsspannung größer ist als der Betrag der Potentialdifferenz zwischen dem ersten Eingangsspannungsknoten und dem ersten Ausgangsspannungsknoten, und in dem der Betrag der Eingangsspannung kleiner ist als der Betrag der Ausgangsspannung, Schwankungen des Eingangsstroms des getakteten Spannungswandlers zumindest teilweise zu kompensieren, indem das zweite Eingangsregelelement einen zeitlich pulsierenden Stromfluss zwischen dem ersten Ausgangsspannungsknoten und dem ersten Eingangsspannungsknoten ermöglicht. Durch entsprechende Auslegung der Spannungswandleranordnung kann in dem genannten Betriebszustand (in dem der Betrag der Eingangsspannung größer als der Betrag der Potentialdifferenz zwischen dem ersten Eingangsspannungsknoten und dem ersten Ausgangsspannungsknoten) Schwankungen des Eingangsstroms des getakteten Spannungswandlers in effizienter Weise entgegengewirkt werden. Beispielsweise ist in dem genannten Fall eine Verlustleistung, die in dem zweiten Eingangsregelelement entsteht, kleiner als eine Verlustleistung, die in dem ersten Eingangsregelelement entstehen würde, wenn das erste Eingangsregelelement verwendet würde. Das zweite Eingangsregelelement ergänzt somit das erste Eingangsregelelement dahin gehend, dass eine Steuerung entscheiden kann, ob eine Kompensation von Schwankungen des Eingangsstroms des getakteten Spannungswandlers durch das erste Eingangsregelelement oder durch das zweite Eingangsregelelement effizienter ist.

Bei einem bevorzugten Ausführungsbeispiel ist der getaktete Spannungswandler ausgelegt (bzw. wird angesteuert), um in einem Betriebszustand, in dem ein Betrag der Eingangsspannung einem Betrag der Ausgangsspannung entspricht (also beispielsweise um höchstens 10% von dem Betrag der Ausgangsspannung abweicht, oder um höchstens +/-1V abweicht, oder um höchstens +/-2V abweicht, oder um höchstens +/-5V abweicht) (dies wird hierin auch als "Fall 2" bezeichnet), einen pulsierenden Eingangsstrom aufzuweisen. Ein Maximalbetragswert des pulsierenden Eingangsstroms des getakteten Spannungswandlers ist beispielsweise höchstens so groß wie ein benötigter oder gewünschter Eingangs-Stromwert der Spannungswandleranordnung. Das erste Eingangsregelelement ist ausgelegt, um in dem Betriebszustand, in dem der Betrag der Eingangsspannung dem Betrag der Ausgangsspannung entspricht, Schwankungen des Eingangsstroms des getakteten Spannungswandlers zumindest teilweise zu kompensieren, indem das erste Eingangsregelelement einen zeitlich pulsierenden Stromfluss zwischen dem ersten Eingangsspannungsknoten und dem Bezugspotentialknoten ermöglicht. Damit ist der Eingangsstrom der Spannungswandleranordnung größer oder gleich dem Eingangsstrom des getakteten Spannungswandlers.

Das Vorhandensein des ersten Eingangsregelelements ist in dem genannten Betriebszustand vorteilhaft, da aufgrund der vergleichsweise geringen Differenz zwischen der Eingangsspannung und der Ausgangsspannung ein Stromfluss von dem ersten Eingangsspannungsknoten zu einem ersten Ausgangsspannungsknoten und ein Stromfluss von einem ersten Ausgangsspannungsknoten (ersten Ausgangsanschluss) zu dem ersten Eingangsspannungsknoten (erste Eingangsanschluss) nur in begrenztem Umfang möglich ist. Das erste Eingangsregelelement ist also beispielsweise in dem genannten Betriebszustand das Mittel der Wahl, um Schwankungen des Eingangsstroms der Spannungswandleranordnung entgegenzuwirken (bzw. Schwankungen des Eingangsstroms des getakteten Spannungswandlers zumindest teilweise zu kompensieren).

In einem bevorzugten Ausführungsbeispiel ist der getaktete Spannungswandler ausgelegt (bzw. wird angesteuert), um in einem Betriebszustand, in dem ein Betrag der Eingangsspannung kleiner ist als ein Betrag der Potentialdifferenz zwischen dem ersten Eingangsspannungsknoten und dem ersten Ausgangsspannungsknoten, und in dem der Betrag der Eingangsspannung kleiner ist als ein Betrag der Ausgangsspannung (hierin auch als "Fall 3" bezeichnet), einen pulsierenden Eingangsstrom aufzuweisen (dessen Maximalbetragswert beispielsweise höchstens so groß ist wie ein benötigter oder gewünschter Eingangs-Stromwert der Spannungswandleranordnung). Das erste Eingangsregelelement ist ausgelegt, um in diesem Betriebszustand, in dem der Betrag der Eingangsspannung kleiner ist als der Betrag der Potentialdifferenz zwischen dem ersten Eingangsspannungsknoten und dem ersten Ausgangsspannungsknoten und in dem der Betrag der Eingangsspannung kleiner ist als der Betrag der Ausgangsspannung, Schwankungen des Eingangsstroms des getakteten Spannungswandlers zumindest teilweise zu kompensieren, indem das erste Eingangsregelelement einen zeitlich pulsierenden Stromfluss zwischen dem ersten Eingangsspannungsknoten und dem zweiten Eingangsspannungsknoten (der ein Bezugspotentialknoten sein kann) ermöglicht.

Durch die genannte Ausgestaltung der Spannungswandleranordnung bzw. durch eine entsprechende Ansteuerung des ersten Eingangsregelelements wird erreicht, dass in dem genannten Betriebszustand die Kompensation von Schwankungen des Eingangsstroms des getakteten Spannungswandlers mit minimalen Verlusten erfolgt. Da in dem genannten Betriebszustand der Betrag der Eingangsspannung kleiner ist als der Betrag der Potentialdifferenz zwischen dem ersten Eingangsspannungsknoten und dem ersten Ausgangsspannungsknoten, ist typischerweise eine Verlustleistung in dem ersten Eingangsregelelement kleiner als in möglichen weiteren Eingangsregelelementen, die zwischen den ersten Eingangsspannungsknoten und den ersten Ausgangsspannungsknoten geschaltet sein können. Somit kann das erste Eingangsregelelement in diesem Betriebszustand seine Vorteile voll ausspielen.

In einem bevorzugten Ausführungsbeispiel weist die Spannungswandleranordnung ein drittes Eingangsregelelement auf, wobei das dritte Eingangsregelelement zwischen den ersten Eingangsspannungsknoten und den ersten Ausgangsspannungsknoten geschaltet ist. Beispielsweise ist das dritte Eingangsregelelement parallel zu dem oben genannten zweiten Eingangsregelelement geschaltet, ist aber für eine entgegengesetzte Stromflussrichtung ausgelegt wie das zweite Eingangsregelelement. Der erste Ausgangsspannungsknoten weist im Übrigen bevorzugt ein Potential auf, das sich von dem Bezugspotential unterscheidet.

Der getaktete Spannungswandler ist ausgelegt, um in einem Betriebszustand, in dem ein Betrag der Eingangsspannung größer ist als ein Betrag der Ausgangsspannung, einen pulsierenden Eingangsstrom aufzuweisen (wobei ein Maximalbetragswert des pulsierenden Eingangsstroms des getakteten Spannungswandlers beispielsweise höchstens so groß ist wie ein benötigter oder gewünschter Eingangs-Stromwert der Spannungswandleranordnung). Das dritte Eingangsregelelement ist hierbei ausgelegt, um in dem Betriebszustand, in dem der Betrag der Eingangsspannung größer ist als der Betrag der Ausgangsspannung, Schwankungen des Eingangsstroms des getakteten Spannungswandlers zu kompensieren, indem das dritte Eingangsregelelement einen zeitlich pulsierenden Stromfluss zwischen dem ersten Eingangsspannungsknoten und dem ersten Ausgangsspannungsknoten ermöglicht.

Durch die entsprechende Ausgestaltung der Spannungswandleranordnung bzw. durch eine entsprechende Ansteuerung des dritten Eingangsregelelements kann erreicht werden, dass Schwankungen des Eingangsstroms des getakteten Spannungswandlers in energieeffizienter Weise kompensiert werden. In dem genannten Betriebszustand weist nämlich das dritte Eingangsregelelement typischerweise eine geringere Verlustleistung auf als beispielsweise das erste Eingangsregelelement, da der Betrag der Spannungsdifferenz zwischen dem ersten Eingangsspannungsknoten und dem ersten Ausgangsspannungsknoten typischerweise kleiner ist als der Betrag der Eingangsspannung zwischen dem ersten Eingangsspannungsknoten und dem zweiten Eingangsspannungsknoten. Somit ermöglicht das Vorhandensein bzw. die entsprechende Ansteuerung des dritten Eingangsregelelements einen verlustarmen Betrieb (bzw. eine verlustarme Verringerung von Schwankungen des Eingangsstroms der Spannungswandleranordnung) in dem genannten Betriebszustand.

Bei einem bevorzugten Ausführungsbeispiel ist die Spannungswandleranordnung ausgelegt, um einen Eingangsstrom aufzunehmen, so dass ein zeitlicher Verlauf des Eingangsstroms zumindest in einen Zeitabschnitt (beispielsweise während einer Periodendauer der Eingangsspannung) etwa proportional zu einer Eingangsspannung ist (z. B. mit einer maximalen Abweichung von höchstens 10%, bezogen auf eine Amplitude der Eingangsspannung oder alternativ des Eingangsstroms). Eine Frequenz der Eingangsspannung ist dabei bevorzugt kleiner (oder deutlich kleiner, beispielsweise um zumindest einen Faktor von 10 kleiner) als eine Schaltfrequenz des getakteten Spannungswandlers. Die Eingangsspannung weist beispielsweise einen Verlauf einer Sinus-Halbwelle auf. Die Spannungswandleranordnung ist so ausgelegt, dass ein (beispielsweise pulsierender) Verlauf eines Eingangsstroms der Spannungswandleranordnung in einen ersten Zeitbereich, der einem Nullwert (z. B. einem Nulldurchgang) der Sinus-Halbwelle benachbart ist, und der sich über eine Mehrzahl von Perioden des Eingangsstroms des getakteten Spannungswandlers erstreckt, betragsmäßig größer ist als der Eingangsstrom des getakteten Spannungswandlers (so dass das Pulsieren des Eingangsstroms des Spannungswandlers in der Nähe des Nulldurchgangs durch LR4 bzw. nur durch LR4 kompensiert werden kann, wobei LR4 durch die Spannungswandleranordnung entsprechend angesteuert wird).

Durch eine entsprechende Ausgestaltung der Spannungswandleranordnung kann erreicht werden, dass nur geringe Harmonische entstehen. Dadurch, dass der getaktete Spannungswandler so angesteuert wird, dass sein Eingangsstrom betragsmäßig kleiner ist als der (gewünschte) Eingangsstrom der Spannungswandleranordnung, kann erreicht werden, dass Schwankungen des Eingangsstroms des getakteten Spannungswandlers durch das erste Eingangsregelelement kompensiert werden. Dies ist besonders vorteilhaft, da das erste Eingangsregelelement in den ersten Zeitbereich, der einem Nullwert der Sinus-Halbwelle benachbart ist, mit besonders geringen Verlusten arbeitet, da ja der Spannungsabfall über dem ersten Eingangsregelelement in diesem Falle vergleichsweise klein ist.

In einem weiteren bevorzugten Ausführungsbeispiel ist die Spannungswandleranordnung ausgelegt, um Schwankungen eines Eingangsstroms des getakteten Spannungswandlers durch einen zeitlich veränderlichen Stromfluss durch das erste Eingangsregelelement zumindest teilweise zu kompensieren, wenn ein Betrag der Eingangsspannung kleiner ist als ein Betrag einer Differenz zwischen der Eingangsspannung und der Ausgangsspannung und wenn der Betrag der Eingangsspannung kleiner als der Betrag der Ausgangsspannung ist (oder wenn die Eingangsspannung kleiner ist als die Differenz zwischen der Ausgangsspannung und der Eingangsspannung und wenn die Ausgangsspannung größer als die Eingangsspannung ist). Eine (selektive) Kompensation von Schwankungen eines Eingangsstroms des getakteten Spannungswandlers durch einen zeitlich veränderlichen Stromfluss durch das erste Eingangsregelelement kann in dem genannten Betriebszustand in besonders verlustarmer Weise erfolgen. Beispielsweise ist in dem genannten Betriebszustand eine Verlustleistung des ersten Eingangsregelelements kleiner als eine Verlustleistung eines eventuellen zusätzlichen Eingangsregelelements, das beispielsweise zwischen den ersten Eingangsspannungsanschluss und den zweiten Eingangsspannungsanschluss geschaltet ist. Indem also in dem genannten Betriebszustand (selektiv) das erste Eingangsregelelement verwendet wird, während beispielsweise in anderen Betriebszuständen ein weiteres Eingangsregelelement verwendet wird, das zwischen den ersten Eingangsspannungsknoten und den ersten Ausgangsspannungsknoten geschaltet ist, können Verluste, die durch die Eingangsregelelemente entstehen, gering gehalten werden.

Bei einem weiteren bevorzugten Ausführungsbeispiel ist die Spannungswandleranordnung ausgelegt, um Schwankungen eines Eingangsstroms des getakteten Spannungswandlers durch einen zeitlich veränderlichen Stromfluss durch ein zweites Eingangsregelelement zumindest teilweise zu kompensieren, wenn ein Betrag der Eingangsspannung größer ist als ein Betrag einer Differenz zwischen Eingangsspannung und der Ausgangsspannung und wenn der Betrag der Eingangsspannung kleiner als der Betrag der Ausgangsspannung ist (oder wenn die Eingangsspannung größer ist als die Differenz zwischen der Ausgangsspannung und der Eingangsspannung und wenn die Ausgangsspannung größer als die Eingangsspannung ist). Das zweite Eingangsregelelement ist dabei zwischen den ersten Eingangsspannungsknoten und einen ersten Ausgangsspannungsknoten geschaltet, wobei der erste Ausgangsspannungsknoten ein Potential aufweist, das sich von dem Bezugspotential unterscheidet.

Es wurde erkannt, dass in dem genannten Betriebszustand das zweite Eingangsregelelement die Schwankungen des Eingangsstroms des getakteten Spannungswandlers verlustärmer kompensieren kann als beispielsweise das erste Eingangsregelelement. Somit können sich beispielsweise das erste Eingangsregelelement und das zweite Eingangsregelelement ergänzen, um Schwankungen des Eingangsstroms des getakteten Spannungswandlers in verschiedenen Betriebszuständen verlustarm zu kompensieren. Eine Steuerung kann beispielsweise aufgrund der Spannungsrelation(en) (beispielsweise aufgrund einer Relation zwischen Eingangsspannung und der Ausgangsspannung) entscheiden, welches der Eingangsregelelemente (z. B. das erste Eingangsregelelement oder das zweite Eingangsregelelement oder ein eventuell vorhandenes drittes Eingangsregelelement) die Kompensation der Schwankungen des Eingangsstroms des getakteten Spannungswandlers übernimmt.

Bei einem bevorzugten Ausführungsbeispiel ist die Spannungswandleranordnung ausgelegt, um Schwankungen eines Eingangsstroms des getakteten Spannungswandlers durch einen zeitlich veränderlichen, abwechselnden Stromfluss durch das erste Eingangsregelelement und durch ein zweites Eingangsregelelement zumindest teilweise zu kompensieren, wenn ein Betrag der Eingangsspannung etwa 50% eines Betrags der Ausgangsspannung beträgt (zum Beispiel mit einer Toleranz von +/-10%, oder mit einer Toleranz von +/-1V oder +/-2V oder +/-5) und wenn ein Betrag der Eingangsspannung kleiner als ein Betrag der Ausgangsspannung ist, oder wenn ein Betrag der Eingangsspannung zwischen 40% und 60% eines Betrags der Ausgangsspannung beträgt und wenn der Betrag der Eingangsspannung kleiner als der Betrag der Ausgangsspannung ist. Das zweite Eingangsregelelement ist dabei zwischen den ersten Eingangsspannungsknoten und einen ersten Ausgangsspannungsknoten geschaltet, wobei der erste Ausgangsspannungsknoten ein Potential aufweist, das sich von dem Bezugspotential unterscheidet.

Dieses Ausführungsbeispiel basiert auf der Erkenntnis, dass in einer Situation, in der ein Betrag der Eingangsspannung in etwa einer Hälfte eines Betrags der Ausgangsspannung beträgt, eine besonders energiesparende Kompensation von Schwankungen des Eingangsstroms des getakteten Spannungswandlers erfolgen kann, indem (beispielsweise innerhalb einer Periode des getakteten Spannungswandlers) sowohl durch das erste Eingangsregelelement als auch durch das zweite Eingangsregelelement ein Strom fließt. Das erste Eingangsregelelement zieht beispielsweise einen Strom von dem ersten Eingangsspannungsknoten ab, wenn ein Eingangsstrom des getakteten Spannungswandlers kleiner ist als ein (aktueller) Soll-Eingangsstrom der Spannungswandleranordnung. Auf der anderen Seite kann beispielsweise das zweite Eingangsregelelement einen Strom in den ersten Eingangsspannungsknoten einspeisen, wenn beispielsweise ein Eingangsstrom des getakteten Spannungswandlers größer ist als ein (aktueller) Soll-Eingangsstrom der Spannungswandleranordnung. Der getaktete Spannungswandler kann also beispielsweise so betrieben werden, dass sein Eingangsstrom (während einer Periode des getakteten Spannungswandlers) zeitweise größer und zeitweise kleiner ist als der (aktuelle) Soll-Eingangsstrom der Spannungswandleranordnung. Auf diese Weise wird ein energieeffizienter Betrieb ermöglicht, da die Maximalströme durch die Eingangsregelelemente kleiner sind als ein maximaler Strom, der bei Verwendung nur eines Eingangsregelelements durch das entsprechende Eingangsregelelement fließen würde. Dadurch wird die Verlustleistung reduziert. Bei einem bevorzugten Ausführungsbeispiel ist die Spannungswandleranordnung ausgelegt, um Schwankungen eines Eingangsstroms des getakteten Spannungswandlers durch einen zeitlich veränderlichen Stromfluss durch ein drittes Eingangsregelelement zumindest teilweise zu kompensieren, wenn ein Betrag der Eingangsspannung größer ist als ein Betrag der Ausgangsspannung (oder wenn die Eingangsspannung größer ist als die Ausgangsspannung). Das dritte Eingangsregelelement ist dabei zwischen den ersten Eingangsspannungsknoten und einen ersten Ausgangsspannungsknoten geschaltet, wobei der erste Ausgangsspannungsknoten ein Potential aufweist, das sich von dem Bezugspotential unterscheidet (beispielsweise einen Stromfluss in umgekehrter Richtung wie das zweite Eingangsregelelement LR3 ermöglicht).

Durch die Verwendung des dritten Eingangsregelelements kann somit auch in dem genannten Betriebsfall eine verlustarme Kompensation der Schwankungen des getakteten Spannungswandlers erfolgen, während in dem genannten Betriebszustand Verluste in dem ersten Eingangsregelelement größer wären als Verluste in dem dritten Eingangsregelelement. Durch das Vorhandensein von zwei bzw. drei Eingangsregelelementen, beispielsweise dem ersten Eingangsregelelement und dem dritten Eingangsregelelement (oder optional auch noch des oben genannten zweiten Eingangsregelelements) kann also erreicht werden, dass die Verluste an verschiedenen Betriebspunkten der Spannungswandleranordnung gering gehalten werden.

Bei einem bevorzugten Ausführungsbeispiel ist die Spannungswandleranordnung so ausgelegt, dass in einem zweiten Zeitbereich, während dem die Eingangsspannung der Spannungswandleranordnung kleiner ist als die Ausgangsspannung der Spannungswandleranordnung und der zeitlich näher bei einem Maximum der Sinus-Halbwelle liegt als der erste Zeitbereich, ein pulsierender Verlauf eines Eingangsstroms des getakteten Spannungswandlers betragsmäßig größer ist als der Eingangsstrom der Spannungswandleranordnung (so dass das Pulsieren des Eingangsstroms des getakteten Spannungswandlers in dem zweiten Zeitbereich durch LR3 bzw. nur LR3 kompensiert werden kann, wobei LR3 durch die Spannungswandleranordnung entsprechend angesteuert wird). Durch eine entsprechende Auslegung der Spannungswandleranordnung wird erreicht, dass in dem zweiten Zeitbereich ein Betrieb mit vergleichsweise geringen Verlusten erfolgen kann. Indem die Spannungswandleranordnung so ausgelegt ist, dass der pulsierende Verlauf des Eingangsstroms des getakteten Spannungswandlers betragsmäßig größer ist als der Eingangsstrom der Spannungswandleranordnung, wird also ermöglicht, dass zur Kompensation von Schwankungen des Eingangsstroms der getakteten Spannungswandleranordnung ein Strom durch das zweite Eingangsregelelement zu dem ersten Eingangsspannungsknoten hinfließt (beispielsweise von dem ersten Ausgangsspannungsknoten). Dadurch können bei geeigneten Spannungsverhältnissen (beispielsweise wenn die aktuelle Eingangsspannung kleiner ist als die aktuelle Ausgangsspannung) die Verluste geringer gehalten werden, da der Spannungsabfall über dem zweiten Eingangsregelelement dann kleiner ist als der Spannungsabfall über dem ersten Eingangsregelelement.

Bei einem bevorzugten Ausführungsbeispiel ist die Spannungswandleranordnung so ausgelegt, dass in einem dritten Zeitbereich, während dem die Eingangsspannung der Spannungswandleranordnung kleiner ist als die Ausgangsspannung der Spannungswandleranordnung (z. B. die Hälfte der Ausgangsspannung) und der zeitlich näher bei einem Maximum der Sinus-Halbwelle liegt als der erste Zeitbereich, ein pulsierender Verlauf eines Eingangsstroms des getakteten Spannungswandlers innerhalb einer Periode des pulsierenden Verlaufs zeitweise betragsmäßig kleiner ist als der Eingangsstrom der Spannungswandleranordnung und zeitweise betragsmäßig größer ist als der Eingangsstrom der Spannungswandleranordnung. Somit kann beispielsweise das Pulsieren des Eingangsstroms des getakteten Spannungswandlers in dem dritten Zeitbereich durch LR3 und LR4 (abwechselnd) gemeinsam kompensiert werden, wobei LR3 und LR4 durch die Spannungswandleranordnung entsprechend angesteuert werden. Durch die genannte Auslegung wird also beispielsweise erreicht, dass zeitweise ein Strom durch das erste Eingangsregelelement von dem ersten Eingangsspannungsknoten abgezogen wird und dass zeitweise ein Strom durch das zweite Eingangsregelelement (z. B. LR3) zu dem ersten Eingangsspannungsknoten hingeliefert wird. Dadurch werden die Verluste besonders gering, da der maximale Strom durch das erste Eingangsregelelement bzw. durch das zweite Eingangsregelelement vergleichsweise klein gehalten wird (beispielsweise kleiner als in einem Fall, in dem nur eines der Eingangsregelelemente aktiv wäre).

Insgesamt ist zu sagen, dass dadurch, dass der Verlauf des Eingangsstroms des getakteten Spannungswandlers (in machen Betriebszuständen) betragsmäßig kleiner ist als der gewünschte Eingangsstrom der Spannungswandleranordnung, Schwankungen des Eingangsstroms des getakteten Spannungswandlers kompensiert werden, indem ein Strom durch die entsprechenden Regelelemente von dem ersten Eingangsspannungsknoten abgeführt wird. Dadurch, dass der Verlauf des Eingangsstroms des getakteten Spannungswandlers (in machen Betriebszuständen) betragsmäßig größer ist als der gewünschte Eingangsstrom der Spannungswandleranordnung, können Schwankungen des Eingangsstroms des getakteten Spannungswandlers kompensiert werden, indem ein Strom durch das entsprechende Regelelement zu dem ersten Eingangsspannungsknoten hin geführt wird (beispielsweise von dem ersten Ausgangsspannungsknoten). Durch die entsprechende Ansteuerung des getakteten Spannungswandlers kann dieser also so eingestellt werden, dass die Kompensation seines Eingangsstromrippels in der energiesparendsten Weise möglich ist.

Bei einem bevorzugten Ausführungsbeispiel ist die Spannungswandleranordnung so ausgelegt, dass in einem vierten Zeitbereich, während dem die Eingangsspannung der Spannungswandleranordnung größer ist als die Ausgangsspannung der Spannungswandleranordnung und der zeitlich näher bei einem Maximum der Sinus-Halbwelle liegt als der erste Zeitbereich, ein pulsierender Verlauf eines Eingangsstroms des getakteten Spannungswandlers betragsmäßig kleiner ist als der (gewünschte) Eingangsstrom der Spannungswandleranordnung (so dass beispielsweise das Pulsieren des Eingangsstroms des getakteten Spannungswandlers durch LR1 bzw. nur durch LR1 kompensiert werden kann, wobei LR1 durch die Spannungswandleranordnung entsprechend angesteuert wird). Indem beispielsweise durch LR1 ein Strom von dem ersten Eingangsspannungsknoten hin zu dem ersten Ausgangsspannungsknoten abgeleitet wird, wird erreicht, dass Schwankungen des Eingangsstroms des getakteten Spannungswandlers verlustarm kompensiert werden können.

Bei einem bevorzugten Ausführungsbeispiel ist eine Regelfrequenz (oder Regelgeschwindigkeit) eines unter Verwendung des ersten Eingangsregelelements gebildeten Linearreglers größer (oder schneller) als eine Taktfrequenz (oder Periodendauer) des getakteten Spannungswandlers. Alternativ oder zusätzlich ist eine Regelfrequenz (oder Regelgeschwindigkeit) eines unter Verwendung des zweiten Eingangsregelelements gebildeten Linearreglers größer (oder schneller) als eine Taktfrequenz (oder Periodendauer) des getakteten Spannungswandlers. Alternativ oder zusätzlich ist eine Regelfrequenz (oder Regelgeschwindigkeit) eines unter Verwendung des dritten Eingangsregelelements gebildeten Linearreglers größer (oder schneller) als eine Taktfrequenz (oder Periodendauer) des getakteten Spannungswandlers. Auf diese Weise wird erreicht, dass die Linearregler "schnell" im Vergleich zu dem Eingangsstromrippel des getakteten Spannungswandlers arbeiten, wodurch der bzw. die Linearregler Schwankungen des Eingangsstroms des getakteten Spannungswandlers im Wesentlichen kompensieren kann bzw. können.

Bei einem bevorzugten Ausführungsbeispiel weist die Spannungswandleranordnung ein zweites Eingangsregelelement auf, wobei das zweite Eingangsregelelement zwischen den ersten Eingangsspannungsknoten und einen ersten Ausgangsspannungsknoten geschaltet ist, wobei der erste Ausgangsspannungsknoten ein Potential aufweist, das sich von dem Bezugspotential unterscheidet. Das zweite Eingangsregelelement ist ausgelegt, um zumindest zeitweise einen Stromfluss zwischen dem ersten Ausgangsspannungsknoten und dem ersten Eingangsspannungsknoten zu ermöglichen (beispielsweise von dem ersten Ausgangsspannungsknoten zu dem ersten Eingangsspannungsknoten hin). Die Spannungswandleranordnung umfasst ferner eine Regelschaltung, die ausgelegt ist, um einen Stromfluss durch das erste Eingangsregelelement und das zweite Eingangsregelelement zu regeln, um als Regelziel auf eine Erreichung eines fest vorgegebenen oder variabel einstellbaren Verhältnisses zwischen einer Eingangsspannung der Spannungswandleranordnung (z. B. zwischen dem ersten Eingangsspannungsknoten und dem zweiten Eingangsspannungsknoten) und einem Eingangsstrom der Spannungswandleranordnung hin zu wirken. Auf diese Weise kann durch die Stromregelung, die unter Verwendung des ersten Eingangsregelelements und des zweiten Eingangsregelelements erfolgt, bewirkt werden, dass Eingangsstrom und Eingangsspannung der Spannungswandleranordnung zumindest näherungsweise proportional zueinander sind, was ein im Wesentlichen resistives Verhalten der Spannungswandleranordnung zur Folge hat und im Übrigen unerwünschte Netzrückwirkungen gering hält.

In einem bevorzugten Ausführungsbeispiel weist die Spannungswandleranordnung eine erste Verstärkerschaltung auf, die ausgelegt ist, um eine an einem Strommess-Widerstand abfallende Spannung, die proportional zu dem Eingangsstrom der Spannungswandleranordnung ist, zu skalieren, um einen ersten skalierten Spannungswert zu erhalten, der zu dem Eingangsstrom der Spannungswandleranordnung proportional ist. Die Spannungswandleranordnung weist ferner einen festen oder variablen Spannungsteiler auf, der ausgelegt ist, um einen zweiten skalierten Spannungswert zu erzeugen, der zu der Eingangsspannung der Spannungswandleranordnung proportional ist. Die Spannungswandleranordnung weist ferner einen Regelverstärker auf, der ausgelegt ist, um den ersten skalierten Spannungswert und den zweiten skalierten Spannungswert zu erhalten und um Ansteuersignale für das erste Eingangsregelelement und das zweite Eingangsregelelement oder ein gemeinsames Ansteuersignal für das erste Eingangsregelelement und das zweite Eingangsregelelement zu erhalten, um eine Differenz zwischen dem ersten skalierten Spannungswert und dem zweiten skalierten Spannungswert zu verkleinern oder zu minimieren.

Auf diese Weise kann in schaltungstechnisch einfach realisierbarer Weise eine Regelung erfolgen, um Eingangsstrom und Eingangsspannung der Spannungswandleranordnung auf ein vorgegebenes Verhältnis zu regeln.

Bei einem bevorzugten Ausführungsbeispiel ist die Spannungswandleranordnung ausgelegt, um ein Spannungsteiler-Verhältnis des Spannungsteilers abhängig von einer durch die Spannungswandleranordnung an die Last gelieferten Leistung einzustellen, um ein Soll-Verhältnis zwischen der Eingangsspannung der Spannungswandleranordnung (z. B. zwischen dem ersten Eingangsspannungsknoten und dem zweiten Eingangsspannungsknoten) und dem Eingangsstrom der Spannungswandleranordnung an die an die Last gelieferte Leistung anzupassen (so dass beispielsweise im Ergebnis die Eingangsleistung der Spannungswandleranordnung an die an die Last gelieferte Ausgangsleistung der Spannungswandleranordnung angepasst wird). Auf diese Weise wird erreicht, dass die Spannungswandleranordnung effizient betrieben werden kann, da somit erreicht wird, dass die Verlustleistung gering gehalten wird. Insbesondere ist es nicht nötig, einen signifikanten Leistungsanteil durch Regelelemente (z. B. Eingangsregelelemente) zu verbrauchen bzw. in Wärme umzusetzen. Indem also das Soll-Verhältnis zwischen der Eingangsspannung der Spannungswandleranordnung und dem Eingangsstrom der Spannungswandleranordnung an die Belastung angepasst wird, können Verluste in den Eingangsregelelementen auf ein minimal erforderliches Niveau reduziert werden.

Bei einem bevorzugten Ausführungsbeispiel ist die Spannungswandleranordnung ausgelegt, um ein Spannungsteiler-Verhältnis des Spannungsteilers abhängig von einem Rückkopplungssignal von einem Ausgang der Spannungswandleranordnung, das zur Einstellung eines Tastverhältnisses eines Schaltsignals des getakteten Spannungswandlers dient, einzustellen. Das Rückkopplungssignal kann beispielsweise basierend auf einer Differenz zwischen einer Ist-Ausgangsspannung der Spannungswandleranordnung und einer Soll-Ausgangsspannung der Spannungswandleranordnung gebildet werden. Somit kann die Einstellung bzw. Regelung des Spannungsteiler-Verhältnisses in sehr effizienter Weise erfolgen, wobei das Rückkopplungssignal einen wichtigen Indikator darstellt, ob mehr oder weniger Leistung an den Ausgang der Spannungswandleranordnung geliefert werden soll.

Bei einem bevorzugten Ausführungsbeispiel weist die Spannungswandleranordnung ein drittes Eingangsregelelement auf, wobei das dritte Eingangsregelelement zwischen den ersten Eingangsspannungsknoten und den ersten Ausgangsspannungsknoten geschaltet ist (beispielsweise parallel zu dem zweiten Eingangsregelelement, wobei ein Stromfluss entgegengesetzt sein kann). Der erste Ausgangsspannungsknoten weist beispielsweise ein Potential auf, das sich von dem Bezugspotential unterscheidet. Das dritte Eingangsregelelement ist ausgelegt, um zumindest zeitweise einen Stromfluss zwischen dem ersten Eingangsspannungsknoten und dem ersten Ausgangsspannungsknoten zu ermöglichen, der einem Stromfluss durch das zweite Eingangsregelelement entgegengerichtet ist. Die Regelschaltung ist im Übrigen ausgelegt, um abhängig von einer Relation zwischen einer Eingangsspannung der Spannungswandleranordnung und einer Ausgangsspannung der Spannungswandleranordnung einen Stromfluss durch das erste Eingangsregelelement und/oder durch das zweite Eingangsregelelement zu regeln oder einen Stromfluss durch das dritte Eingangsregelelement zu regeln, um als Regelziel auf eine Erreichung eines fest vorgegebenen oder variabel einstellbaren Verhältnisses zwischen einer Eingangsspannung der Spannungswandleranordnung (z. B. zwischen dem ersten Eingangsspannungsknoten und dem zweiten Eingangsspannungsknoten) und einem Eingangsstrom der Spannungswandleranordnung hin zu wirken. Somit kann abhängig von der Relation zwischen der Eingangsspannung der Spannungswandleranordnung und der Ausgangsspannung der Spannungswandleranordnung diejenige Kombination von Eingangsregelelementen (z. B. erstes Eingangsregelelement und zweites Eingangsregelelement) bzw. dasjenige Eingangsregelelement (z. B. drittes Eingangsregelelement) zur Erreichung des gewünschten Verhältnisses zwischen der Eingangsspannung der Spannungswandleranordnung und dem Eingangsstrom der Spannungswandleranordnung herangezogen werden, das (bzw. die) den besten Wirkungsgrad bzw. die geringstmögliche Verluste verspricht.

So können beispielsweise das erste Eingangsregelelement und/oder das zweite Eingangsregelelement gut zur Erreichung des gewünschten Verhältnisses zwischen Eingangsspannung und Eingangsstrom herangezogen werden, wenn die Eingangsspannung kleiner als die Ausgangsspannung ist (was bei einer sinusförmigen Eingangsspannung zumindest während eines Teiles einer Periodendauer der Fall ist). Ist hingegen die Eingangsspannung größer als die Ausgangsspannung, so kann die Regelung vorteilhafter durch das dritte Eingangsregelelement erfolgen. Eine entsprechende Umschaltung, welches Eingangsregelelement bzw. welche Eingangsregelelemente während einer Periodendauer aktiv sein soll bzw. sollen (wobei eine Umschaltung der aktiven Eingangsregelelemente durchaus innerhalb einer Periodendauer ein- oder mehrfach erfolgen kann), ermöglicht somit eine Optimierung eines Wirkungsgrads bzw. eine Verringerung von Verlusten.

Bei einem bevorzugten Ausführungsbeispiel weist die Spannungswandleranordnung eine erste Verstärkerschaltung auf, die ausgelegt ist, um eine an einem Strommess-Widerstand abfallende Spannung, die proportional zu dem Eingangsstrom der Spannungswandleranordnung ist, zu skalieren, um einen ersten skalierten Spannungswert zu erzeugen, der zu dem Eingangsstrom der Spannungswandleranordnung proportional ist. Die Spannungswandleranordnung weist ferner einen festen oder variablen Spannungsteiler auf, der ausgelegt ist, um einen zweiten skalierten Spannungswert zu erzeugen, der zu der Eingangsspannung der Spannungswandleranordnung proportional ist. Die Spannungswandleranordnung weist ferner einen Regelverstärker auf, der ausgelegt ist, um den ersten skalierten Spannungswert und den zweiten skalierten Spannungswert zu erhalten und um Ansteuersignale für das erste Eingangsregelelement und das zweite Eingangsregelelement oder ein gemeinsames Ansteuersignal für das erste Eingangsregelelement und das zweite Eingangsregelelement zu erzeugen, um eine Differenz zwischen dem ersten skalierten Spannungswert und dem zweiten skalierten Spannungswert zu verkleinern oder zu minimieren. Die Spannungswandleranordnung ist ferner ausgelegt, um beispielsweise ein Skalierungsverhältnis für die an dem Strommess-Widerstand abfallende Spannung und/oder ein Skalierungsverhältnis des Spannungsteilers abhängig von einer durch die Spannungswandleranordnung an die Last gelieferten Leistung einzustellen, um ein Soll-Verhältnis zwischen der Eingangsspannung der Spannungswandleranordnung (z. B. zwischen dem ersten Eingangsspannungsknoten und dem zweiten Eingangsspannungsknoten) und dem Eingangsstrom der Spannungswandleranordnung an die an die Last gelieferte Leistung

13

anzupassen (so dass im Ergebnis die Eingangsleistung der Spannungswandleranordnung an die an die Last gelieferte Ausgangsleistung der Spannungswandleranordnung angepasst wird).

Eine derartige Schaltungsanordnung ist mit vergleichsweise geringem Aufwand realisierbar und ermöglicht es, Verluste durch Eingangsregelelemente möglichst klein zu halten.

Bei einem bevorzugten Ausführungsbeispiel ist die Spannungswandleranordnung ausgelegt, um das Regelziel, das als Soll-Verhältnis zwischen der Eingangsspannung der Spannungswandleranordnung und dem Eingangsstrom der Spannungswandleranordnung definiert ist (beispielsweise durch Beeinflussung des Spannungsteiler-Verhältnisses des Spannungsteilers in Abhängigkeit von einer durch die Spannungswandleranordnung an die Last gelieferten Leistung und/oder in Abhängigkeit von einem Strom durch das erste Eingangsregelelement und/oder in Abhängigkeit von einem Strom durch das zweite Eingangsregelelement und/oder in Abhängigkeit von einem Strom durch das dritte Eingangsregelelement, und/oder in Abhängigkeit von einem Gesamtstrom durch die Eingangsregelelemente) einzustellen. Durch die entsprechende Einstellung des Regelziels kann die Verlustleistung der Spannungswandleranordnung klein gehalten werden, während die Regelung auf eine Reduzierung von Netzstörungen hinwirkt.

Bei einem bevorzugten Ausführungsbeispiel ist eine Regelgeschwindigkeit (oder Regelfrequenz) eines unter Verwendung des ersten Eingangsregelelements gebildeten Linearreglers (beispielsweise zumindest um einen Faktor 5 oder zumindest um einen Faktor 10 oder zumindest um einen Faktor 20) schneller als eine Einstellgeschwindigkeit oder Regelgeschwindigkeit bei einer Anpassung des Referenzverhältnisses aus Eingangsstrom und Eingangsspannung als Regelziel. Damit wird vermieden, dass das Regelziel zu schnell schwankt, was Instabilitäten und/oder eingangsseitige Störungen zur Folge haben könnte.

Bei einem bevorzugten Ausführungsbeispiel ist die Spannungswandlerschaltung so ausgelegt, dass Eingangssignale der Regelschaltung in einem Bereich von höchstens +/- 15 V oder von höchstens +/- 5 V um ein Bezugspotential der Regelschaltung herum liegen. Dadurch wird erreicht, dass die Regelschaltung mit problemlos verfügbaren Operationsverstärkern implementiert werden kann.

Bei einem bevorzugten Ausführungsbeispiel sind der erste Eingangsspannungsknoten und der zweite Eingangsspannungsknoten mit einer Gleichrichterschaltung gekoppelt, so dass eine Eingangsspannung der Spannungswandleranordnung durch eine gleichgerichtete Wechselspannung gebildet wird. Dadurch wird erreicht, dass die Polarität der Eingangsspannung unverändert bleibt, was den Implementierungsaufwand gering hält. Optional kann im Übrigen auf Glättungskondensatoren verzichtet werden, was typischerweise die Zuverlässigkeit der Schaltungsanordnung verbessert.

Bei einem bevorzugten Ausführungsbeispiel ist mindestens ein in dem getakteten Spannungswandler verwendeter Schalttransistor ein Gallium-Nitrid-Transistor oder einen Silizium-Karbid-Transistor. Alternativ oder zusätzlich ist zumindest eine in dem getakteten Spannungswandler verwendete Diode eine Gallium-Nitrid-Diode oder eine Silizium-Karbid-Diode. Es hat sich gezeigt, dass die Verwendung von Gallium-Nitrid-Bauteilen bzw. von Silizium-Karbid-Bauteilen typischerweise hohe Leistungsdichte und geringe Verluste mit sich bringt.

Ein Ausführungsbeispiel gemäß der Erfindung schafft ein Verfahren zum Betrieb einer Spannungswandleranordnung mit einem getakteten Spannungswandler und einem ersten Eingangsregelelement, das zwischen einen ersten Eingangsspannungsknoten und einen zweiten Eingangsspannungsknoten geschaltet ist, wobei der zweite Eingangsspannungsknoten ein Bezugspotential aufweist. Das Verfahren umfasst ein Entgegenwirken gegen Schwankungen eines Eingangsstroms des Spannungswandlers (bzw. der Spannungswandleranordnung) durch zumindest zeitweises Aktivieren eines Stromflusses durch das Eingangsregelelement.

Das Verfahren basiert auf denselben Überlegungen, die auch der oben beschriebenen Vorrichtung zugrunde liegen. Das Verfahren kann im Übrigen um sämtliche Merkmale, Funktionalitäten und Details ergänzt werden, die hierin im Hinblick auf die entsprechende Vorrichtung (insbesondere die Spannungswandleranordnung) beschrieben sind, und zwar einzeln oder in Kombination.

**Figurenkurzbeschreibung**

Ausführungsbeispiele gemäß der vorliegenden Erfindung werden nachfolgend bezugnehmend auf die beiliegenden Figuren näher erläutert.

Es zeigt:

Fig. 1 ein Blockschaltbild eines linear unterstützten Abwärtswandlers, gemäß einer herkömmlichen Lösung;

Fig. 2 ein Blockschaltbild einer Ausführung eines Buck-Konverters, kombiniert mit zwei Linearreglern, gemäß einer herkömmlichen Lösung;

Fig. 3 ein Blockschaltbild einer Regelfunktion eines Buck-Konverters, kombiniert mit zwei Linearreglern, gemäß einer herkömmlichen Lösung;

Fig. 4       eine grafische Darstellung von Kurvenverläufen einer Regelfunktion eines Konverters, kombiniert mit Linearreglern, gemäß einer herkömmlichen Lösung;

Fig. 5       ein Blockschaltbild einer Spannungswandleranordnung, gemäß einem Ausführungsbeispiel der vorliegenden Erfindung;

Fig. 6       ein Flussdiagramm eines Verfahrens zum Betrieb einer Spannungswandleranordnung, gemäß einem Ausführungsbeispiel der vorliegenden Erfindung;

Fig. 7       eine grafische Darstellung einer Rippeistromkompensation eines pulsweitenmodulierten Wandlers (PWM-Wandlers) durch Linearregler LR3 und LR4 (Fall 4 nach Tabelle 3 und Tabelle 4);

Fig. 8       eine schematische Darstellung einer Rippelstromkompensation des PWM-Wandlers durch Linearregler LR3 (Fall 1 nach Tabelle 3 und Tabelle 4);

Fig. 9       eine schematische Darstellung einer Rippelstromkompensation des PWM-Wandlers durch Linearregler LR4 bzw. LR1 (Fälle 2, 3 und 5 nach Tabelle 3 und Tabelle 4);

Fig. 10      ein vereinfachtes Schaltbild einer erfindungsgemäßen Ausführung eines Transformator-gekoppelten Cuk-Konverters, kombiniert mit vier Linearreglern;

Fig. 11a     ein vereinfachtes Schaltbild eines herkömmlichen PFC-Boost-Wandlers (PFC = Leistungsfaktor-Korrektur bzw. "power factor correction"; Boost-Wandler = "Aufwärts-Wandler");

Fig. 11b     ein vereinfachtes Schaltbild eines herkömmlichen PFC-Sepic-Wandlers;

Fig. 11c     ein vereinfachtes Schaltbild eines herkömmlichen brückenlosen PFC-Boost-Wandlers;

Fig.11d      ein vereinfachtes Schaltbild eines herkömmlichen brückenlosen PFC-Sepic-Wandlers;

Fig. 12      ein Blockschaltbild einer erfindungsgemäßen Ausführung (bzw. eines Ausführungsbeispiels) eines linear unterstützten Abwärtswandlers, kombiniert mit zwei Linearreglern;

Fig. 13a     ein vereinfachtes Schaltbild einer erfindungsgemäßen Ausführung (bzw. eines Ausführungsbeispiels) eines linear unterstützten Boost-Wandlers, kombiniert mit zwei Linearreglern;

Fig. 13b     ein vereinfachtes Schaltbild einer erfindungsgemäßen Ausführung (bzw. eines Ausführungsbeispiels) des linear unterstützten Boost-Wandlers gemäß Fig. 13a, kombiniert mit zwei Linearreglern und Implementierung einer erfindungsgemäßen Regelfunktion des linear unterstützten Aufwärts-Konverters zur Rippelstromunterdrückung am Eingang;

Fig. 13c     ein vereinfachtes Schaltbild einer erfindungsgemäßen Ausführung (bzw. eines Ausführungsbeispiels) eines linear unterstützten Boost-Wandlers nach Fig. 13a, kombiniert mit zwei Linearreglern und Implementierung einer erfindungsgemäßen Regelfunktion des linear unterstützten Aufwärts-Konverters zur Rippelstromunterdrückung am Eingang und spannungsgesteuerte Leistungsfaktor-Korrektur mit variabler Spannungsreferenz über Funktion Kv(s);

Fig. 13d     ein vereinfachtes Schaltbild einer erfindungsgemäßen Ausführung (bzw. eines Ausführungsbeispiels) eines linear unterstützten Boost-Wandlers nach Fig. 13a, kombiniert mit zwei Linearreglern und Implementierung einer erfindungsgemäßen Regelfunktion des linear unterstützten Aufwärts-Konverters zur Rippelstromunterdrückung am Eingang und spannungsgesteuerte Leistungsfaktor-Korrektur mit variabler Spannungsreferenz über Funktion zweier invertierender Verstärker mit Zeitverzögerung (Low-Pass-Filter bzw. Tiefpassfilter Ry2, Ry3, Cy3 und Ry5, Ry6, Cy6);

Fig. 14      ein Blockschaltbild einer erfindungsgemäßen Ausführung (bzw. eines Ausführungsbeispiels) eines linear unterstützten Aufwärts-/Abwärts-Wandlers, kombiniert mit drei Linearreglern;

Fig. 15a     ein vereinfachtes Schaltbild einer erfindungsgemäßen Ausführung (bzw. eines Ausführungsbeispiels) eines SEPIC-Konverters, kombiniert mit drei Linearreglern;

Fig. 15b    eine erfindungsgemäße Ausführung (bzw. Ausführungsbeispiel) eines linear unterstützten SEPIC-Wandlers nach Fig. 15a, kombiniert mit drei Linearreglern und Implementierung einer erfindungsgemäßen Regelfunktion des linear unterstützten Aufwärts-/Abwärts-Wandlers zur Rippelstromunterdrückung am Eingang und spannungsgesteuerte Leistungsfaktor-Korrektur mit variabler Spannungsreferenz über Funktion Kv(s);

Fig. 15c    ein vereinfachtes Schaltbild einer erfindungsgemäßen Ausführung eines linear unterstützten SEPIC-Wandlers nach Fig. 15a, kombiniert mit drei Linearreglern und Implementierung einer erfindungsgemäßen Regelfunktion des linear unterstützten Aufwärts-/Abwärts-Wandlers zur Rippelstromunterdrückung am Eingang und spannungsgesteuerte Leistungsfaktor-Korrektur mit variabler Spannungsreferenz über Funktion Kv(s) sowie Korrekturfunktion der Spannungsreferenz Vuref durch Erfassung der Ströme $I_{reg1}$, $I_{reg3}$, $I_{reg4}$ in den Linearreglern;

Fig. 15d    ein Schaltbild einer erfindungsgemäßen Ausführung einer Eingangsspannungsquelle Vin durch eine gleichgerichtete Wechselspannung mit Vollbrückengleichrichter;

Fig. 16    eine schematische Darstellung einer Kompensation des Stromrippels des Eingangsstroms $I_{Vin(t)}$ für eine gleichgerichtete sinusförmige Eingangsspannung Vin durch die Ströme in Linearreglern LR3 und LR4 nach Fall 4 in Tabelle 4 (Beispiel);

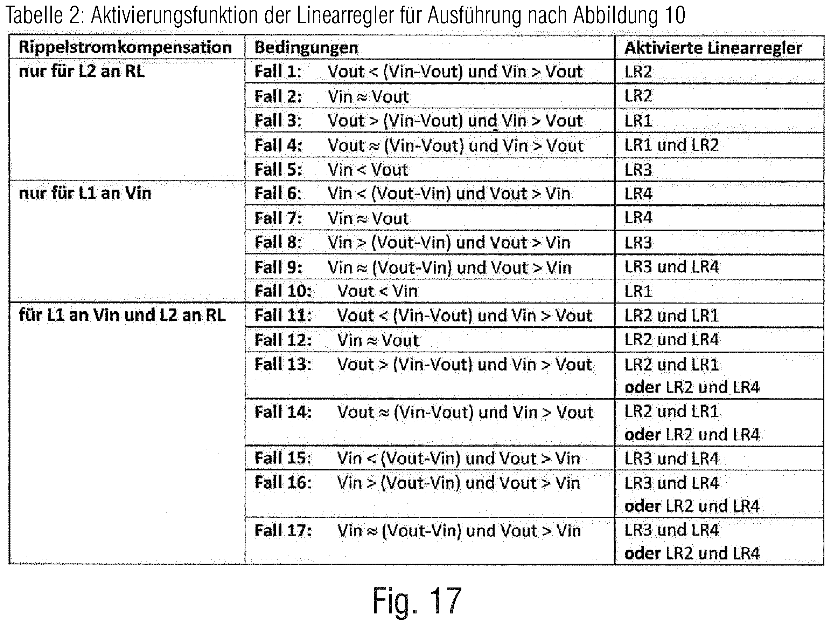

Fig. 17    eine tabellarische Darstellung einer Aktivierungsfunktion der Linearregler, beispielsweise für die Ausführungen nach Fig. 10 (Tabelle 2);

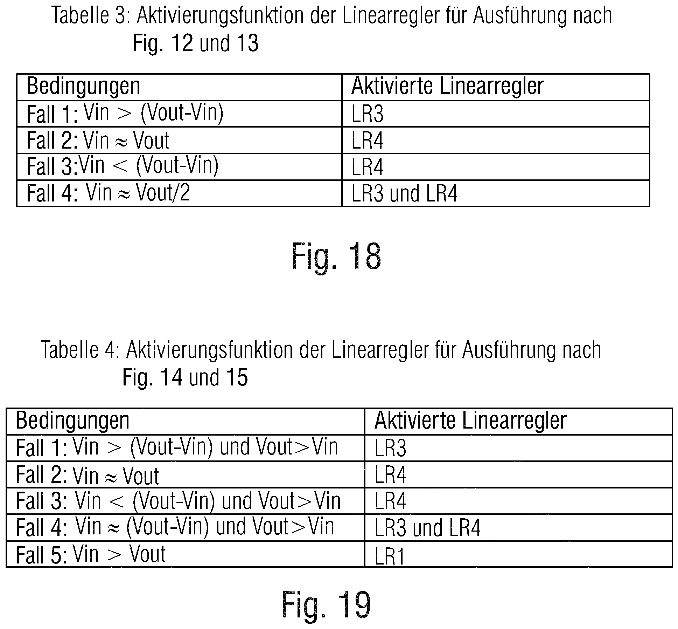

Fig. 18    eine tabellarische Darstellung einer Aktivierungsfunktion der Linearregler, beispielsweise für die Ausführungen nach Fig. 12 und 13 (Tabelle 3);

Fig. 19    eine tabellarische Darstellung einer Aktivierungsfunktion der Linearregler, beispielsweise für die Ausführungen nach Fig. 14 und 15 (Tabelle 4).

**Detaillierte Beschreibung der Ausführungsbeispiele**

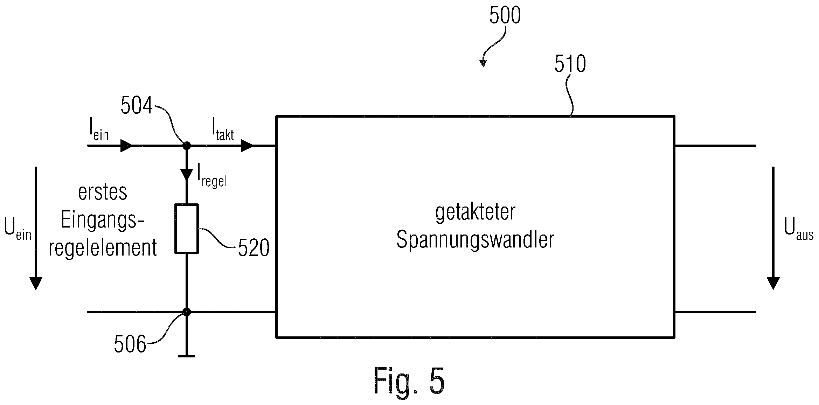

1. Spannungswandleranordnung gemäß Fig. 5

Fig. 5 zeigt ein Blockschaltbild einer Spannungswandleranordnung 500, gemäß einem Ausführungsbeispiel der vorliegenden Erfindung.
Die Spannungswandleranordnung 500 ist ausgelegt, um eine Eingangsspannung $U_{ein}$ zu empfangen und um basierend darauf eine Ausgangsspannung $U_{aus}$ bereitzustellen.
Die Spannungswandleranordnung umfasst einen getakteten Spannungswandler 510, der in der Lage ist bzw. der ausgelegt ist, um basierend auf der Eingangsspannung $U_{ein}$ die Ausgangsspannung $U_{aus}$ zu erzeugen.
Ferner umfasst die Spannungswandleranordnung 500 ein erstes Eingangsregelelement 520, das zwischen einen ersten Eingangsspannungsknoten 504 und einen zweiten Eingangsspannungsknoten 506 geschaltet ist. Der zweite Eingangsspannungsknoten 506 weist beispielsweise ein Bezugspotential auf und kann beispielsweise als Bezugspotentialknoten aufgefasst werden.
Das erste Eingangsregelelement 520 ist ausgelegt, um einen Stromfluss zu ermöglichen, um Schwankungen eines Eingangsstroms $I_{ein}$ eines Eingangsstroms der Spannungswandleranordnung 500, der sich beispielsweise als Summe eines Stroms $I_{regel}$ durch das Regelelement 520 und eines Eingangsstroms $I_{takt}$ des getakteten Spannungswandlers 510 ergibt, entgegenzuwirken. Beispielsweise werden somit Schwankungen des Eingangsstroms $I_{takt}$ des getakteten Spannungswandlers 510 zumindest teilweise kompensiert.
Im Hinblick auf die Funktionsweise ist festzuhalten, dass beispielsweise das erste Eingangsregelelement 520 zu einem Eingang des getakteten Spannungswandlers 510 parallel geschaltet ist. Somit ist der Eingangsstrom $I_{ein}$ der Spannungswandleranordnung 500 gleich der Summe des Eingangsstroms $I_{takt}$ des getakteten Spannungswandlers 510 und des Stromes $I_{regel}$ durch das erste Eingangsregelelement 520. Ferner wird davon ausgegangen, dass der Eingangsstrom $I_{takt}$ des getakteten Spannungswandlers 510 aufgrund des getakteten Betriebs des getakteten Spannungswandlers 510 Schwankungen unterliegt, die beispielsweise (zumindest über einen kurzen Zeitraum hinweg, also beispielsweise über einige Schaltperioden des getakteten Spannungswandlers 510 hinweg) zumindest näherungsweise periodisch sind. Das erste Eingangsregelelement 520 kann somit beispielsweise die Schwankungen des Eingangsstroms $I_{takt}$ des getakteten Spannungswandlers 510 zumindest teilweise ausgleichen, so dass (kurzfristige) Schwankungen des Ein-

gangsstroms $I_{ein}$ der Spannungswandleranordnung (also beispielsweise Schwankungen entsprechend der Taktung des getakteten Spannungswandlers 510) verringert oder sogar im Idealfall vollständig bzw. fast vollständig ausgeglichen werden können. In anderen Worten, das erste Eingangsregelelement 520 ist typischerweise schnell genug, um die durch das getaktete Schalten des getakteten Spannungswandlers 510 auftretenden (beispielsweise Rippel-artigen) Schwankungen des Stroms $I_{takt}$ auszugleichen.

Durch die entsprechende Anordnung kann beispielsweise erreicht werden, dass durch das erste Eingangsregelelement 520 immer dann ein erhöhter Strom fließt, wenn der Eingangsstrom $I_{takt}$ des getakteten Spannungswandlers 510 hinter einem Maximalwert oder einem Mittelwert zurückbleibt, so dass beispielsweise die Summe aus den Strömen $I_{takt}$ und $I_{regel}$ (zumindest über einen kurzen Zeitraum hinweg, beispielsweise über eine Schaltperiode des getakteten Spannungswandlers) näherungsweise konstant ist oder einem gewünschten Verlauf (beispielsweise proportional zu einer Eingangsspannung der Spannungswandleranordnung) folgt.

Optional können allerdings noch weitere Eingangsregelelemente ergänzend verwendet werden, wie auch im Folgenden noch beschrieben wird.

Zusammenfassend ist somit festzuhalten, dass die Spannungswandleranordnung 500 es ermöglicht, durch das getaktete Schalten des getakteten Spannungswandlers 510 bedingte Schwankungen des Stroms $I_{takt}$ durch einen Stromfluss $I_{regel}$ durch das erste Eingangsregelelement 520 zumindest teilweise, im Idealfall aber auch vollständig bzw. fast vollständig, auszugleichen. Wenngleich durch das erste Eingangsregelelement 520 eine gewisse Verlustleistung entsteht, so können andererseits aufwendige Eingangsfilter, die zusätzlichen Bauraum benötigen und oftmals auch Lebensdauer-begrenzend sind, hier eingespart oder zumindest deutlich verkleinert werden. Insofern trägt das (erste) Eingangsregelelement 520 dazu bei, eine Spannungswandleranordnung zu schaffen, die einen verbesserten Kompromiss zwischen Effizienz, Implementierungsaufwand und Störungsunterdrückung liefert.

Weitere optionale Details werden im Übrigen im Folgenden noch erläutert. In anderen Worten, die Spannungswandleranordnung 500 gemäß Fig. 5 kann optional um alle Merkmale, Funktionalitäten und Details ergänzt werden, die hierin beschrieben sind, und zwar sowohl einzeln als auch in Kombination.

### 2. Weitere Ausführungsbeispiele

Im Folgenden werden einige weitere Ausführungsbeispiele beschrieben.

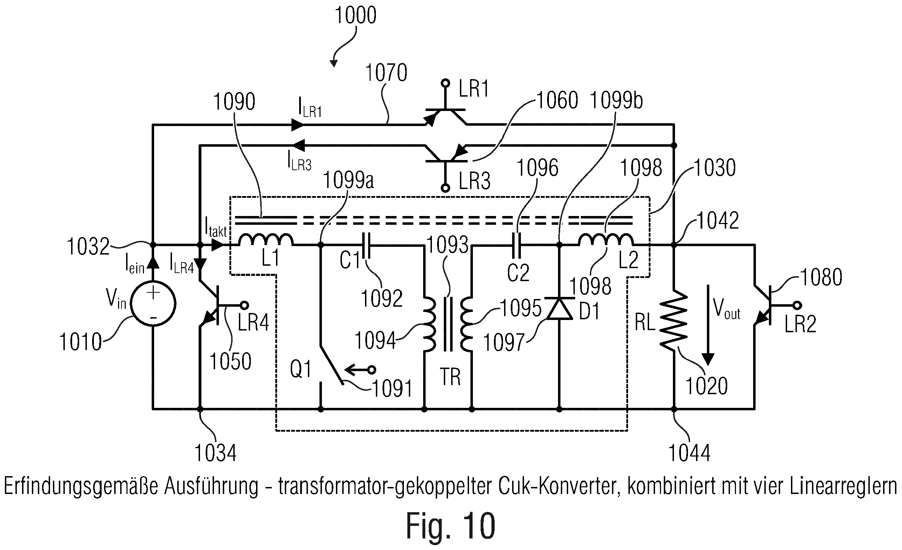

Fig. 10 zeigt eine erfindungsgemäße Ausführung eines transformatorisch gekoppelten CuK Konverters.

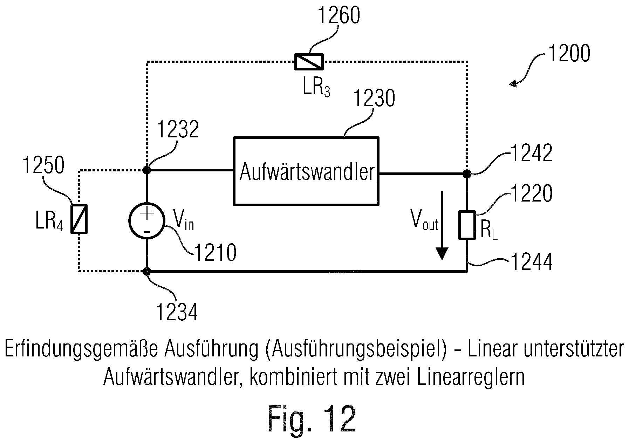

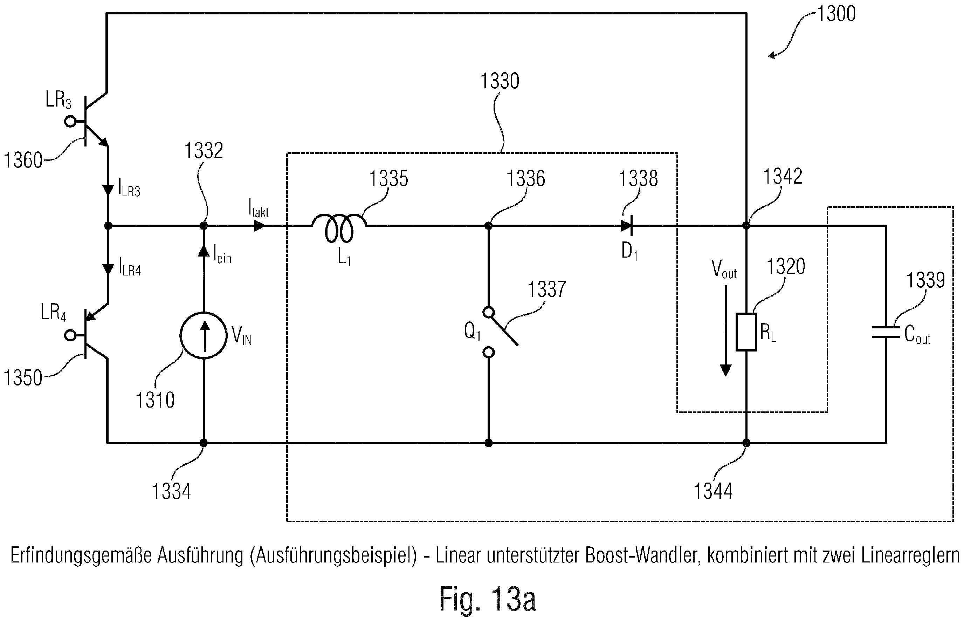

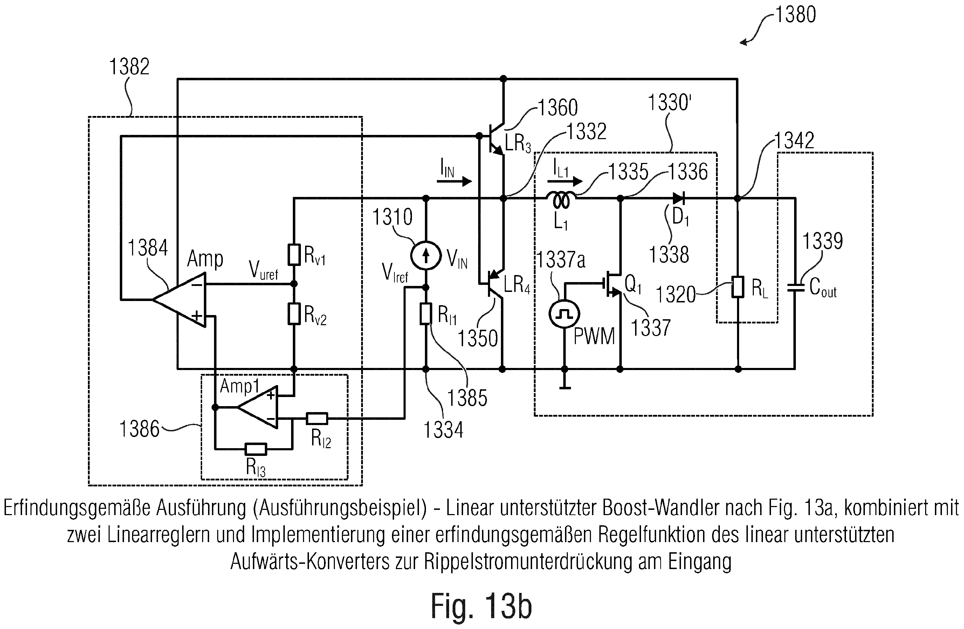

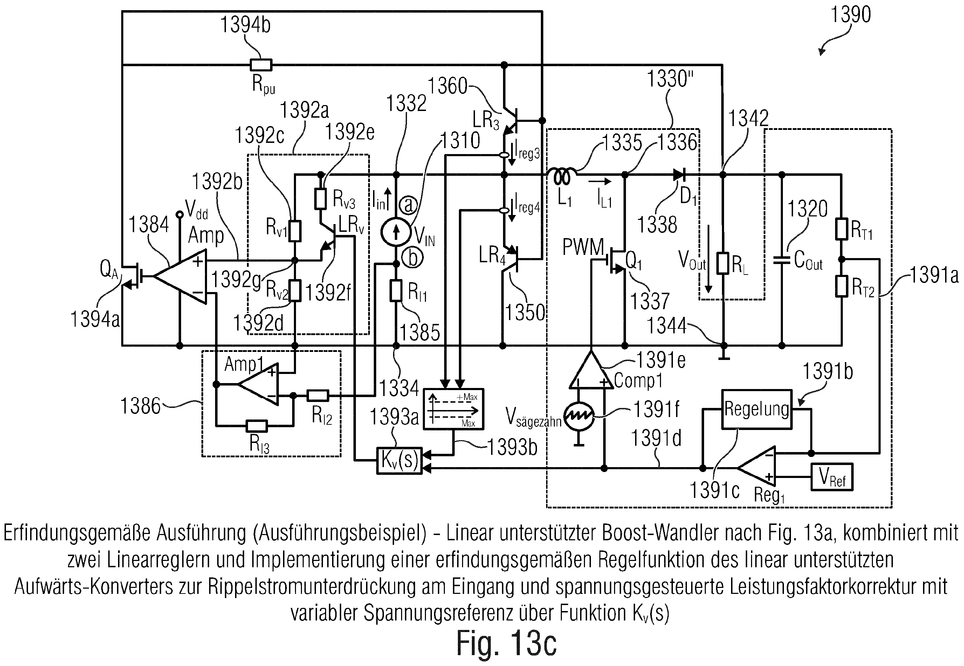

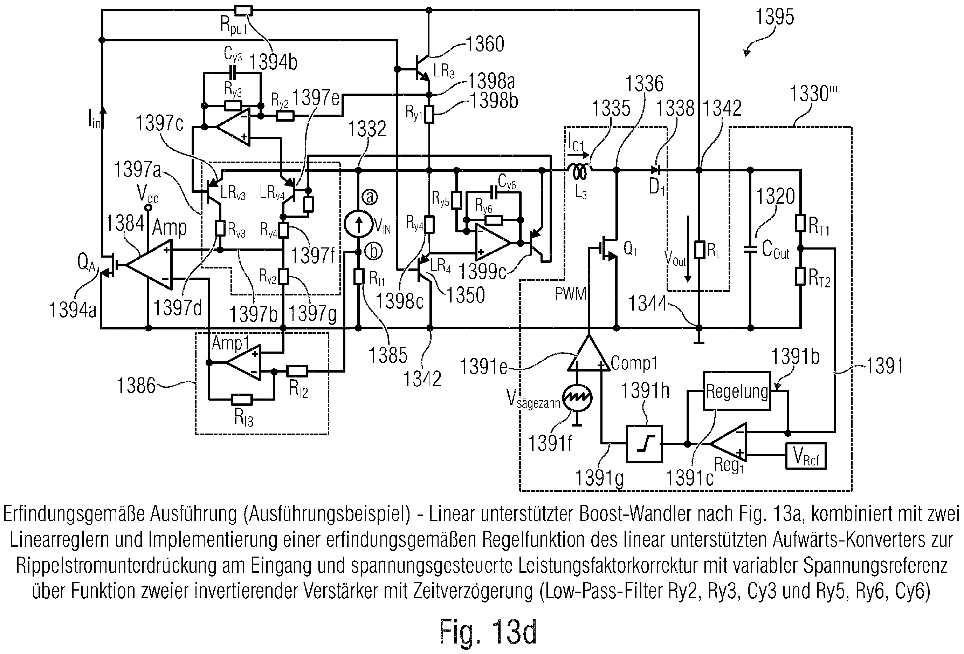

In Fig. 12 ist eine erfindungsgemäße Ausführung eines Aufwärts-Wandlers gezeigt, welcher in Fig. 13 als Boost-Wandler ausgeführt ist.

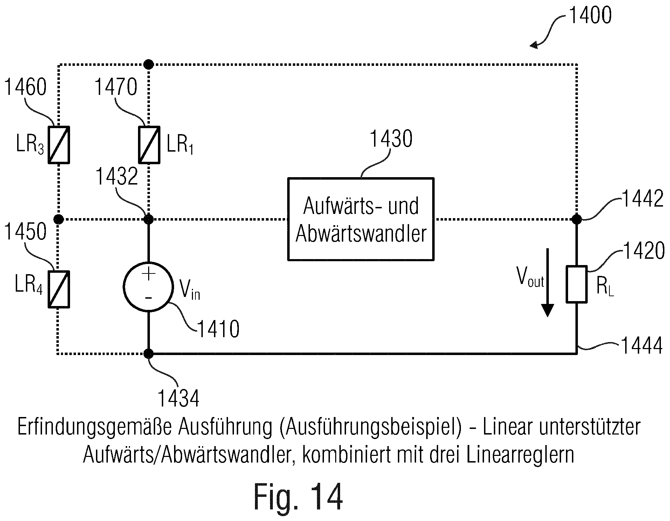

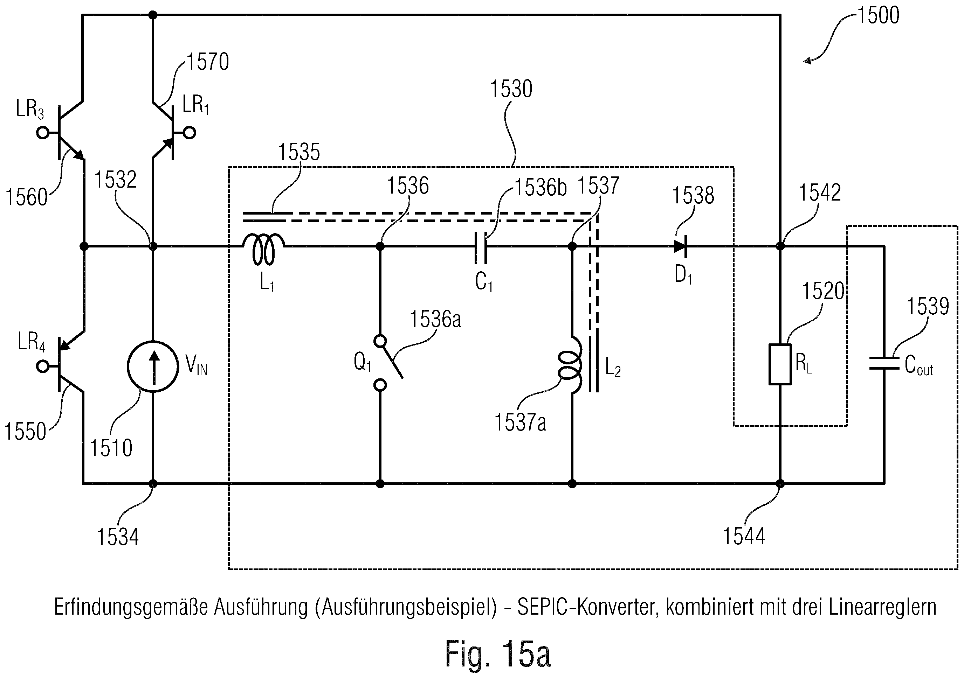

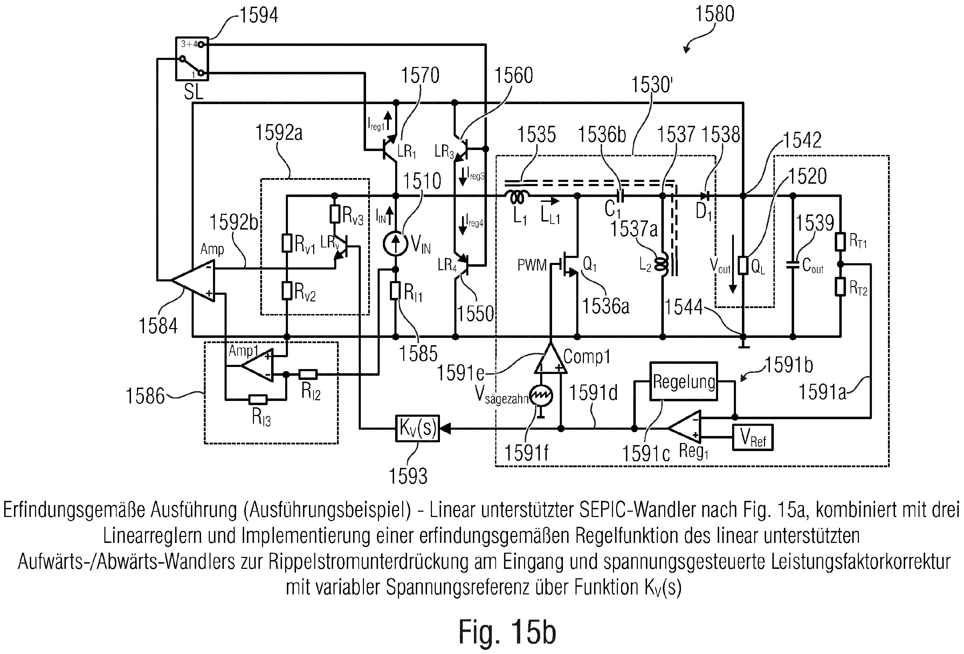

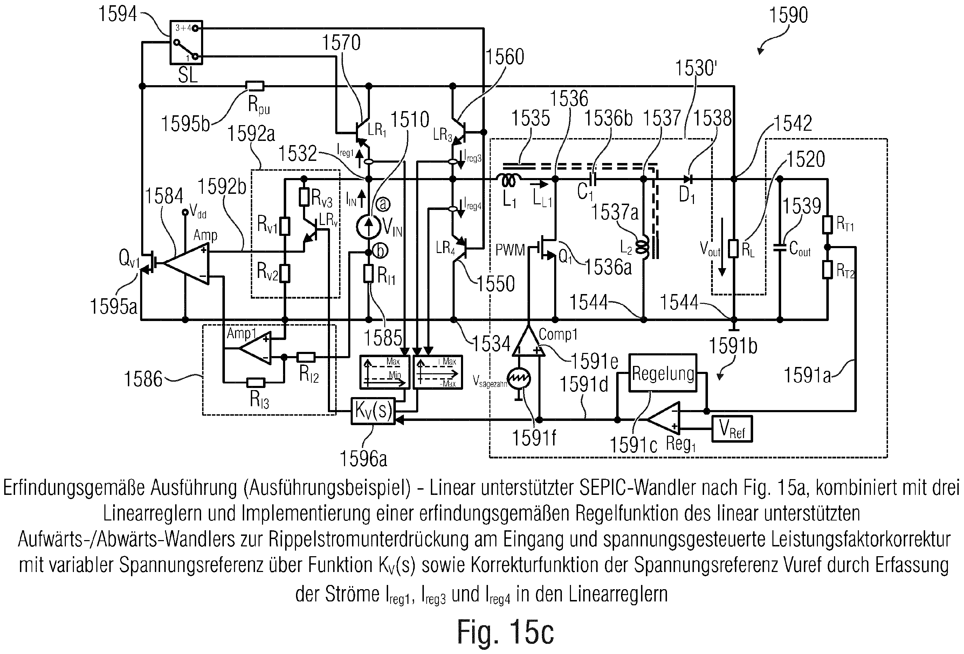

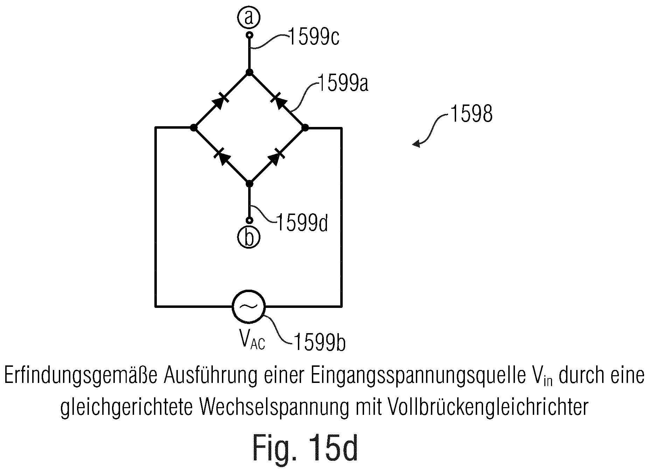

Fig. 14 zeigt eine erfindungsgemäße Ausführung eines Aufwärts-/Abwärts-Wandlers, welcher in Fig. 15 als Sepic-Wandler ausgeführt ist.

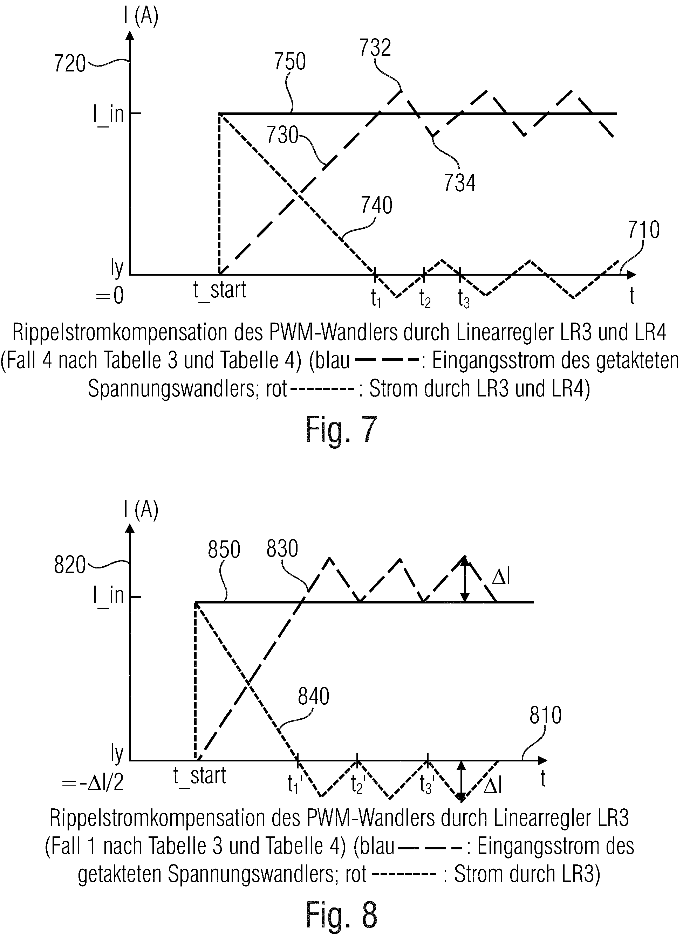

In den Figuren 7, 8 und 9 ist gezeigt, wie der Stromrippel $\Delta I$ des Eingangsstroms $I\_in$ kompensiert werden kann. Die in den Fig. 7,8 und 9 gezeigten und anhand dieser Figuren beschriebenen Funktionalitäten können optional bei allen hierin beschriebenen Ausführungsbeispielen insgesamt oder teilweise implementiert werden.

### Spannunqswandleranordnunq gemäß Fig. 10

Ein Ausführungsbeispiel gemäß der Fig. 10 ist ein transformatorisch gekoppelter Cuk-Konverter, wie in Fig. 10 gezeigt. Dieser hat den Nachteil eines höheren Schaltungsaufwands durch einen zusätzlichen Transformator, welcher die Polarität der Ausgangsspannung in gleicher Richtung wie die der Eingangsspannung auf gleichem Massepotential hält. Dafür hat diese Ausführung zusätzlich den Vorteil, dass der Eingangsstrom und der Ausgangsstrom zugleich linear kompensiert werden können.

Im Folgenden wird die Spannungswandleranordnung 1000 gemäß Fig. 10 näher erläutert.

Die Spannungswandleranordnung 1000 ist ausgelegt, um eine Eingangsspannung Vin von einer Eingangsspannungsquelle 1010 zu empfangen und um eine Ausgangsspannung Vout an eine Last 1020 zu liefern, die hier durch einen Lastwiderstand $R_L$ symbolisiert ist.

Die Spannungswandleranordnung umfasst einen isolierenden (beispielsweise transformatorisch gekoppelten) Cuk-Wandler 1030, der den getakteten Spannungswandler bildet. Ein Eingang des isolierenden Cuk-Wandlers 1030 ist mit einem ersten Eingangsspannungsknoten 1032 und mit einem zweiten Eingangsspannungsknoten 1034 gekoppelt. Ein Ausgang des isolierenden Cuk-Wandlers 1030 ist mit einem ersten Ausgangsspannungsknoten 1042 und einem zweiten Ausgangsspannungsknoten 1044 gekoppelt. Es sei darauf hingewiesen, dass die Spannungsquelle 1010 ebenfalls mit dem ersten Eingangsspannungsknoten 1032 und mit dem zweiten Eingangsspannungsknoten 1034 gekoppelt ist und dass die Last 1020 zwischen den ersten Ausgangsspannungsknoten 1042 und den zweiten Eingangsspannungsknoten 1044 geschaltet ist.

Ein Kollektor-Anschluss eines Regeltransistors 1050, der als erstes Eingangsregelelement wirkt, ist mit dem ersten Eingangsspannungsknoten gekoppelt, und ein Emitter-Anschluss des Regeltransistors 1050 ist mit dem zweiten Eingangsspannungsanschluss gekoppelt. Somit ist eine Kollektor-Emitter-Strecke des ersten Regeltransistors 1050 parallel zu dem Eingang des isolierenden Cuk-Wandlers 1030 geschaltet. Bei der gezeigten Polarität der Eingangsspannung handelt es sich bei dem ersten Regeltransistor 1050 (LR4) beispielsweise um einen NPN-Transistor.

Ferner gibt es hier einen (optionalen) zweiten Regeltransistor 1060, der als zweites Eingangsregelelement wirkt. Es handelt sich dabei um einen PNP-Transistor, dessen Emitter-Anschluss mit dem ersten Ausgangsspannungsknoten 1042 gekoppelt ist und dessen Kollektor-Anschluss mit dem ersten Eingangsspannungsknoten 1032 gekoppelt ist. Die Emitter-Kollektor-Strecke des zweiten Regeltransistors 1060 ist also zwischen den ersten Ausgangsspannungsknoten 1042 und den ersten Eingangsspannungsknoten 1032 geschaltet, so dass beispielsweise ein Stromfluss von dem ersten Ausgangsspannungsknoten 1042 zu dem ersten Eingangsspannungsknoten 1032 hin erfolgen kann.

Die Spannungswandleranordnung umfasst ferner einen dritten Regeltransistor 1070, bei dem es sich wieder beispielsweise um einen PNP-Transistor handelt. Ein Emitter-Anschluss des dritten Regeltransistors 1070 ist beispielsweise mit dem ersten Eingangsspannungsknoten 1032 verbunden und ein Kollektor-Anschluss des dritten Regeltransistors 1070 ist beispielsweise mit dem ersten Ausgangsspannungsknoten 1042 verbunden, so dass die Emitter-Kollektor-Strecke des dritten Regeltransistors 1070 zwischen den ersten Eingangsspannungsknoten 1032 und den ersten Ausgangsspannungsknoten 1042 geschaltet ist. Der dritte Regeltransistor 1070 kann somit beispielsweise einen Strom von dem ersten Eingangsspannungsknoten 1032 zu dem ersten Ausgangsspannungsknoten 1042 hin ableiten. Der dritte Regeltransistor 1070 ist ebenfalls als optional anzusehen.

Ferner umfasst die Spannungswandleranordnung 1000 einen weiteren, vierten Regeltransistor 1080, bei dem es sich beispielsweise um einen NPN-Transistor handelt. Ein Kollektor-Anschluss des vierten Regeltransistors 1080 ist beispielsweise mit dem ersten Ausgangsspannungsknoten 1042 gekoppelt und ein Emitter-Anschluss des vierten Regeltransistors 1080 ist beispielsweise mit dem zweiten Ausgangsspannungsknoten 1044 gekoppelt. Eine Kollektor-Emitter-Strecke des vierten Regeltransistors ist somit beispielsweise parallel zu der Last 1020 geschaltet.

Was die interne Struktur des Cuk-Konverters 1030 anbelangt, so sei darauf hingewiesen, dass dieser eine eingangsseitige Induktivität 1090, einen Schalter 1091, eine eingangsseitige Kapazität 1092, einen Transformator 1093 mit einer eingangsseitigen Wicklung 1094 und einer ausgangsseitigen Wicklung 1095, eine ausgangsseitige Kapazität 1096, eine ausgangsseitige Diode 1097 und eine ausgangsseitige Induktivität 1098 umfasst. Die eingangsseitige Induktivität 1090 ist beispielsweise zwischen den ersten Eingangsspannungsknoten 1032 und einen ersten Knoten 1099a geschaltet. Der Schalter 1091 ist zwischen den ersten (eingangsseitigen) Knoten 1099a und den zweiten Eingangsspannungsknoten 1034 geschaltet. Die eingangsseitige Wicklung 1094 des Transformators 1093 ist in Serie mit der eingangsseitigen Kapazität 1092 zwischen den ersten eingangsseitigen Knoten 1099a und den zweiten Eingangsspannungsknoten 1034 geschaltet. Die ausgangsseitige Wicklung 1095 des Transformators 1093 ist in Serie mit dem ausgangsseitigen Kondensator 1096 zwischen einen zweiten, ausgangsseitigen Knoten 1099b und den zweiten Ausgangsspannungsknoten 1044 geschaltet. Eine Anode der Diode 1097 ist mit dem zweiten Ausgangsspannungsknoten 1044 gekoppelt, und eine Kathode der Diode 1097 ist mit dem ausgangsseitigen Knoten 1099b gekoppelt. Die ausgangsseitige Induktivität 1098 ist zwischen den zweiten, ausgangsseitigen Knoten 1099b und den ersten Ausgangsspannungsknoten 1042 gekoppelt. Die eingangsseitige Induktivität 1090 und die ausgangsseitige Induktivität 1098 sind beispielsweise auf einem gemeinsamen Kern aufgebracht und weisen eine entsprechende magnetische Kopplung auf.

Eingangsseitige und ausgangsseitige Pufferkapazitäten des Transformator-gekoppelten Cuk-Konverters 1030 sind hier aus Gründen der Vereinfachung weggelassen, könnten aber natürlich optional auch verwendet werden.

Ferner sei darauf hingewiesen, dass der zweite Eingangsspannungsknoten und der zweite Ausgangsspannungsknoten beispielsweise niederohmig verbunden sind und auch einen gemeinsamen Schaltungsknoten bilden können.

Im Folgenden wird etwas detaillierter auf die Funktionsweise der Spannungswandleranordnung eingegangen.

Die genaue Funktionalität des Cuk-Wandlers 1030 ist hier nicht von besonderer Relevanz. Vielmehr wird davon ausgegangen, dass der Cuk-Konverter in getakteter Weise arbeitet, um basierend auf der durch die Eingangsspannungsquelle 1010 bereitgestellten Eingangsspannung eine Ausgangsspannung bereitzustellen, die kleiner oder größer als die Eingangsspannung sein kann. Es wird davon ausgegangen, dass sowohl die Eingangsspannung als auch die Ausgangsspannung auf ein gemeinsames Bezugspotential (das beispielsweise an dem zweiten Eingangsspannungsknoten 1034 und an dem zweiten Ausgangsspannungsknoten 1044 anliegt) bezogen sind. Ferner wird hier davon ausgegangen, dass der Eingangsstrom des Cuk-Wandlers 1030, auch mit $I_{takt}$ bezeichnet, zeitlich schwankt, und zwar beispielsweise entsprechend dem Schalttakt des Schalters 1091. Ferner wird davon ausgegangen, dass der der Span-nungsquelle 1010 entnommene Strom $I_{ein}$ einen vorgegebenen Verlauf aufweisen sollte und beispielsweise über einen kürzeren Zeitraum hinweg (beispielsweise über eine Mehrzahl von Schaltperioden des Cuk-Konverters 1030 hinweg) einen im Wesentlichen glatten Verlauf haben sollte. Insgesamt kann also der Eingangsstrom $I_{ein}$ durchaus variieren (beispielsweise einen Verlauf aufweisen, der einen Sinusverlauf oder einen gleichgerichteten Sinusverlauf annähert, aber dieser Verlauf sollte durch den getakteten Stromfluss $I_{takt}$ möglichst unbeeinflusst bzw. ungestört bleiben.

Dies wird erreicht, indem ein Stromfluss $I_{LR4}$ durch den vierten Regeltransistor 1050 sowie optional auch Stromflüsse $I_{LR3}$ durch den zweiten Regeltransistor 1060 und $I_{LR1}$ durch den dritten Regeltransistor 1070 diese Schwan-

kungen des Stroms $I_{takt}$ zumindest teilweise bzw. sogar im Wesentlichen oder vollständig kompensieren. Beispielsweise wird durch eine geeignete Ansteuerung des ersten Regeltransistors 1050 erreicht, dass ein Strom $I_{LR4}$ fließt und dass somit der Strom $I_{ein}$ um $I_{LR4}$ größer ist als der Strom $I_{takt}$, was beispielsweise dann sinnvoll ist, wenn $I_{takt}$ kleiner ist als ein gewünschter Eingangsstrom $I_{ein}$.

Durch geeignete Ansteuerung des zweiten Regeltransistors 1060 kann beispielsweise erreicht werden, dass ein Strom $I_{LR3}$ fließt, was wiederum zur Folge hat, dass der Strom Iein um $I_{LR3}$ kleiner ist als $I_{takt}$. Dies kann beispielsweise hilfreich sein, wenn $I_{takt}$ größer ist als ein (aktuell) gewünschter Wert von $I_{ein}$. Allerdings kann der Strom $I_{LR3}$ beispielsweise nur fließen, wenn die Ausgangsspannung $V_{out}$ größer ist als die Eingangsspannung $V_{in}$.

Weiterhin kann durch eine geeignete Ansteuerung des dritten Regeltransistors 1070 erreicht werden, dass ein Strom $I_{LR1}$ fließt, was zur Folge hat, dass der Strom $I_{ein}$ um $I_{LR1}$ größer ist als der Strom $I_{takt}$. Dies ist beispielsweise hilfreich, wenn $I_{takt}$ kleiner ist als ein gewünschter Eingangsstrom $I_{ein}$, wobei allerdings der Strom $I_{LR1}$ nur fließen kann, wenn die Ausgangsspannung $V_{out}$ kleiner ist als die Eingangsspannung $V_{in}$.

Somit kann beispielsweise durch eine geeignete Ansteuerung des ersten Regeltransistors 1050 und optional auch des zweiten Regeltransistors 1060 und/oder des dritten Regeltransistors 1070 der Eingangsstrom $I_{ein}$ auf einen gewünschten Zielwert bzw. auf einen gewünschten Verlauf (z. B. näherungsweise sinusförmig) geregelt werden, auch wenn der Strom $I_{takt}$ deutlichen (kurzfristigen bzw. Rippel-artigen) Schwankungen (beispielsweise im Takt bzw. mit der Periodizität der Schaltfrequenz des Schalters 1092) unterliegt. Beispielsweise können die Regeltransistoren 1050, 1060, 1070 und deren Ansteuerung so ausgelegt sein, dass die Regelung deutlich schneller erfolgt als die Taktfrequenz des getakteten Spannungswandlers 1030, so dass also die Ströme $I_{LR4}$, $I_{LR3}$ und $I_{LR1}$ den Schwankungen des Stromes $I_{takt}$ innerhalb einer Schaltperiode des getakteten Spannungswandlers 1030 folgen können. Dadurch kann erreicht werden, dass der Eingangsstrom $I_{ein}$ mit geringen Abweichungen (die kleiner sind als die periodischen bzw. Rippel-artigen Schwankungen des Eingangsstroms $I_{takt}$) einen gewünschten Verlauf aufweist.

Die Ausführung in Fig. 10 erlaubt ferner eine optionale Kompensation des Stromrippels der Ausgangsspannung durch die Linearregler LR2 gegen das Massepotential oder durch den Regler LR1 aus der Eingangsspannung, wenn diese größer als die Ausgangsspannung ist. Ist die Ausgangsspannung größer als die Eingangsspannung, so kann der Stromrippel (beispielsweise der Ausgangsstromrippel des getakteten Spannungswandlers) optional durch LR2 oder LR3 kompensiert werden.

Der Stromrippel der Eingangsspannung wird entweder gegen das Massepotential durch LR4 kompensiert oder optional durch LR3, wenn die Ausgangsspannung größer als die Eingangsspannung ist, oder optional auch durch LR1, wenn die Ausgangsspannung kleiner als die Eingangsspannung ist.

Somit kann diese Ausführung auch wahlweise nur den Stromrippel der Eingangsspannung oder (nur) den Stromrippel der Ausgangsspannung oder zugleich den Stromrippel der Eingangs- und der Ausgangsspannung kompensieren.

Sollte hingegen nur der Eingangsstromrippel an L1 kompensiert werden, nicht dagegen Ausgangsstromrippel an L2, so sind (optional) die Bedingungen in den Fällen 6 bis 10 zu unterscheiden (vgl. dazu Tabelle 2).

Sollen (optional) die Stromrippel an beiden Induktivitäten L1 und L2 kompensiert werden, so entstehen die Fälle 11 bis 17 (vgl. Tabelle 2). In den Fällen 13, 14, 16 und 17 ist erkennbar, dass es verschiedene Möglichkeiten gibt, den verlustärmsten Zustand der Linearregler zu erreichen. Dieser hängt davon ab, wie groß der Rippelstrom ist, welcher jeweils am Eingang an L1 und am Ausgang an L2 unterschiedlich sein kann, und in Verbindung mit dem jeweiligen Spannungsabfall über die beteiligten Linearregler zu unterschiedlichen Verlusten führt. Dies hängt von den Entwurfsparametern des Trafo-gekoppelten Cuk-Konverters ab.

Die Ausführungsform in Fig. 10 kann beispielsweise für Anwendungen Verwendung finden, bei welchen entweder ein rippelfreier Strom aus einer Quelle, wie einer Batterie entnommen werden soll, oder bei welchen der Eingangspufferkondensator ebenso eingespart werden soll wie der Ausgangspufferkondensator. Dies ist vor allem dann sinnvoll, wenn der Eingangspufferkondensator nicht (bzw. nicht ohne Weiteres) vermieden werden kann, weil die Eingangsspannung durch Stromschwankungen am Eingang ebenso schwanken würde.

Ein vorwiegender Lösungsweg der Erfindung zielt ausschließlich auf eine Kompensation des Stromrippels am Eingang des Wandlers gegenüber einer Quelle. Dadurch werden beispielsweise Schaltungen für die Leistungsfaktor-Korrektur (PFC) durch einen linearen Assistenzregler ergänzt.

Funktionalität gemäß Figuren 7, 8 und 9

Im Folgenden wird die Funktionsweise des Spannungswandlers 1000 bezugnehmend auf die Fig. 7, 8 und 9 noch einmal kurz erläutert. Es sei darauf hingewiesen, dass bei dem Spannungswandler gemäß Fig. 10 einige oder alle der anhand der Figuren 7,8 und 9 erläuterten Funktionalitäten eingesetzt werden können. Im Übrigen können die Funktionalitäten gemäß den Figuren 7, 8 und 9 auch bei den übrigen Ausführungsbeispielen eingesetzt werden.

Fig. 7 zeigt eine grafische Darstellung einer Rippelstromkompensation des PWM-Wandlers. Eine Abszisse 710 beschreibt eine Zeit und eine Ordinate 720 beschreibt den Strom.

Eine Kurve 730 beschreibt einen Eingangsstrom des getakteten Spannungswandlers, beispielsweise einen Strom $I_{takt}$. Eine Kurve 740 beschreibt beispielsweise einen Strom durch LR3 und LR4, also durch den ersten Regeltransistor 1050, der als erstes Eingangsregelelement fungiert und durch den Regeltransistor 1060, der als zweites Eingangsregelelement fungiert. Es wird hier beispielsweise davon ausgegangen, dass die Ausgangsspannung $V_{out}$ in etwas doppelt so groß wie die Eingangsspannung $V_{in}$.

Eine Zielgröße des Eingangsstroms ist beispielsweise mit $I_{in}$ bezeichnet.

Wie aus der Fig. 7 ersichtlich ist, wird der Wandler beispielsweise zum Zeitpunkt t_start eingeschaltet. Der Eingangsstrom $I_{takt}$ des getakteten Spannungswandlers , gezeigt durch die Kurve 730, steigt dann zunächst einmal an und steigt an, bis ein Maximalwert erreicht wird, der größer ist als $I_{in}$ (beispielsweise bei Bezugszeichen 732). Der Eingangsstrom $I_{takt}$ fällt dann wieder ab, beispielsweise auf einen Wert, der kleiner ist als der gewünschte Eingangsstrom $I_{in}$ (beispielsweise bei Bezugszeichen 734). Der Eingangsstrom $I_{takt}$ schwankt dann um den gewünschten Eingangsstrom $I_{in}$ herum, beispielsweise mit einem im Wesentlichen dreieckförmigen Verlauf. Innerhalb einer Schaltperiode des getakteten Spannungswandlers 1030 (also des Transformator-gekoppelten Cuk-Konverters) ist der Strom zeitweise kleiner als der gewünschte Eingangsstrom $I_{in}$ und zeitweise größer als der gewünschte Eingangsstrom $I_{in}$. Die Periodendauer der Schaltperiode entspricht dabei beispielsweise dem zeitlichen Abstand zwischen zwei aufeinander folgenden Minima bzw. zwei aufeinanderfolgenden Maxima des Stroms $I_{takt}$.

Die Kurve 740 zeigt, wie durch die Linearregler (mit den Regeltransistoren LR3 und LR4) die Schwankungen des Eingangsstroms $I_{takt}$ zumindest teilweise kompensiert werden (im hier gezeigten Idealfall sogar ideal kompensiert werden). Diesbezüglich sei angemerkt, dass durch den ersten Regeltransistor 1050 ein Strom fließt, solange der Strom $I_{takt}$ kleiner ist als der gewünschte Strom $I_{in}$. Beispielsweise fließt zwischen dem Zeitpunkt t_start und einem weiteren Zeitpunkt $t_1$ ein Strom durch den ersten Regeltransistor LR4, so dass der Eingangsstrom $I_{ein}$ größer ist als der Strom $I_{takt}$ (beispielsweise der Summe der Ströme $I_{LR4} + I_{takt}$ entspricht). Ist hingegen der Strom $I_{takt}$ größer als der gewünschte Eingangsstrom $I_{in}$, was beispielsweise zwischen den Zeitpunkten $t_1$ und $t_2$ der Fall ist, so liefert der zweite Regeltransistor 1060 von dem ersten Ausgangsspannungsknoten 1042 einen Strom zu dem ersten Eingangsspannungsknoten 1032 (während der Strom $I_{LR4}$ dann typischerweise null ist), wodurch erreicht wird, dass der Strom $I_{takt}$ teilweise durch den Eingangsstrom $I_{ein}$ und teilweise durch $I_{LR3}$ bereitgestellt wird. Im Ergebnis entspricht $I_{ein}$ dann dem gewünschten Eingangsstrom $I_{in}$, so dass die Abweichung von $I_{takt}$ von dem gewünschten Eingangsstrom $I_{in}$ durch den Strom $I_{LR3}$ kompensiert wird. Zwischen den Zeitpunkten $t_2$ und $t_3$ ist der Strom $I_{takt}$ wiederum kleiner als der gewünschte Eingangsstrom $I_{in}$, so dass wiederum ein Strom durch den ersten Regeltransistor 1050 fließt ($I_{LR4}$). Der Gesamt-Eingangsstrom der Spannungswandleranordnung 1000, also der Strom $I_{ein}$, entspricht damit wieder dem gewünschten Eingangsstrom $I_{in}$.

Die Vorgänge wiederholen sich dann, wobei der Strom $I_{takt}$ um den gewünschten Eingangsstrom $I_{in}$ herum pendelt, wobei im Regelfall innerhalb einer Schaltperiode des getakteten Spannungswandlers 1030 zeitweise ein Strom durch den ersten Regeltransistor 1050 zu dem zweiten Eingangsspannungsknoten 1034 hin abgeführt wird und wobei innerhalb derselben Schaltperiode zeitweise durch den zweiten Regeltransistor 1060 ein Strom von dem ersten Ausgangsspannungsknoten 1042 zu dem ersten Eingangsspannungsknoten 1032 hin geführt wird. Somit ist ersichtlich, dass durch die Zusammenarbeit des ersten Regeltransistors 1050 und des zweiten Regeltransistors 1060 in dem genannten Betriebspunkt Schwankungen des Stroms $I_{takt}$ in sehr effizienter Weise kompensiert werden können.

Im Folgenden wird anhand der Fig. 8 die Rippelstromkompensation des PWM-Wandlers an einem anderen Betriebspunkt erläutert, und zwar für den Fall, dass die Ausgangsspannung $V_{out}$ größer als die Eingangsspannung $V_{in}$ ist, wobei allerdings die Differenz zwischen der Ausgangsspannung $V_{out}$ und der Eingangsspannung $V_{in}$ (also die Emitter-Kollektor-Spannung des zweiten Regeltransistors 1060) kleiner ist als die Eingangsspannung $V_{in}$ (die der Kollektor-Emitter-Spannung des ersten Regeltransistors 1050 entspricht). In anderen Worten, in dem nunmehr beschriebenen Betriebszustand ist die Spannung über der Emitter-Kollektor-Strecke des zweiten Regeltransistors 1060 kleiner (beispielsweise um zumindest 10% kleiner oder um zumindest 20% kleiner) als die Kollektor-Emitter-Spannung des ersten Regeltransistors 1050.

In diesem Fall ist davon auszugehen, dass ein Stromfluss durch den ersten Regeltransistor 1050 zu einer höheren Verlustleistung führt als ein Stromfluss durch den zweiten Regeltransistor 1060. Aus diesem Grund steuert eine Ansteuerschaltung in dem genannten Betriebszustand die Regeltransistoren 1050, 1060, 1070 so an, dass nur der zweite Regeltransistor 1060 einen Strom führt, während der erste Regeltransistor 1050 nichtleitend bleibt. Der dritte Regeltransistor 1070 kann in dem genannten Betriebszustand ohnehin keinen Strom führen, da die Ausgangsspannung $V_{out}$ größer ist als die Eingangsspannung $V_{in}$. In anderen Worten, in dem nun beschriebenen Betriebszustand wird zur Minimierung von Verlusten nur der zweite Regeltransistor 1060 (LR3) aktiviert.

Eine Abszisse 810 beschreibt die Zeit, und eine Ordinate 820 beschreibt wiederum den Strom. Eine Kurve 830 beschreibt den Eingangsstrom des getakteten Spannungswandlers, also $I_{takt}$, und eine Kurve 840 beschreibt den Strom durch den zweiten Regeltransistor 1060, also $I_{LR3}$.

Es ist ersichtlich, dass zu dem Zeitpunkt $t_1'$ ein Strom $I_{takt}$ den gewünschten Eingangsstrom $I_{in}$ übersteigt. Ab diesem Zeitpunkt liefert der zweite Regeltransistor 1060 einen Strom $I_{LR3}$, der dafür sorgt, dass $I_{ein}$ auf dem gewünschten Wert $I_{in}$ bleibt. Der Strom $I_{takt}$ bleibt dann bis zu einem Zeitpunkt $t_2'$ größer als der gewünschte Eingangsstrom $I_{in}$ und

erreicht beispielsweise zum Zeitpunkt $t_2$' wieder den gewünschten Strom $I_{in}$. Zwischen den Zeitpunkten $t_1$' und $t_2$', mithin also während einer gesamten Schaltperiode des getakteten Spannungswandlers 1030, liefert also der zweite Regeltransistor 1060 einen Stromfluss, der dafür sorgt, dass der Eingangsstrom $I_{ein}$ den gewünschten Wert $I_{in}$ nicht überschreitet, wenngleich der Strom $I_{takt}$ größer ist als der gewünschte Eingangsstrom $I_{in}$.

Anschließend an den Zeitpunkt $t_2$' steigt der Strom $I_{takt}$ wieder an, wird also wieder größer als $I_{in}$ und kehrt zum Zeitpunkt $t_3$' wieder auf den Wert $I_{in}$ zurück. Während mehrerer Schaltperioden des getakteten Spannungswandlers 1030 wird also ein Strom $I_{LR3}$ durch den zweiten Regeltransistor 1060 geliefert, der dafür sorgt, dass der Eingangsstrom $I_{ein}$ konstant oder nahezu konstant bleibt, also insbesondere den Schwankungen des Stroms $I_{takt}$ nicht oder nur in deutlich abgeschwächtem Maße folgt.

Indem die Ansteuerung der Spannungswandleranordnung (bzw. des getakteten Spannungswandlers 1030 und der Regeltransistoren 1050, 1060, 1070) so erfolgt, dass der Strom $I_{takt}$ (in dem genannten Betriebszustand) dauerhaft (oder zumindest während 90% einer Schaltperiode) größer ist als der gewünschte Eingangsstrom $I_{in}$ bzw. als der Eingangsstrom $I_{ein}$, wird erreicht, dass die Kompensation der Schwankungen von $I_{takt}$ durch den zweiten Regeltransistor 1060 erfolgen kann, was geringere Verluste mit sich bringt als beispielsweise eine Kompensation durch den ersten Regeltransistor 1050.

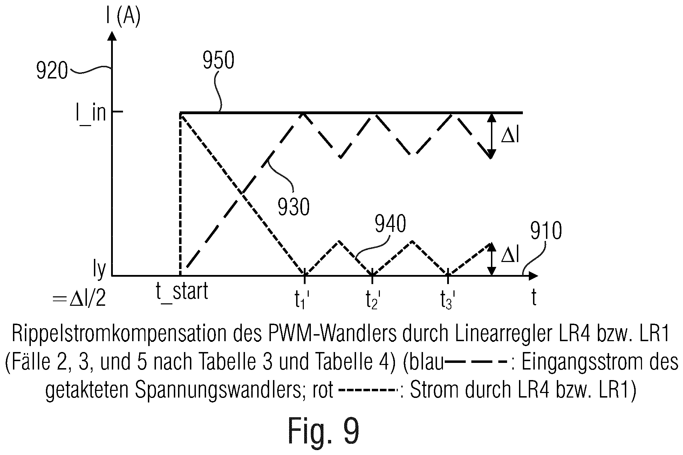

Im Folgenden wird anhand der Fig. 9 ein weiterer Betriebszustand erläutert. Insbesondere wird eine Rippelstromkompensation des PWM-Wandlers durch die Linearregler LR4 bzw. LR1 beschrieben, die beispielsweise in den Fällen 2, 3 und 5 nach Tabelle 3 und nach Tabelle 4 erfolgen kann.

Eine Abszisse 910 beschreibt die Zeit, und eine Ordinate 920 beschreibt den Strom. Eine Kurve 930 beschreibt den Eingangsstrom des getakteten Spannungswandlers, also den Strom $I_{takt}$, und eine Kurve 940 beschreibt die Summe der Ströme durch den ersten Regeltransistor 1050 ($I_{LR4}$) und durch den dritten Regeltransistor 1070 ($I_{LR1}$).

Das entsprechende Konzept kann beispielsweise verwendet werden, wenn die Eingangsspannung etwa gleich der Ausgangsspannung ist, da dann typischerweise nur der erste Regeltransistor 1050 einen zuverlässigen Stromfluss erzeugen kann, während die Kollektor-Emitter-Spannungen des zweiten Regeltransistors 1060 und des dritten Regeltransistors 1070 zu klein sind. Das entsprechende Konzept kann auch zur Anwendung kommen, wenn die Eingangsspannung kleiner ist als die Spannungsdifferenz zwischen dem ersten Ausgangsspannungsknoten 1042 und dem ersten Eingangsspannungsknoten 1032, da dann ein Stromfluss durch den ersten Regeltransistor 1050 eine kleinere Verlustleistung zur Folge hat als ein Stromfluss durch den zweiten Regeltransistor 1060 oder durch den dritten Regeltransistor 1070.

In dem beschriebenen Betriebszustand wird typischerweise durch eine geeignete Ansteuerung erreicht, dass der Eingangsstrom $I_{takt}$ des getakteten Spannungswandlers 1030 den gewünschten Eingangsstrom $I_{in}$ nicht überschreitet, wobei bevorzugt ein Maximalwert von $I_{takt}$ gleich dem gewünschten Eingangsstrom $I_{in}$ ist. Wie beispielsweise ersichtlich ist, erreicht der Strom $I_{takt}$ zu einem Zeitpunkt $t_1$" den gewünschten Eingangsstrom $I_{in}$ und fällt dann wieder ab. Der Eingangsstrom $I_{takt}$ des getakteten Spannungswandlers 1030 erreicht dann zu einem Zeitpunkt $t_2$" wieder den gewünschten Eingangsstrom $I_{in}$. Zwischen den Zeitpunkten $t_1$" und $t_2$" fließt beispielsweise, je nach Relation zwischen Eingangsspannung Vin und der Ausgangsspannung Vout, ein Strom durch den ersten Linearregler 1050 oder durch den dritten Linearregler 1070. Dadurch wird erreicht, dass der Eingangsstrom $I_{ein}$ dem gewünschten Eingangsstrom $I_{in}$ entspricht. Dadurch, dass $I_{takt}$ den gewünschten Eingangsstrom $I_{in}$ nicht überschreitet, kann durch den Strom $I_{LR4}$, der durch den ersten Regeltransistor 1050 fließt, bzw. durch den Strom $I_{LR1}$, der durch den dritten Regeltransistor 1070 fließt, erreicht werden, dass die Summe von $I_{takt}$ und $I_{LR4}$ bzw. von $I_{takt}$ und $I_{LR1}$ jeweils (zumindest in guter Näherung) dem gewünschten Eingangsstrom $I_{in}$ entspricht. Somit bleibt der Eingangsstrom $I_{ein}$ im Wesentlichen konstant und folgt den Schwankungen von $I_{takt}$ nicht oder nur in deutlich abgeschwächter Form.

Insgesamt sei angemerkt, dass der Spannungswandler 1000 gemäß der Fig. 10 nicht notwendigerweise in allen in den Fig. 7, 8 und 9 beschriebenen Betriebszuständen arbeiten muss. Vielmehr ist es beispielsweise ausreichend, wenn der Spannungswandler 1000 in einem oder mehreren der genannten Betriebszustände arbeiten kann.

Zusammenfassend ist somit festzuhalten, dass in den Figuren 7, 8 und 9 bevorzugt erfindungsgemäße Kurvenverläufe des Eingangsstroms des Aufwärts- und Abwärtswandlers (blaue Kurven bzw. Kurven 730, 830, 930), der Linearregler oder eines Linearreglers (rote Kurven bzw. Kurven 740, 840, 940) und des Eingangsgleichstroms $I_{in}$ (bzw. $I_{ein}$) (schwarze Kurven bzw. Kurven 750, 850, 950) gezeigt. Der jeweils erfindungsgemäß bevorzugte Kurvenverlauf ist den Fällen 1 bis 4 aus Tabelle 4 zugeordnet.

Zusammenfassend ist somit festzuhalten, dass eine Steuerung der Spannungswandleranordnung 1000 beispielsweise ausgelegt sein kann, um die Betriebszustände gemäß Tabelle 3 oder gemäß Tabelle 4 zu unterscheiden. Diese Unterscheidung kann beispielsweise anhand der Relation zwischen der Eingangsspannung und der Ausgangsspannung erfolgen. Entsprechend kann die Steuerung der Spannungswandleranordnung 1000 entscheiden, welcher bzw. welche der Regeltransistoren 1050, 1060, 1070 (bzw. allgemein: welche bzw. welcher der Linearregler) in dem jeweiligen Betriebszustand eingesetzt werden, um Schwankungen des Stroms $I_{takt}$ zu kompensieren. Dementsprechend kann die Steuerung entsprechende Ansteuersignale für die Regeltransistoren 1050, 1060, 1070 bereitstellen.

Diesbezüglich sei darauf hingewiesen, dass die Regeltransistoren 1050, 1060, 1070 nicht alle vorhanden sein müssen, sondern dass das Vorhandensein von einem oder zweien der genannten Regeltransistoren ausreichend ist.

Weiterhin sei darauf hingewiesen, dass die Regeltransistoren 1050, 1060, 1070 hier (und auch durchgängig in der vorliegenden Beschreibung) stellvertretend für verschiedene Typen von Linearreglern stehen und auch durch andere Linearregler ersetzt werden können. Insbesondere ist es nicht erforderlich, dass die hierin beschriebenen Linearregler durch entsprechende Bipolartransistoren gebildet werden. Vielmehr könnten anstelle von Bipolartransistoren auch Feldeffekt-Transistoren verwendet werden. Dabei entspricht typischerweise der Quellenanschluss bzw. Source-Anschluss eines Feldeffekt-Transistors dem Emitter-Anschluss eines Bipolartransistors. Ferner entspricht üblicherweise der Senken-Anschluss bzw. Drain-Anschluss des Feldeffekt-Transistors dem Kollektor-Anschluss eines Bipolartransistors. Der Steueranschluss bzw. Gate-Anschluss eines Feldeffekt-Transistors entspricht üblicherweise dem Basis-Anschluss eines Bipolartransistors.

Ferner sei darauf hingewiesen, dass die hierin gezeigten NPN-Transistoren beispielsweise auch durch PNP-Transistoren ersetzt werden könnten und dass die hierin gezeigten PNP-Transistoren auch durch NPN-Transistoren ersetzt werden könnten, wobei die Ansteuerung natürlich entsprechend anzupassen wäre, wie dies dem Fachmann geläufig ist.

NPN-Bipolartransistoren können beispielsweise durch N-Kanal-Feldeffekttransistoren ersetzt werden, und PNP-Bipolartransistoren durch P-Kanal-Feldeffekttransistoren.

Im Übrigen können jeweils auch zu den gezeigten Schaltungsanordnungen komplementäre Schaltungen verwendet werden.

Spannungswandler gemäß Fig. 12

Fig. 12 zeigt ein Blockschaltbild eines linear unterstützten Aufwärtswandlers, kombiniert mit zwei Linearreglern, gemäß einer erfindungsgemäßen Ausführung (bzw. einem Ausführungsbeispiel).

Der Spannungswandler bzw. die Spannungswandleranordnung 1200 gemäß Fig. 12 ist ausgelegt, um basierend auf einer durch eine Eingangsspannungsquelle 1210 gelieferten Eingangsspannung $V_{in}$ eine Ausgangsspannung $V_{out}$ für eine Last 1220 bereitzustellen.

Der Spannungswandler 1200 umfasst insbesondere einen Aufwärtswandler 1230, wobei ein Eingangsanschluss des Aufwärtswandlers 1230 mit einem ersten Eingangsspannungsknoten 1232 und typischerweise auch mit einem zweiten Eingangsspannungsknoten 1234 gekoppelt ist. Ein Ausgang des Aufwärtswandlers 1230 ist typischerweise mit einem ersten Ausgangsspannungsknoten 1242 und auch mit einem zweiten Ausgangsspannungsknoten 1244 gekoppelt. Die Last 1220 ist zwischen den ersten Ausgangsspannungsknoten 1242 und dem zweiten Ausgangsspannungsknoten 1244 geschaltet. Die Eingangsspannungsquelle 1210 ist im Übrigen mit dem ersten Eingangsspannungsknoten 1232 und dem zweiten Ausgangsspannungsknoten 1234 verbunden. Die Eingangsspannungsquelle 1210 und die Last 1220 sind im Übrigen typischerweise nicht Teil des Spannungswandlers 1200.

Der Spannungswandler 1200 umfasst ferner noch ein erstes Eingangsregelelement 1250 (LR4) und ein zweites Eingangsregelelement 1260 (LR3).

In anderen Worten zeigt Fig. 12 einen erfindungsgemäßen Aufwärtswandler (gemäß einem Ausführungsbeispiel), der mit zwei Linearreglern LR3 und LR4 kombiniert wird bzw. kombiniert ist.

Diesbezüglich sei darauf hingewiesen, dass die Funktionsweise des Spannungswandlers 1200 beispielsweise der Funktionsweise des Spannungswandlers 500 oder der Funktionsweise des Spannungswandlers 1000 entsprechen kann. Beispielsweise kann das erste Eingangsregelelement 1250 bzw. der erste Linearregler 1250 dem ersten Eingangsregelelement bzw. dem ersten Linearregler bzw. dem ersten Regeltransistor 1050 entsprechen. Ferner kann das zweite Eingangsregelelement 1260 bzw. der zweite Linearregler 1260 dem zweiten Eingangsregelelement 1060 bzw. dem zweiten Linearregler 1060 bzw. dem zweiten Regeltransistor 1060 entsprechen. Der Aufwärtswandler 1230 kann dem Transformator-gekoppelten Cuk-Konverter 1030 entsprechen.

Insofern kann der Spannungswandler 1200 beispielsweise einen Teil der Funktionalität oder auch die gesamte Funktionalität des Spannungswandlers 1000 aufweisen, wie sie oben anhand der Fig. 7, 8 und 9 bzw. auch anhand der Fig. 10 erläutert wurde.

Weitere optionale Details werden aber auch anhand der Fig. 13 erklärt, wobei die Merkmale, Funktionalitäten und Details, die anhand der Fig. 13 erläutert werden, optional sowohl einzeln als auch in Kombination in den Spannungswandler 1200 gemäß der Fig. 12 übernommen werden können.

Spannungswandler gemäß den Fig. 13a bis 13d

Fig. 13a zeigt ein vereinfachtes Schaltbild eines linear unterstützten Boost-Wandlers, kombiniert mit zwei Linearreglern (bzw. Eingangsregelelementen bzw. Regeltransistoren).

Der Spannungswandler bzw. die Spannungswandleranordnung 1300 ist beispielsweise ausgelegt, um basierend auf einer Eingangsspannung $V_{in}$ von einer Spannungsquelle 1310 eine Ausgangsspannung $V_{out}$ für eine Last 1320 bereitzustellen (wobei die Eingangsspannungsquelle 1310 und die Last 1320 typischerweise nicht zu dem Spannungswandler 1300 gehören). Der Spannungswandler umfasst beispielsweise einen Boost-Wandler 1330, dessen Eingang mit einem ersten Eingangsspannungsknoten 1332 und einem zweiten Eingangsspannungsknoten 1334 gekoppelt ist. Ein Ausgang des Boost-Wandlers ist beispielsweise mit einem ersten Ausgangsspannungsknoten 1342 und einem zweiten Ausgangsspannungsknoten 1344 gekoppelt.

Der Spannungswandler umfasst ferner einen ersten Regeltransistor 1350, bei dem es sich beispielsweise um einen PNP-Transistor handelt. Eine Kollektor-Emitter-Strecke des ersten Regeltransistors 1350 ist beispielsweise parallel zu dem Eingang des Aufwärtswandlers bzw. Boost-Wandlers 1330 geschaltet, wobei ein Emitter-Anschluss beispielsweise mit dem ersten Eingangsspannungsknoten 1332 gekoppelt ist und wobei ein Kollektor-Anschluss beispielsweise mit dem zweiten Eingangsspannungsknoten 1334 gekoppelt ist. Ferner weist der Spannungswandler 1300 einen zweiten Regeltransistor 1360 auf, bei dem es sich beispielsweise um einen NPN-Transistor handelt. Eine Kollektor-Emitter-Strecke des zweiten Regeltransistors 1360 ist beispielsweise zwischen den ersten Ausgangsspannungsknoten 1342 und den ersten Eingangsspannungsknoten 1332 gekoppelt, wobei ein Kollektor mit dem ersten Ausgangsspannungsknoten 1342 gekoppelt ist und wobei ein Emitter mit dem ersten Eingangsspannungsknoten 1332 gekoppelt ist. Der Regeltransistor 1360 erlaubt damit einen Stromfluss von dem ersten Ausgangsspannungsknoten 1342 zu dem ersten Eingangsspannungsknoten 1332, und der erste Regeltransistor 1350 erlaubt einen Stromfluss von dem ersten Eingangsspannungsknoten 1332 zu dem zweiten Eingangsspannungsknoten 1334. Diesbezüglich sei darauf hingewiesen, dass der erste Regeltransistor 1350 und der zweite Regeltransistor 1360 lediglich Beispiele für mögliche Eingangsregelelemente bzw. für mögliche Linearregler sind, wobei andere Transistortypen oder andere Typen von Regelelementen ebenfalls einsetzbar sind.

Der Aufwärtswandler umfasst beispielsweise eine Induktivität 1335, die zwischen den ersten Eingangsspannungsknoten 1332 und einen internen Knoten 1336 geschaltet ist. Ein Schalter ist zwischen den internen Knoten 1336 und den zweiten Eingangsspannungsknoten 1334 bzw. den zweiten Ausgangsspannungsknoten 1344 gekoppelt. Eine Diode 1338 ist zwischen den internen Knoten 1336 und den ersten Ausgangsspannungsknoten gekoppelt, wobei die Anode beispielsweise mit dem internen Knoten 1336 gekoppelt ist und die Kathode mit dem ersten Ausgangsspannungsknoten. Ferner ist eine (optionale) Ausgangskapazität 1339 zwischen den ersten Ausgangsspannungsknoten 1342 und den zweiten Ausgangsspannungsknoten 1344 gekoppelt.

Im Hinblick auf die Funktionalität des Spannungswandlers 1300 sei darauf hingewiesen, dass diese der Funktionalität des Spannungswandlers 1000 ähnelt, wobei der transformatorisch gekoppelte Cuk-Konverter 1030 durch den Aufwärtswandler bzw. Boost-Wandler 1330 ersetzt ist. Die Eingangsspannungsquelle 1310 entspricht der Eingangsspannungsquelle 1010, die Last 1320 entspricht der Last 1020, das erste Eingangsregelelement 1350 entspricht dem ersten Eingangsregelelement 1050 und das zweite Eingangsregelelement 1360 entspricht dem zweiten Eingangsregelelement 1060. Die Ansteuerung der Eingangsregelelemente kann für den Spannungswandler 1300 beispielsweise in ähnlicher Weise erfolgen wie bei dem Spannungswandler 1000, oder auch in ähnlicher oder gleicher Weise wie bei den Übrigen hierin beschriebenen Spannungswandleranordnungen.

Spannungswandler gemäß Fig. 13b

Im Folgenden wird anhand der Fig. 13b ein linear unterstützter Boost-Wandler nach Figur 13a, kombiniert mit zwei Linearreglern und Implementierung einer erfindungsgemäßen Regelfunktion des linear unterstützten Aufwärts-Konverters zur Rippelstromunterdrückung am Eingang beschrieben.

Der Spannungswandler bzw. die Spannungswandleranordnung 1380 gemäß der Fig. 13b basiert auf dem Spannungswandler 1300 gemäß der Fig. 13, so dass gleiche bzw. einander entsprechende Elemente mit gleichen Bezugszeichen bezeichnet sind und hier nicht noch einmal erläutert werden.

Es sei darauf hingewiesen, dass die Fig. 13b weitere (optionale, einzeln und in Kombination einsetzbare) Details im Hinblick auf die Ansteuerung des Schalters 1337 und im Hinblick auf die Ansteuerung der Eingangsregelelemente 1350, 1360 zeigt.

Wie aus der Fig. 13b ohne Weiteres ersichtlich ist, umfasst der Spannungswandler 1380 eine pulsbreitenmodulierte Ansteuerung 1337a, die ein Ansteuersignal für einen Feldeffekt-Transistor Q1 liefert, der als Schalter 1337 wirkt. Beispielsweise liefert der pulsbreitenmodulierte Signalgenerator 1337a ein Signal, das an einen Gate-Anschluss des Feldeffekt-Transistors Q1 angelegt wird, um den als Schalter wirkenden Feldeffekt-Transistor ein- und auszuschalten.

Der Spannungswandler 1380 umfasst ferner eine lineare Regelschaltung 1382, die einerseits eine Information über die Eingangsspannung des Boost-Wandlers erhält und andererseits eine Information über den von der Eingangsspannungsquelle gelieferten Eingangsstrom erhält und basierend darauf ein gemeinsames Ansteuersignal für den ersten Regeltransistor 1350 und den zweiten Regeltransistor 1360 bereitstellt. Beispielsweise empfängt ein Differenzverstärker 1384 an seinem invertierenden Eingang eine Spannung $V_{uref}$, die durch einen resistiven Spannungsteiler mit Widerständen $R_{V1}$ und $R_{V2}$ basierend auf der Eingangsspannung des Boost-Wandlers bzw. Aufwärtswandlers 1330 erhalten wird. In anderen Worten, der Spannungsteiler, umfassend beispielsweise die Widerstände $R_{V1}$ und $R_{V2}$, ist zwischen den ersten Eingangsspannungsknoten 1332 und den zweiten Eingangsspannungsknoten 1334 geschaltet, und ein Abgriff des resistiven Spannungsteilers ist mit dem invertierenden Eingang (-) des Differenzverstärkers 1384 verbunden. Ferner ist ein Strommess-Widerstand 1385 in Serie zu der Eingangsspannungsquelle 1310 zwischen den ersten Eingangsspannungsknoten 1332 und den zweiten Eingangsspannungsknoten 1334 geschaltet, um den von der Eingangsspannungsquelle 1310 gelieferten Strom zu bestimmen. Ein Spannungsabfall über dem Strommess-Widerstand 1385 wird durch einen (invertierenden) Verstärker 1386 skaliert, und ein entsprechendes skaliertes Stromsignal (das den Eingangsstrom in Form einer Spannung repräsentiert) wird dem nicht invertierenden Eingang (+) des Differenzverstärkers 1384 zugeführt. Ein Ausgangssignal des Differenzverstärkers 1384 wird sowohl einem Basisanschluss des zweiten Regeltransistors 1360, bei dem es sich um einen NPN-Transistor handelt, als auch dem Basisanschluss des ersten Regeltransistors 1350, bei dem es sich um einen PNP-Transistor handelt, zugeführt.

Durch die Regelschleife, die die Regeltransistoren 1350, 1360, den resistiven Spannungsteiler $R_{V1}$, $R_{V2}$, den invertierenden Verstärker 1386 und den Differenzverstärker 1384 umfasst, wird die Ansteuerung der Regeltransistoren 1350, 1360 so eingestellt, dass der durch die Spannungsquelle 1310 gelieferte Strom $I_{IN}$ zumindest näherungsweise proportional zu der Eingangsspannung zwischen dem ersten Eingangsspannungsknoten 1332 und dem zweiten Eingangsspannungsknoten 1334 ist (wobei die Spannung zwischen den Eingangsspannungsknoten 1332,1334 in guter Näherung der Spannung $V_{IN}$ entspricht, da der Spannungsabfall an dem Strommess-Widerstand bevorzugt vernachlässigbar klein sein sollte). Die Proportionalitätskonstante wird hierbei durch den resistiven Spannungsteiler (mit den Widerständen $R_{V1}$ und $R_{V2}$), den Strommess-Widerstand 1385 und eine Verstärkung des invertierenden Verstärkers 1386 bestimmt.

Was den Regelmechanismus anbelangt, so sei darauf hingewiesen, dass der zweite Regeltransistor 1360 leitend wird, wenn der durch die Eingangsspannungsquelle 1310 gelieferte Strom "zu groß" bezogen auf die Eingangsspannung wird. In diesem Fall wird ein Strom von dem Ausgang der Spannungswandleranordnung zu dem Eingang hin geliefert, und zwar über den zweiten Regeltransistor 1360. Ist hingegen der durch die Eingangsspannungsquelle 1310 gelieferte (bzw. von der gesamten Spannungswandleranordnung von der Eingangsspannungsquelle 1310 entnommene) Strom "zu klein" (bezogen auf die Eingangsspannung), so wird der erste Regeltransistor 1350 leitend und erhöht somit den durch die Spannungswandleranordnung aufgenommenen Strom. Dadurch wird ein Eingangsstromrippel des Aufwärtswandlers bzw. Boost-Wandlers 1330 zumindest teilweise kompensiert.

Ergänzend sei darauf hingewiesen, dass die entsprechende Regelfunktion natürlich schaltungstechnisch auch anders implementiert werden kann. An die Stelle des Spannungsteilers mit Widerständen $R_{V1}$, $R_{V2}$ kann jede andere analoge oder digitale Schaltungsanordnung treten, die ein entsprechendes Signal für den Regelverstärker bereitstellt. Im einfachsten Falle kann der erste Eingangsspannungsknoten auch direkt mit dem Eingang des Regelverstärkers verbunden sein. Die Strommessung durch den Strommess-Widerstand 1385 und den invertierenden Verstärker 1386 kann natürlich auch durch einen anderen Strommess-Mechanismus ersetzt werden, der ein entsprechendes Stromsignal an den Regelverstärker 1384 liefert.

Optional können natürlich auch separate Ansteuersignale für die Regeltransistoren 1350, 1360 erzeugt werden, wobei die Verwendung eines gemeinsamen Ansteuersignals besonders effizient ist.

Im Übrigen sei darauf hingewiesen, dass die Spannungswandleranordnung 1380 gemäß der Fig. 13b um diejenigen Merkmale, Funktionalitäten und Details ergänzt werden kann, die hierin im Hinblick auf die übrigen Spannungswandleranordnungen beschrieben sind. Die entsprechenden Merkmale, Funktionalitäten und Details können einzeln oder in Kombination auch in der Spannungswandleranordnung 1380 eingesetzt werden.

Spannungswandleranordnung gemäß Fig. 13c

Fig. 13c zeigt ein Schaltbild einer Spannungswandleranordnung 1390. Bei der Spannungswandleranordnung 1390 handelt es sich um einen linear unterstützten Aufwärtswandler bzw. Boost-Wandler nach Fig. 13a, kombiniert mit zwei Linearreglern und Implementierung einer erfindungsgemäßen Regelfunktion des linear unterstützten Aufwärts-Konverters zur Rippelstromunterdrückung am Eingang und spannungsgesteuerte Leistungsfaktor-Korrektur mit variabler Spannungsreferenz über Funktion Kv(s).

Diesbezüglich sei darauf hingewiesen, dass die Spannungswandleranordnung 1390 zahlreiche Merkmale, Funktionalitäten, Details und Elemente der Spannungswandleranordnungen gemäß den Fig. 13a und 13b übernimmt. Entsprechende Merkmale, Funktionalitäten, Details und Komponenten sind hier mit den gleichen Bezugszeichen bezeichnet, so dass die Beschreibung im Hinblick auf die Fig. 13a und 13b hier weiter gilt.

Allerdings sind bei der Spannungswandleranordnung 1390 gemäß Fig. 13c einige Details geändert bzw. mit größerem Detaillierungsgrad gezeigt, wie im Folgenden erläutert wird. Diesbezüglich sei darauf hingewiesen, dass der Boost-Wandler 1330" eine Reglung für eine Pulsbreitenmodulation des Schalters bzw. Schalttransistors 1337 aufweist. Ein Spannungssignal 1391a, das proportional zu einer Ausgangsspannung $V_{out}$ des Boost-Wandlers bzw. der Spannungswandleranordnung ist (oder das auch gleich der Ausgangsspannung sein kann), wird beispielsweise durch einen resistiven Spannungsteiler mit Widerständen $R_{T1}$ und $R_{T2}$ abgegriffen und einer Regelschaltung 1391b zugeführt. In der Regelschaltung wird das Spannungssignal 1391a beispielsweise durch einen Regelverstärker mit einer Referenzspannung $V_{Ref}$ verglichen, und es wird basierend darauf, beispielsweise unter Verwendung einer Regelung 1391c, ein Regelsignal 1391d bereitgestellt. Die Regelung 1391c kann beispielsweise eine Proportionalregelung oder eine Integralregelung oder eine Proportional-Integral-Regelung oder eine andere Regelungsfunktionalität implementieren. Das Regelungssignal 1391d dient beispielsweise der Einstellung eines An-Aus-Verhältnisses einer Pulsbreitenmodulation, mit der der Schalter bzw. Schalttransistor 1337 angesteuert wird. Die Pulsbreitenmodulation wird beispielsweise erzeugt, indem das Regelungssignal 1391d durch einen Vergleicher 1391e mit einem Signal eines Sägezahngenerators 1391f verglichen wird, um ein Ansteuersignal für den Schalter 1337 zu erhalten. Somit wird durch das Regelungssignal 1391d das An-Aus-Verhältnis des Ansteuersignals des Schalters 1337 bestimmt, wobei die Schaltfrequenz des Schalters 1337 durch die Frequenz des durch den Sägezahngenerator 1391f erhaltenen Sägezahnsignals bestimmt wird.

Insgesamt ist somit festzuhalten, dass der Aufwärtswandler bzw. Boost-Wandler 1330" geregelt wird, indem das Verhältnis von An-Zeit und Aus-Zeit abhängig von der Ausgangsspannung des Aufwärtswandlers eingestellt bzw. geregelt wird.

Ferner wird das Regelsignal 1391d auch verwendet, um ein Soll-Verhältnis zwischen der Eingangsspannung des Aufwärtswandlers und dem Eingangsstrom der Spannungswandleranordnung einzustellen. Insbesondere wird hier der durch die Widerstände $R_{V1}$ und $R_{V2}$ gebildete feste Spannungsteiler, wie er bei der Spannungswandleranordnung 1380 beschrieben wurde, durch einen variablen Spannungsteiler 1392a ersetzt. Der einstellbare Spannungsteiler 1392a liefert ein geteiltes Spannungssignal 1392b auf der Basis der Spannung zwischen dem ersten Eingangsspannungsknoten 1332 und dem zweiten Eingangsspannungsknoten 1334 (zwischen denen die Eingangsspannung der Spannungswandleranordnung 1390 bzw. die Eingangsspannung des Aufwärtswandlers 1330" anliegt). Der einstellbare Spannungsteiler 1392a umfasst eine Serienschaltung eines ersten Widerstands 1392c und eines zweiten Widerstands 1392d, die in Serie zwischen den ersten Eingangsspannungsknoten 1332 und den zweiten Eingangsspannungsknoten 1334 geschaltet sind. Parallel zu dem ersten Widerstand 1392c ist eine Serienschaltung eines dritten Widerstands 1392e und einer Kollektor-Emitter-Strecke eines Einstelltransistors 1392f geschaltet. Beispielsweise ist eine erster Anschluss des Widerstands 1392e mit dem ersten Eingangsspannungsknoten 1332 gekoppelt und ein zweiter Anschluss des Widerstands 1392e mit einem Kollektor-Anschluss des Einstelltransistors 1392f. Ein Emitter-Anschluss des Einstelltransistors 1392f ist beispielsweise mit einem Mittelknoten 1392g des einstellbaren Spannungsteilers 1392a gekoppelt, mit dem auch ein zweiter Anschluss des ersten Widerstands 1392c und ein erster Anschluss des zweiten Widerstands 1392d gekoppelt sind. An dem Mittelknoten 1392g wird im Übrigen das geteilte Spannungssignal 1392b abgegriffen, das dem Differenzverstärker beispielsweise an seinen nicht-invertierenden Eingang (+) zugeführt wird. Die Einstellung des einstellbaren Spannungsteilers 1392a erfolgt beispielsweise abhängig von dem Regelungssignal 1391d und auch abhängig von Strömen, die durch den ersten Regeltransistor 1350 und den zweiten Regeltransistor 1360 fließen.

Beispielsweise wird ein Ansteuersignal des Einstelltransistors 1392f des einstellbaren Spannungsteilers 1392a durch eine Einstellfunktion 1393a bereitgestellt. Die Einstellfunktion 1393a empfängt beispielsweise das Regelungssignal 1391d. Weiterhin kann die Einstellfunktion 1393a eine Information 1393b über einen Stromfluss durch den ersten Regeltransistor 1350 und den zweiten Regeltransistor 1360 erhalten. Beispielsweise zeigt die Information 1393b an, ob der Strom durch den ersten Regeltransistor 1350 und/oder der Strom durch den zweiten Regeltransistor 1360 einen vorgegebenen Schwellwert überschritten hat oder nicht. Somit kann beispielsweise die Regelfunktion 1393a abhängig von der Größe der Ströme durch den ersten Regeltransistor 1350 und den zweiten Regeltransistor 1360 angepasst werden, wie es im Folgenden noch beschrieben wird. Insgesamt kann somit ein Soll-Verhältnis zwischen Eingangsspannung und Eingangsstrom der Spannungswandleranordnung (also dem durch die Spannungsquelle 1310 gelieferten Strom) eingestellt werden, wobei die Belastung der Spannungswandleranordnung 1390, die auch durch das Regelungssignal 1391d beschrieben wird, Berücksichtigung findet.

Ergänzend sei noch darauf hingewiesen, dass bei dem Ausführungsbeispiel gemäß Fig. 13c das Ausgangssignal des Regelverstärkers 1384 nicht direkt an die Basis-Anschlüsse der Regeltransistoren 1350, 1360 angelegt wird. Vielmehr wird das Ausgangssignal des Regelverstärkers 1384 an einen Gate-Anschluss eines Feldeffekt-Transistors 1394a angelegt, dessen Source-Anschluss beispielsweise mit dem zweiten Eingangsspannungsknoten 1334 gekoppelt ist. Ein Drain-Anschluss des Transistors 1394a ist beispielsweise über den Widerstand 1394b mit dem ersten Ausgangsspannungsknoten gekoppelt. Basis-Anschlüsse der Regeltransistoren 1350, 1360 sind beispielsweise mit dem Knoten an dem Drain-Anschluss des Transistors 1394a gekoppelt. Auf diese Weise wird ermöglicht, dass die an die Basis-Anschlüsse der Regeltransistoren angelegte Spannung nahezu bis auf die an dem ersten Ausgangsspannungsknoten 1342 anliegende Spannung ansteigen kann, ohne dass die Versorgungsspannung des Regelverstärkers 1384 so hohe Werte annehmen muss. Insofern kann eine effiziente Ansteuerung der Regeltransistoren 1350, 1360 erfolgen.

Im Übrigen sei darauf hingewiesen, dass die Spannungswandleranordnung 1390 gemäß Fig. 13c optional um alle Merkmale, Details und Funktionalitäten ergänzt werden kann, die hierin im Hinblick auf die anderen Spannungswandleranordnungen beschrieben sind. Entsprechende Details, Merkmale und Funktionalitäten können einzeln oder in Kombination in Zusammenhang mit der Spannungswandleranordnung 1390 verwendet werden.

Spannungswandleranordnung gemäß Fig. 13d

Fig. 13d zeigt ein Schaltbild einer Spannungswandleranordnung 1395 gemäß einer erfindungsgemäßen Ausführung bzw. gemäß einem Ausführungsbeispiel. Fig. 13 zeigt insbesondere einen linear unterstützten Boost-Wandler nach Fig. 13a, kombiniert mit zwei Linearreglern und einer Implementierung einer erfindungsgemäßen Regelfunktion des linear unterstützten Aufwärts-Konverters zur Rippelstromunterdrückung am Eingang und spannungsgesteuerter Leistungsfaktor-Korrektur mit variabler Spannungsreferenz über Funktion zweier invertierender Verstärker mit Zeitverzögerung (Tiefpass-Filter bzw. Low-Pass-Filter Ry2, Ry3, Cy3 und Ry5, Ry6, Cy6).

Es sei darauf hingewiesen, dass die Spannungswandleranordnung 1395 in vielen Teilen mit den Spannungswandleranordnungen 1300, 1380, 1390 gemäß den Fig. 13a, 13b und 13c übereinstimmt. Daher werden gleiche bzw. gleichwirkende Elemente hier mit gleichen Bezugszeichen bezeichnet und es wird auf die Ausführungen im Hinblick auf die Fig. 13a, 13b und 13c verwiesen.

Es sei allerdings darauf hingewiesen, dass das Regelungssignal 1391g, das dem Vergleicher 1391e zugeführt wird, beispielsweise im Vergleich zu dem Regelungssignal 1391d verlangsamt ist. Im Übrigen sei darauf hingewiesen, dass die Ansteuerung der Regeltransistoren 1350, 1360 hier unabhängig von der Regelung der Ausgangsspannung erfolgt. Die Spannungswandleranordnung 1395 weist anstelle des variablen Spannungsteilers 1392a einen variablen Spannungsteiler 1397a auf, der in veränderter Weise angesteuert wird.

Zwischen den ersten Eingangsspannungsknoten 1332 und einen Mittelknoten 1397b des einstellbaren Spannungsteilers 1397a ist eine Parallelschaltung eines ersten Zweigs und eines zweiten Zweigs geschaltet. Der erste Zweig umfasst einen ersten Einstelltransistor 1397c und einen ersten Widerstand 1397d, wobei ein Emitter-Anschluss des Transistors 1397c mit dem ersten Eingangsspannungsknoten 1332 gekoppelt ist, wobei ein Kollektor-Anschluss des Transistors 1397c mit einem ersten Anschluss des Widerstands 1397d gekoppelt ist und wobei ein zweiter Anschluss des Widerstands 1397d mit dem Mittelknoten 1397b gekoppelt ist. Der zweite Zweig umfasst einen zweiten Einstelltransistor 1397e sowie einen zweiten Widerstand 1397f. Ein Emitter-Anschluss des zweiten Einstelltransistors 1397e ist mit dem ersten Eingangsspannungsknoten gekoppelt, ein Kollektor-Anschluss des zweiten Einstelltransistors 1397e ist mit einem ersten Anschluss des zweiten Widerstands 1397f gekoppelt und ein zweiter Anschluss des zweiten Widerstands 1397f ist mit dem Mittelknoten gekoppelt. Ferner ist ein dritter Widerstand 1397g zwischen den Mittelknoten und den zweiten Eingangsspannungsknoten 1342 geschaltet. Der Mittelknoten 1397b ist mit einem nicht-invertierenden Eingang (+) des Regelverstärkers 1384 gekoppelt. Bei dem ersten Einstelltransistor 1397c und bei dem zweiten Einstelltransistor 1397e handelt es sich im Übrigen beispielsweise um PNP-Transistoren.

Ein Basis-Ansteuersignal für den ersten Einstellungstransistor wird beispielsweise durch einen Operationsverstärker-basierten aktiven Tiefpass geliefert, wobei ein erster, nicht-invertierender Eingang des entsprechenden Operationsverstärkers mit dem ersten Eingangsspannungsknoten 1332 gekoppelt ist und wobei ein zweiter, invertierender Eingang des Operationsverstärkers über einen Widerstand mit einem Strommess-Knoten 1398a gekoppelt ist. Ein Ausgang des entsprechenden Operationsverstärkers ist beispielsweise mit dem Basis-Anschluss des ersten Einstelltransistors 1397 gekoppelt. Der Strommess-Knoten 1398 ist beispielsweise über einen Strommess-Widerstand 1398b mit dem ersten Eingangsspannungsknoten 1332 gekoppelt. Ferner ist der Strommess-Knoten 1398a mit einem Emitter-Anschluss des zweiten Regeltransistors 1360 gekoppelt. Ein Spannungsabfall über dem Strommess-Widerstand 1398b ist daher proportional zu einem Strom, der durch den zweiten Regeltransistor 1360 fließt. Somit wird insgesamt bewirkt, dass ein Betrag der Basis-Emitter-Spannung des ersten Einstelltransistors 1397c - in zeitlich verzögerter Weise - mit zunehmendem Stromfluss durch den zweiten Regeltransistor 1360 zunimmt. Insgesamt nimmt somit mit zunehmendem Stromfluss durch den zweiten Regeltransistor 1360 ein (effektiver) Widerstand in dem durch den ersten Einstelltransistor 1397c und den zugehörigen Widerstand 1397d gebildeten Pfad des einstellbaren Spannungsteilers ab.

Ferner sei darauf hingewiesen, dass ein Basis-Anschluss des zweiten Einstelltransistors 1397e mit einem Kollektor-Anschluss eines Hilfstransistors 1399c gekoppelt ist. Ein Emitter-Anschluss des Hilfstransistors 1399c ist im Übrigen mit dem ersten Eingangsspannungsknoten 1332 gekoppelt. Ein Basis-Anschluss des Hilfstransistors 1399c ist mit einem Ausgang eines Operationsverstärkers gekoppelt, der Teil eines aktiven Tiefpasses ist. Der aktive Tiefpass empfängt eine Eingangsspannung, die proportional zu einem Strom durch den ersten Regeltransistor 1350 ist. Zu diesem Zweck ist ein Strommess-Widerstand 1398c zwischen den ersten Eingangsspannungsknoten und einen Emitter-Anschluss des ersten Regeltransistors 1350 geschaltet. Somit ist ein Spannungsabfall über dem Strommess-Widerstand 1398c proportional zu dem Stromfluss durch den ersten Regeltransistor 1350. Entsprechend ist die Eingangsspannung des Operationsverstärker-basierten Tiefpass-Filters proportional zu dem Stromfluss durch den ersten Regeltransistor 1350, und ein Betrag der Basis-Emitter-Spannung des Hilfstransistors 1399c folgt in verzögerter Weise der Größe des Stromflusses durch den ersten Regeltransistor 1350. Mit zunehmendem Stromfluss durch den ersten Regeltransistor 1350 vergrößert sich auch ein Stromfluss durch die Emitter-Kollektor-Strecke des Hilfstransistors 1399c, was wiederum dazu führt, dass ein Stromfluss durch die Emitter-Kollektor-Strecke des zweiten Einstelltransistors 1397e verringert wird.

Nimmt also der Stromfluss durch den zweiten Regeltransistor 1360 im Mittel zu, so wird ein Verhältnis zwischen der Spannung an dem nicht-invertierenden Eingang (+) des Regelverstärkers 1384 und der Eingangsspannung vergrößert. In anderen Worten, mit zunehmendem Stromfluss durch den zweiten Regeltransistor 1360 vergrößert sich das Verhältnis zwischen der Spannung an dem nicht-invertierenden Eingang (+) des Regelverstärkers 1384 und der Eingangsspannung. Mit zunehmendem Stromfluss durch den ersten Regeltransistor 1350 verringert sich das Verhältnis zwischen der Spannung an dem nicht-invertierenden Eingang (+) des Regelverstärkers 1384 und der Eingangsspannung.

Somit wird also insgesamt das Spannungsteilerverhältnis des einstellbaren Spannungsteilers 1397a abhängig von den Stromflüssen durch den ersten Regeltransistor 1350 und den zweiten Regeltransistor 1360 eingestellt, wobei die Anpassung hier mit einer zeitlichen Verzögerung erfolgt, so dass beispielsweise im Wesentlichen eine Mittelung über mehrere Schaltperioden des getakteten Spannungswandlers 1330‴ erfolgt. Dies wird beispielsweise durch die aktiven (Operationsverstäker-basierten) Tiefpass-Filter erreicht, die die Ansteuersignale für die Einstelltransistoren 1397c, 1397e des einstellbaren Spannungsteilers 1397a liefern.

Weitere Details werden im Übrigen später noch beschrieben.

Spannungswandleranordnung gemäß Fig. 14

Fig. 14 zeigt ein Blockschaltbild eines Spannungswandlers 1400, gemäß einem Ausführungsbeispiel der vorliegenden Erfindung.

Die Spannungswandleranordnung 1400 ist ausgelegt, um von einer Eingangsspannungsquelle 1410 eine Eingangsspannung zu empfangen und um basierend darauf eine Ausgangsspannung für eine Last 1420 zu liefern. Die Spannungswandleranordnung 1400 umfasst einen Aufwärts- und Abwärts-Wandler 1430. Die Spannungswandleranordnung 1400 umfasst einen ersten Eingangsspannungsknoten 1432 und einen zweiten Eingangsspannungsknoten 1434 sowie einen ersten Ausgangsspannungsknoten 1442 und einen zweiten Ausgangsspannungsknoten 1444 (der beispielsweise mit dem zweiten Eingangsspannungsknoten 1434 zusammenfallen kann). Ein Eingang des Aufwärts- und Abwärts-Wandlers 1430 ist beispielsweise mit dem ersten Eingangsspannungsknoten gekoppelt, und ein Ausgang des Aufwärts- und Abwärts-Wandlers 1430 ist mit dem ersten Ausgangsspannungsknoten gekoppelt. Typischerweise ist der Aufwärts- und Abwärts-Wandler auch mit dem ersten Eingangsspannungsknoten 1434 und dem zweiten Ausgangsspannungsknoten 1444 gekoppelt.

Ein erstes Eingangsregelelement 1450 ist zwischen den ersten Eingangsspannungsknoten 1432 und den zweiten Eingangsspannungsknoten 1434 geschaltet, um einen Stromfluss zu ermöglichen. Ein zweites Eingangsregelelement 1460 ist zwischen den ersten Eingangsspannungsknoten 1432 und den ersten Ausgangsspannungsknoten 1442 geschaltet. Ein drittes Eingangsregelelement 1470 ist beispielsweise parallel zu dem zweiten Eingangsregelelement zwischen den ersten Eingangsspannungsknoten 1432 und den ersten Ausgangsspannungsknoten 1442 geschaltet. Beispielsweise ermöglicht das zweite Eingangsregelelement 1460 einen Stromfluss von dem ersten Ausgangsspannungsknoten 1442 zu dem ersten Eingangsspannungsknoten 1432 hin, während hingegen das dritte Eingangsregelelement 1470 einen Stromfluss von dem ersten Eingangsspannungsknoten 1432 zu dem ersten Ausgangsspannungsknoten 1442 hin ermöglicht.

Die Funktionalität der Spannungswandleranordnung 1400 ähnelt der Funktionalität der Spannungswandleranordnung 1200 gemäß Fig. 12, wobei der Aufwärts-Wandler 1230 durch den Aufwärts- und Abwärts-Wandler 1430 ersetzt ist. Es entspricht also beispielsweise das erste Eingangsregelelement 1450 dem ersten Eingangsregelelement 1250, und es entspricht beispielsweise das zweite Eingangsregelelement 1460 dem zweiten Eingangsregelelement 1260. Das dritte Eingangsregelelement 1470 kommt noch hinzu und kann beispielsweise anstelle des ersten Eingangsregelelement 1450 einen Stromfluss übernehmen, wenn eine Verlustleistung in dem dritten Eingangsregelelement 1470 kleiner ist als in dem ersten Eingangsregelelement 1450.

Im Hinblick auf die übrige Funktionsweise wird einerseits auf die obigen Ausführungen beispielsweise zu den Spannungswandleranordnungen gemäß den Fig. 12 und 13 verwiesen sowie auch auf die folgenden Ausführungen im Hinblick auf die Spannungswandleranordnungen gemäß Fig. 15.

Spannungswandleranordnung gemäß Fig. 15a

Fig. 15a zeigt ein vereinfachtes Schaltbild eines SEPIC-Konverters, kombiniert mit drei Linearreglern.

Die Spannungswandleranordnung 1500 ist ausgelegt, um basierend auf einer Eingangsspannung, die von einer Eingangsspannungsquelle 1510 geliefert wird, eine Ausgangsspannung für eine Last 1520 bereitzustellen. Die Spannungswandleranordnung 1500 umfasst einen SEPIC-Konverter 1530, dessen Eingang mit einem ersten Eingangsspannungsknoten 1532 gekoppelt ist und dessen Ausgang mit einem ersten Ausgangsspannungsknoten 1542 gekoppelt ist.

Die Spannungswandleranordnung 1500 umfasst ferner einen ersten Regeltransistor 1550, bei dem es sich um einen PNP-Transistor handelt, wobei ein Emitter-Anschluss mit dem ersten Eingangsspannungsknoten 1532 gekoppelt ist und wobei ein Kollektor-Anschluss mit dem zweiten Eingangsspannungsknoten 1534 gekoppelt ist. Die Spannungswandleranordnung 1500 umfasst ferner einen zweiten Regeltransistor 1560, bei dem es sich um einen NPN-Transistor handelt, wobei ein Kollektor-Anschluss mit dem ersten Ausgangsspannungsknoten 1542 gekoppelt ist und wobei ein Emitter-Anschluss mit dem ersten Eingangsspannungsknoten 1532 gekoppelt ist. Die Spannungswandleranordnung 1500 umfasst ferner einen dritten Regeltransistor 1570, bei dem es sich um einen PNP-Transistor handelt, wobei ein Emitter-Anschluss mit dem ersten Eingangsspannungsknoten 1532 gekoppelt ist und wobei ein Kollektor-Anschluss mit dem ersten Ausgangsspannungsknoten 1542 gekoppelt ist. Der zweite Regeltransistor 1560 und der dritte Regeltransistor 1570 sind also antiparallel zwischen den ersten Eingangsspannungsknoten 1532 und den ersten Ausgangsspannungsknoten 1542 geschaltet, so dass sie Ströme in unterschiedliche Richtungen führen können.

Der SEPIC-Konverter 1530 umfasst eine erste Induktivität 1534, die zwischen den ersten Eingangsspannungsknoten 1532 und einen ersten internen Knoten 1536 geschaltet ist. Der SEPIC-Konverter 1530 umfasst ferner einen Schalter 1536a, der zwischen den ersten internen Knoten 1536 und den zweiten Eingangsspannungsknoten 1534 geschaltet ist. Ferner umfasst der SEPIC-Konverter eine erste Kapazität 1536b, die zwischen den ersten internen Knoten 1536 und einen zweiten internen Knoten 1537 geschaltet ist. Der SEPIC-Konverter umfasst ferner eine zweite Induktivität 1537a, die zwischen den zweiten internen Knoten 1537 und den zweiten Eingangsspannungsknoten 1534 geschaltet ist, sowie eine Diode 1538, die zwischen den zweiten internen Knoten 1537 und den ersten Ausgangsspannungsknoten 1542 geschaltet ist. Der SEPIC-Konverter umfasst ferner eine (optionale) Ausgangskapazität 1539, die zwischen den ersten Ausgangsspannungsknoten und den zweiten Ausgangsspannungsknoten (also parallel zu der Last 1520) geschaltet ist.

Was die Funktionsweise des SEPIC-Konverters anbelangt, so sei darauf hingewiesen, dass Schwankungen des Eingangsstroms des SEPIC-Konverters 1530, die durch die Taktung des SEPIC-Konverters 1530 entstehen, durch die Eingangsregelelemente 1550, 1560, 1570 zumindest teilweise kompensiert werden, wobei abhängig von einem Betriebszustand (beispielsweise abhängig von einer Relation zwischen der Eingangsspannung, die zwischen den Eingangsspannungsknoten 1532, 1534 anliegt, und einer Ausgangsspannung, die zwischen den Ausgangsspannungsknoten 1542, 1544 anliegt) durch eine Steuerung entschieden wird, welcher bzw. welche der Regeltransistoren 1550, 1560, 1570 für eine Regelung aktiviert werden.

Ein optimaler Arbeitsbereich für einen linear unterstützten Sepic-Konverter im Falle einer veränderlichen wählbaren Ausgangsspannung folgt einer näherungsweisen Funktion der Form

$$\Delta V_{out} = V_{in} - V_{in\_min} \qquad (2)$$

Details werden im Folgenden noch erläutert, wobei auch auf die Ausführungen zu den anderen Spannungswandlern hingewiesen wird, die hier optional ebenso verwendet werden können.

Spannungswandleranordnung gemäß Fig. 15b

Fig. 15b zeigt ein Blockschaltbild eines linear unterstützten SEPIC-Wandlers nach Fig. 15a, kombiniert mit drei Linearreglern und Implementierung einer erfindungsgemäßen Regelfunktion des linear unterstützten Aufwärts-/Abwärts-Wandlers zur Rippeistromunterdrückung am Eingang und spannungsgesteuerte Leistungsfaktor-Korrektur mit variabler Spannungsreferenz über Funktion Kv(s).

Die Spannungswandleranordnung 1580 ist ausgelegt, um eine Eingangsspannung von einer Eingangsspannungsquelle 1510 zu empfangen und eine Ausgangsspannung für eine Last 1520 bereitzustellen.

Die Spannungswandleranordnung 1580 umfasst einen SEPIC-Konverter 1530', der im Wesentlichen dem SEPIC-Konverter 1530 entspricht. Der Schalter 1536a wird hier durch einen Feldeffekt-Transistor gebildet. Eine Regelung erfolgt hier im Wesentlichen wie bei der Spannungswandleranordnung 1390 gemäß Fig. 13c, wobei die Signale 1591a, 1591b, 1591c, 1591d, 1591e, 1591f im Hinblick auf ihre Funktionen und Wirkungsweise im Wesentlichen den Signalen bzw. Komponenten 1391a, 1391b, 1391c, 1391d, 1391e, 1391f entsprechen, so dass hier von einer erneuten Beschreibung abgesehen wird und vielmehr auf die obigen Ausführungen verwiesen wird.

Ähnlich wie bei der Spannungswandleranordnung 1500 gemäß Fig. 15a ist auch bei der Spannungswandleranordnung 1580 ein erster Regeltransistor 1550, ein zweiter Regeltransistor 1560 und ein dritter Regeltransistor 1570 vorhanden, die in derselben Weise verschaltet sind, wie dies anhand der Spannungswandleranordnung 1500 beschrieben wurde.

Ferner gibt es einen Strommess-Widerstand 1585, der dem Strommess-Widerstand 1385 entspricht und der einen Spannungsabfall verursacht, der dem von der Spannungsquelle 1510 gelieferten Strom entspricht. Weiterhin gibt es einen Regelverstärker 1584, der von der Funktionsweise her dem Regelverstärker 1384 entspricht. Außerdem gibt es eine Operationsverstärker-basierte Verstärkerschaltung 1586, die beispielsweise der Verstärkerschaltung 1386 entspricht, und die beispielsweise an den nicht-invertierenden (+) Eingang des Regelverstärkers 1584 ein Spannungssignal liefert, das zu dem von der Spannungsquelle 1510 gelieferten Strom proportional ist. Weiterhin gibt es einen einstellbaren Spannungsteiler 1592, der von seiner Funktion her dem einstellbaren Spannungsteiler 1392 entspricht. Der einstellbare Spannungswandler liefert an den invertierenden (-) Eingang des Regelverstärkers 1584 ein Spannungssignal, das mit einem einstellbaren Teilungsverhältnis der Eingangsspannung der Spannungswandleranordnung (beispielsweise der durch die Spannungsquelle 1510 gelieferten Spannung abzüglich der - oftmals vernachlässigbaren - über dem Strommess-Widerstand 1585 abfallenden Spannung) entspricht. Das entsprechende heruntergeteilte Spannungssignal ist mit 1592 bezeichnet.

Ein Ausgangssignal des Regelverstärkers 1584 wird über einen Schalter 1594 entweder (gemeinsam) den Basis-Anschlüssen des ersten Regeltransistors 1550 und des zweiten Regeltransistors 1560 oder dem Basis-Anschluss des dritten Regeltransistors 1570 zugeführt. Somit kann durch die Steuerung entschieden werden, ob eine Regelung durch den ersten Regeltransistor 1550 und den zweiten Regeltransistor 1560 erfolgen soll, oder ob (alternativ dazu) die Regelung durch den dritten Regeltransistor 1570 erfolgen soll.

Ergänzend sei darauf hingewiesen, dass das Ansteuersignal für den einstellbaren Spannungsteiler beispielsweise durch eine Abbildungsfunktion 1593 basierend auf dem Regelungssignal 1591d (das dem Regelungssignal 1391d entspricht) bereitgestellt wird.

Diesbezüglich sei darauf hingewiesen, dass weitere Details im Hinblick auf die Funktionalität der Spannungswandleranordnung 1380 im Folgenden noch beschrieben werden. Im übrigen können optional die im Hinblick auf die anderen Spannungswandleranordnungen beschriebenen Merkmale, Funktionalitäten und Details einzeln oder in Kombination bei der Spannungswandleranordnung gemäß Fig. 15b eingesetzt werden.

Spannungswandleranordnung gemäß Fig. 15c

Fig. 15c zeigt ein Schaltbild einer Spannungswandleranordnung 1590, gemäß einem Ausführungsbeispiel der vorliegenden Erfindung.

Insbesondere zeigt Fig. 15c einen linear unterstützten SEPIC-Wandler nach Fig. 15a, kombiniert mit drei Linearreglern und Implementierung einer erfindungsgemäßen Regelfunktion des linear unterstützten Aufwärts-/Abwärts-Wandlers zur Rippelstromunterdrückung am Eingang und spannungsgesteuerte Leistungsfaktor-Korrektur mit variabler Spannungsreferenz über Funktion Kv(s) sowie Korrekturfunktion der Spannungsreferenz $V_{uref}$ durch Erfassung der Ströme $I_{reg1}$, $I_{reg3}$ und $I_{reg4}$ in den Linearreglern.

Es sei darauf hingewiesen, dass die Spannungswandleranordnung 1590 gemäß der Fig. 15c sehr ähnlich zu der Spannungswandleranordnung 1580 gemäß der Fig. 15b und zur Spannungswandleranordnung 1500 gemäß Fig. 15a ist, so dass gleiche bzw. gleichwirkende Elemente und Signale hier nicht noch einmal beschrieben werden. Vielmehr wird auf die obigen Ausführungen Bezug genommen.

Insbesondere sei darauf hingewiesen, dass die Erzeugung des Ansteuersignals für den einstellbaren Spannungsteiler 1592a bei dem Spannungswandler 1590 etwas anders erfolgt als bei dem Spannungswandler 1580. Außerdem erfolgt die Bereitstellung des Ansteuersignals für die Basis-Anschlüsse der Regeltransistoren 1550, 1560, 1570 etwas anders als bei der Spannungswandleranordnung 1580.

Bei der Spannungswandleranordnung 1590 wird das Ansteuersignal für den einstellbaren Spannungswandler 1592a durch eine Abbildungsfunktion 1596a erzeugt, die als Eingangssignal bzw. Eingangsinformation nicht nur das Regelungssignal 1591d, sondern auch Information über die Ströme durch die Regeltransistoren 1550, 1560, 1570 empfängt. Beispielsweise empfängt die Regelungsfunktion 1596a eine Information darüber, ob die Ströme durch die Regeltransistoren 1550, 1560, 1570 vorgegebene obere und/oder untere Schwellwerte überschreiten bzw. unterschreiten. Alternativ oder zusätzlich erhält die Regelungsfunktion 1596a auch Informationen über Minimalwerte und/oder Maximalwerte der Ströme durch die Regeltransistoren 1550, 1560, 1570. Details im Hinblick auf die entsprechende Einstellungsfunktion bzw. Regelungsfunktion bzw. Abbildungsfunktion 1596a werden im Folgenden noch beschrieben.

Was die Erzeugung des Ansteuersignals für die Basis-Anschlüsse der Regeltransistoren anbelangt, so sei darauf hingewiesen, dass zu diesem Zwecke ein Feldeffekt-Transistor 1595a (beispielsweise ein n-Kanal-Feldeffekt-Transistor) und ein Widerstand 1595b verwendet werden. Beispielsweise ist ein Gate-Anschluss des Feldeffekt-Transistors 1595a mit dem Ausgang des Regelverstärkers 1584 verbunden. Ein Source-Anschluss des Feldeffekt-Transistors 1595a ist mit dem zweiten Eingangsspannungsknoten 1534 gekoppelt. Ein Drain-Anschluss des Transistors 1595a ist über den Widerstand 1595b mit dem ersten Ausgangsspannungsanschluss 1542 gekoppelt. Somit kann das an dem Eingang des Schalters 1594 anliegende Signal beispielsweise Potentiale annehmen, die zwischen dem Potential des ersten Ausgangsspannungsknotens 1542 und dem Potential des zweiten Eingangsspannungsknotens 1534 bzw. dem Potential des zweiten Ausgangsspannungsknotens 1544 liegen.

Weitere Details im Hinblick auf die Spannungswandleranordnung 1590 werden im Folgenden noch erläutert. Im übrigen können optional die im Hinblick auf die anderen Spannungswandleranordnungen beschriebenen Merkmale, Funktionalitäten und Details einzeln oder in Kombination bei der Spannungswandleranordnung gemäß Fig. 15c eingesetzt werden

Eingangsspannungsquelle gemäß Fig. 15d

Fig. 15d zeigt ein Schaltbild einer Eingangsspannungsquelle 1598. Die Eingangsspannungsquelle 1598 umfasst beispielsweise einen Brückengleichrichter 1599a mit vier Gleichrichterdioden. Eingangsanschlüsse des Brückengleichrichters sind beispielsweise mit einer Wechselspannungsquelle 1599b verbunden. Ein erster Ausgangsanschluss 1599c und ein zweiter Ausgangsanschluss 1599d können beispielsweise verwendet werden, um die Eingangsspannung $V_{in}$ für die hierin beschriebenen Spannungswandleranordnungen bereitzustellen. Damit stellt die Eingangsspannung der Spannungswandleranordnung beispielsweise eine pulsierende Gleichspannung dar, wie sie durch den Brückengleichrichter an den Ausgangsanschlüssen 1599c, 1599d bereitgestellt wird.

Es sei allerdings darauf hingewiesen, dass die Eingangsspannung der Spannungswandleranordnung natürlich auch auf andere Weise bereitgestellt werden kann.

In anderen Worten, Fig. 15d zeigt eine erfindungsgemäße Ausführung einer Eingangsspannungsquelle $V_{in}$ durch eine gleichgerichtete Wechselspannung mit Vollbrückengleichrichter.

Weitere Aspekte und Details

Im Folgenden werden weitere Aspekte und Details beschrieben, die optional bei den hierin beschriebenen Spannungswandleranordnungen zum Einsatz kommen können. Es sei darauf hingewiesen, dass die Aspekte und Details normalerweise einzeln oder in Kombination eingesetzt werden können.

Fig. 13 zeigt eine erfindungsgemäße Ausführungsform eines linear unterstützten Boost-Wandlers (gemäß einem weiteren Ausführungsbeispiel). Damit wird der Eingangsstrom, welcher einer Sinusform durch bekannte Regelungsverfahren folgt, als eine Sinusform ohne hochfrequente Abweichungen aus dem Netz entnommen.

In Tabelle 3 ist die Funktion der aktiven Regler LR3 und LR 4 gezeigt. Der Linearregler LR3 ist beispielsweise aktiv, wenn die Eingangsspannung größer als die Differenz zwischen Ausgangs- und Eingangsspannung ist. Wenn die Eingangsspannung kleiner als die Differenz zwischen Ausgangs- und Eingangsspannung ist, oder wenn sich die Eingangsspannung der Ausgangsspannung nähert, so wird beispielsweise der Linearregler LR4 aktiviert. Im Fall, dass die Eingangsspannung etwa die Hälfte der Ausgangsspannung beträgt (beispielsweise +/-10 Prozent), werden beispielsweise beide Linearregler LR3 und LR4 aktiviert so dass der Stromrippel der Boost-Drossel (bzw. Hochsetzdrossel) L1 in Fig. 13 von Linearregler LR3 übernommen wird, wenn der Drosselstrom kleiner als der Sollwert, beispielsweise einer eingangsseitigen Sinusform des Stromes, ist. Wenn der Drosselstrom hingegen größer als der Sollwert, beispielsweise einer eingangsseitigen Sinusform des Stromes, ist, wird beispielsweise der Stromrippel von LR4 übernommen, so dass beispielsweise die Verlustleistung in den Linearreglern jeweils als Produkt aus der Spannungsdifferenz über dem jeweiligen Linearregler und einem kleinstmöglichen effektivem Strom minimiert wird.

In Figur 13b ist eine Ausführung der Erfindung gezeigt, welche beispielsweise eine genaue Proportionalität des Eingangsstromes zur angelegten Eingangsspannung herstellt (beispielsweise einregelt). Die Schaltung kann prinzipiell zur Leistungsfaktorkorrektur bei sinusförmigen Halbwellen der Spannung Vin am Eingang verwendet werden. Dabei ist jedoch beispielsweise nur eine Leistung übertragbar, welche bei sinusförmigen Halbwellen der Funktion

$$P_{in} = \frac{V_{in\_RMS}^2}{\frac{R_{I3}}{R_{I2}} R_{I1} \left( \frac{R_{V1}}{R_{V2}} + 2 \right)} \qquad (3)$$

folgt. Der Eingangsstrom wird dabei beispielsweise proportional zur Eingangsspannung fest eingestellt, indem zugleich der Rippel, welcher sich aus dem pulsierenden Eingangsstrom der Boost-Konverters ergibt, durch die Linearregler LR3 und LR4 jeweils kompensiert wird. Dabei weist der Strom aufgrund der Schaltung in Figur 13b folgende Funktion auf:

$$I_{in} = \frac{V_{in\_RMS}}{\frac{R_{I3}}{R_{I2}} R_{I1} \left( \frac{R_{V1}}{R_{V2}} + 2 \right)} \qquad (3a)$$

Sofern der Boost-Konverter einen größeren Eingangsstrom IL1 als den durch (3a) eingestellten Wert (oder Sollwert) aufnimmt, also mehr Leistung verbraucht als durch das Verhältnis aus (3a) vorgegeben ist, wird beispielsweise der Linearregler LR3 aktiviert (beispielsweise durch den Regelverstärker 1384) und kompensiert über den Rippelstrom hinaus auch einen Gleichstromanteil indem der Strom von dem positiven Potenzial der Ausgangsspannung (beispielsweise von dem ersten Ausgangsspannungsknoten 1342) auf den positiven Knoten der Eingangsspannung (beispielsweise zu dem ersten Eingangsspannungsknoten) fließt, und damit der Last weitere Energie entzieht. Dadurch wird der Ausgang über die last RL hinaus weiter belastet, und die Ausgangsspannung reduziert sich bis die Leistung an der Last etwa der der aufgenommenen Leistung nach (3) entspricht. Damit wird die Übertragungsfunktion des Boost-Konverters im kontinuierlichen Betrieb kleiner als die mit der Gleichung Vout/Vin = 1 / (1-D) beschriebene Funktion.

Wenn hingegen die Ausgangslast weniger Leistung aufnimmt als durch (3) vorgegeben ist, so wird die überschüssige Leistung beispielsweise in dem Linearregler LR4 verbraucht, indem der Strom gegen Masse abgeleitet wird. In diesem Fall folgt die Übertragungsfunktion des Boost-Konverters der Gleichung Vout/Vin = 1 / (1-D) für den kontinuierlichen Betrieb.

Der Boost-Konverter soll dabei stets im kontinuierlichen Betrieb (CCM) arbeiten, um die Verluste in den beiden Linearreglern gering zu halten. Der Eingangsstromrippel kann beispielsweise nur bis zu einer Ausgangsleistung vollständig kompensiert werden, welche kleiner oder gleich Leistung nach Gleichung (3) ist. Für kleinere Leistungen an der Last RL wird der Verlustanteil in den Linearreglern LR3 und LR4 soweit ansteigen, dass die nach (3) beschriebene Leistung am Eingang geliefert wird. Diese Schaltung kann beispielsweise für Aufgaben verwendet werden, bei denen eine sinusförmige Spannung oder eine Spannung mit einem Leistungsfaktor von 100% bei beliebigen Eingangsspannungskurven gefordert ist, was zum Beispiel in der Messtechnik der Fall sein kann. Um die Verlustleistung der Schaltung zu minimieren kann die Last RL eine verlustarme Rückspeiseschaltung in ein Netz oder einen Energiespeicher sein, wobei die Frequenz und Einschaltzeit der PWM etwa konstant gehalten werden kann, so dass die Eingangsleistung gleich der Ausgangsleistung ist, abzüglich der Verluste in den Komponenten der Schaltung.

Zur Änderung der übertragenen Leistung nach (3) kann man beispielsweise entweder das Teilerverhältnis RI3/RI2 oder das Teilerverhältnis RV1/RV2 ändern, was durch weitere Möglichkeiten gegeben ist, die nicht in der Fig. 13b gezeigt sind, und beispielsweise in Fig. 13c und 13d beschrieben sind.

Fig. 13c zeigt eine erfindungsgemäße Ausführung eines Boost-Konverters mit linearer Assistenz zur Leistungsfaktorkorrektur. Der Boost-Konverter wird beispielsweise in kontinuierlichem Betrieb mit einer dazu ausreichend großen Induktivität L1 betrieben. Über einen Spannungsteiler RT1 und RT2 wird die Ausgangsspannung Vout beispielsweise mit einer Referenzspannung Vref verglichen und über den Regler Reg1 und der nachgeschalteten Einstellung der Regelparameter *"Control" bzw. "Regelung"* über den Begrenzer zur Erzeugung eines PWM-Signals durch Vergleich der Regler-Ausganges mit einer Sägezahnfunktion *Vsägezahn* verwendet. Das PWM-Signal steuert beispielsweise den Mosfet Q1 zur Regelung der Ausgangsspannung auf einen etwa konstanten Wert. Für den Fall, dass die vorzugsweise gleichgerichtete Spannung Vin in der Netzlücke auf null abfällt wird der Regler beispielsweise kurzzeitig mit maximaler Einschaltzeit arbeiten ohne dass Energie übertragen wird, wobei der Ausgangspufferkondensator Cout die Spannung trotz Leistungsabgabe an die Last etwa aufrecht erhält. Der Spannungsteiler RV1 und RV2 erfasst beispielsweise die Größe der Eingangsspannung für die kleinstmögliche Eingangsleistung welche im kontinuierlichen Betrieb übertragbar ist ohne dass der Strom in der Drossel L1 auf null abfällt. Ist die Leistung geringer, so wird der Boost-Konverter beispielsweise im Burst-Mode betrieben und die Linearregler LR3 und LR4 werden während der Ausschaltzeit des Burst-Mode deaktiviert (Optionale Deaktivierungsschaltung ist nicht in der Fig. 13c gezeigt). Die aus der Quelle Vin entnommene minimale Leistung im kontinuierlichen Betrieb wird beispielsweise nach (3) durch die Widerstandteiler RV1 und RV2 sowie durch RI2 und RI3 fest eingestellt. Der Verstärker *Ampl* invertiert beispielsweise die Richtung der Spannung über dem Shunt bzw. Nebenschlusswiderstand RI1 von negativer Spannung gegenüber der Masse und verstärkt diese Spannung mit dem Verhältnis RI3/RI2, so dass die Verlustleistung über dem Shunt RI1 gering gehalten werden kann. Diese Schaltung kann bevorzugt auch in einem integrierten Schaltkreis untergebracht werden, wobei die Widerstände RI2 und RI3 extern angeordnet sein können oder durch eine interne Schaltung digital programmiert werden können. Um den Verstärker *Amp* bei kleiner Betriebsspannung zu betreiben kann dieser beispielsweise über einen Pull-Up-Widerstand bzw. einen Hochzieh-Widerstand zwischen der Ausgangsspannung des Verstärkers *Amp* und der Ausgangsspannung des Boost-Konverters mit einem Ausgangstransistor $Q_A$ (n-Kanal-Mosfet) versehen werden, wobei dann der Verstärker *Amp* das Gate des Ausgangstransistors steuert und somit die Polarität der Eingänge von *Amp* wie gezeigt vertauscht sein sollte bzw. muss.

Wenn der Referenzwert der Spannung aus dem Spannungsteiler RV2 / (RV1 + RV2) zu klein ist, um die erforderliche Leistung an den Ausgang zu liefern, so wird beispielsweise das Teilerverhältnis beispielsweise dadurch vergrößert, dass ein dritter Widerstand RV3 über einen Transistor LRv zugeschaltet wird, dessen Wert die maximale Leistung an der Last einstellt, indem der maximale Strom aus der Quelle Vin, bei dem die Linearregler nur den Stromrippel kompensieren, größer gemacht wird.

Dieses wird beispielsweise über die Steuerfunktion *Kv(s)* erreicht, welche bei einer kleinen Einschaltzeit von Q1 und somit einem niedrigen Vergleichswert am Ausgang des Reglers *"Control" bzw. "Regelung"* eine kleine Spannung an die Basis von LRv überträgt, so dass LRv ausgeschaltet wird. Die Funktion von *Kv(s)* soll beispielsweise so gewählt werden, dass der mittlere Gleichstrom der Stromkurve, welche der aktuellen Ausgangsleistung des Boost-Konverters entspricht, durch die Gleichung

$$P_{in} = \frac{V_{in\_RMS}^2}{\frac{R_{I3}}{R_{I2}} R_{I1} \left( \frac{R_{Vers}}{R_{V2}} + 2 \right)} = \eta \, P_{out} = \eta \, \frac{V_{out}^2}{R_L} \qquad (4)$$

gegeben ist, wobei sich der Widerstand Rvers durch die Parallelschaltung des Widerstandes RV1 und des Ersatzwiderstandswertes aus RV3 und dem Stelltransistor LRv ergibt. Um zu verhindern, dass die durch (4) eingestellte Leistung zu groß ist, und somit die überschüssige Leistung in Linearregler LR4 verbraucht wird, indem dieser den mittleren Differenzstrom zwischen der am Eingang eingestellten Größe und dem an der Last benötigten Strom übernimmt, wird beispielsweise über die Funktion $Kv(s)$ ein nur geringfügig größerer Referenzstrom über den Teiler RVers/RV2 eingestellt.

Weiterhin ist diese Einstellung beispielsweise eher für kleine Eingangsspannungen zweckmäßig, da über LR4 nur ein geringer Spannungsabfall besteht, und somit nur kleine Verlustleistung an LR4 anfällt. Für eine größere Eingangsspannung wäre hingegen beispielsweise ein etwas zu kleiner Referenzstrom einzustellen, so dass der Eingangsstromrippel beispielsweise über LR3 nur aus der Ausgangsspannung kompensiert wird, und somit die Verlustleistung über LR3 aufgrund des geringeren Spannungsabfalles über RL3 vergleichsweise zu RL4 geringer ausfällt.

Normalerweise ist die Funktion $Kv(s)$ beispielsweise in erster Näherung ein Proportionalitätsfaktor, in besserer Näherung ist $Kv(s)$ eine nichtlineare Funktion, welche sich aus der Auslegung des Boost-Wandlers einerseits und aus der aktuell anliegenden Größe der gleichgerichteten Wechselspannung am Eingang ergibt.

Um die Funktion $Kv(s)$ zu bilden, kann beispielsweise neben einer fest eigestellten Nichtlinearität auch eine optionale Strommessung in den beiden Linearreglern LR3 und LR4 erfolgen, welche die Ströme Ireg3 und Ireg4 wie in der Figur gezeigt ist, erfassen und bei Überschreitung eines jeweiligen Maximalwertes eine Korrektur der Funktion Kv(s) bezüglich ihres Proportionalitätsfaktors bewirken, beispielsweise indem LRv mehr ausgeschaltet wird wenn der Strom in LR4 einen Maximalwert überschreitet, und indem LRv mehr eingeschaltet wird, wenn der Strom in LR3 einen Maximalwert überschreitet.

Da es bei Lastwechseln oder schnellen Änderungen der Eingangsspannung zu Oszillationen der Überschreitung eines maximalen Stromwertes in LR3 und LR4 kommen kann, indem die beiden Ströme abwechselnd in hoher Frequenz überschritten werden, soll über $Kv(s)$ eine Verzögerung der Änderung des Zustandes von LRv erreicht werden, so dass Stabilität bei dynamischen Übergängen erreicht wird und die Kompensation des Schaltrippels des Eingangsstromes mit sehr hoher Frequenzbandbreite der Linearregler LR3 und LR4 erfolgen kann, während durch $Kv(s)$ ein Tiefpass-Filter (Low-Pass-Filter) realisiert wird, der der Schaltfrequenz nicht folgen kann. Vorzugsweise sollte die Grenzfrequenz des Filters zwischen dem zweifachen und zehnfachem Wert der Schaltfrequenz gewählt werden, um einerseits die Kompensation des Schaltrippels durch die Abtastung von Ireg3 und Ireg4 nicht durch eine zu schnelle Änderung der Referenz $Vuref$ zu gefährden, andererseits aber auf dynamische Änderungen der Last zeitnah zu reagieren um zusätzliche Verluste in den Linearreglern über die Rippelkompensation hinaus zu vermeiden.

In Fig. 13d ist eine weitere erfindungsgemäße Implementierung der Stromrippelkompensation am Eingang gezeigt, indem die Funktion $Kv(s)$ entfällt und dafür lediglich eine mit Tiefpass-Filtern (Low-Pass-Filtern) versehene Änderung des Referenzwertes von Vuref über die Hilfs-Linearregler LRv3 und LRv4 erreicht wird. Der Regler "Control" bzw. "Regelung" sollte bzw. muss in diesem Fall mit einer niedrigeren Grenzfrequenz arbeiten als durch die Tiefpass-Filter (Low-Pass-Filter) maximal erreicht wird, da sonst die Proportionalität zwischen der Eingangsspannung und der Ausgangsspannung nicht erreicht wird.

Wenn es die Anwendung zulässt kann der nichtinvertierende Eingang des Komparators Comp1 (optional) mit einer konstanten Referenz betrieben werden, so dass der Regelkreis über Reg1 entfällt. Damit wird eine Schwankung der Ausgansspannung mit der Frequenz der Eingangsspannung in Kauf genommen.

In Fig. 14 ist eine erfindungsgemäße Ausführung eines Aufwärts- und Abwärtswandlers gezeigt, welche mit drei Linearreglern kombiniert ist. Dabei kann die Ausgangsspannung beliebige Werte, auch kleiner als die Eingangsspannung, annehmen.

Fig. 15a zeigt eine erfindungsgemäße Ausführung eines SEPIC-Wandlers, der mit drei Linearreglern kombiniert ist.

Die in Fig. 14 und 15a gezeigten Linearregler werden beispielsweise nach den in Tabelle 4 beschriebenen Funktionen aktiviert. Um jeweils die geringsten elektrischen Verluste durch die Linearregler zu verursachen werden beispielsweise diejenigen Linearregler aktiviert, über welche der geringste Spannungsabfall nach Tabelle 4 auftritt. Dabei wird beispielsweise speziell im Fall 4 für die Aufwärtswandlung nach Tabelle 4 der Stromrippel der Eingangsdrossel L1 durch die beiden Linearregler LR3 und LR4 kompensiert, da der Spannungsabfall über beiden Linearreglern etwa gleich groß ist, und in beiden Linearreglern nur etwa der halbe Effektivwert des Rippelstromes auftritt.

Die Kompensation des Stromrippels der Eingangsquelle Vin ist für einen typischen Anwendungsfall der Leistungsfaktorkorrektur einer gleichgerichteten sinusförmigen Eingangsspannung in Fig. 15b gezeigt.

Die Funktion der in Fig. 15b dargestellten Schaltung ist beispielsweise analog der zu Fig. 13c beschriebenen Schaltung für den Fall, dass die Ausgangsspannung größer als die Eingangsspannung ist. Für den Fall, dass die Ausgangsspannung kleiner als die Ausgangsspannung wird, wird der Schalter SL beispielsweise von Position 3+4 auf Position 1 umgeschaltet, so dass nur der Linearregler LR1 aktiv ist. Auch in diesem Fall kann durch eine Strommessung in LR1 erreicht werden, dass der Strom einen bestimmten Maximalwert nicht überschreitet, indem der Stelltransistor LRv mehr ausgeschaltet wird. Weiterhin gilt beispielsweise im Fall einer kleineren Ausgangsspannung gegenüber der Eingangsspannung, dass LR1 im Fall einer stark ansteigenden Last ausschaltet, so dass der Schaltrippel nicht sofort kompensiert werden kann. Deshalb kann es zugleich erforderlich sein, dass bei Unterschreiten eines minimalen Stromes in LR1 der Wert der Steuerfunktion *Kv(s)* so geändert wird, dass der Steuertransistor LRv mehr eingeschaltet wird (also beispielsweise mehr Strom leitet), was beispielsweise im Falle einer größeren Ausgangsspannung als der Eingangsspannung in Position 3+4 des Schalters SL nicht erforderlich ist, da jeweils einer der Linearregler LR3 oder LR4 aktiv ist, je nachdem ob zu viel oder zu wenig Strom an der Last benötigt wird, vergleichsweise zur aktuell eingestellten Stromreferenz.

Fig. 15c stellt eine weitere erfindungsgemäße Ausführung eines SEPIC-Wandlers dar, in welcher die Ströme in den Linearreglern LR1, LR3 und LR4 erfasst werden und über die Funktion *Kv(s)* eine Anpassung der Spannungsreferenz Vuref an die aktuell am Ausgang verbrauchte Leistung bewirken um die Verlusten in den Linearreglern zu minimieren.

Als weitere erfindungsgemäße Ausführung der Eingangsspannungsquelle Vin in den Fig. 13 und 15 kann die in Fig. 15d gezeigte Gleichrichterschaltung einer eingangsseitigen Wechselspannung gesehen werden.

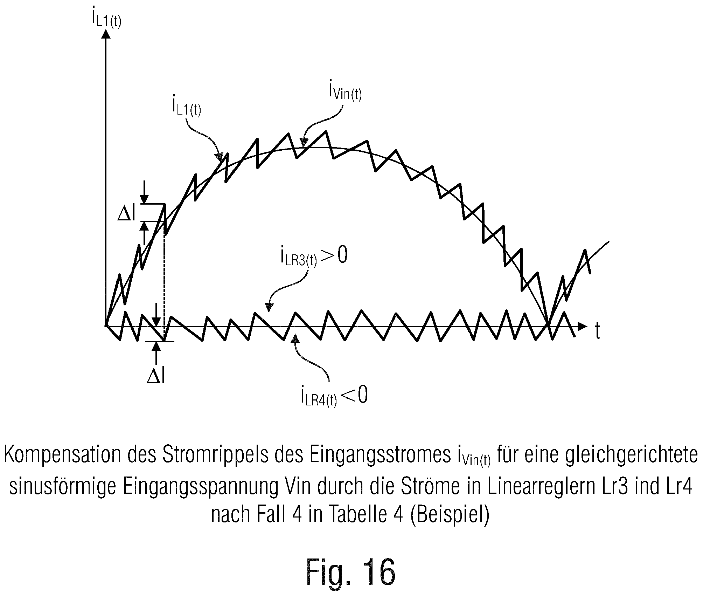

Wie in Fig. 16 gezeigt ist, wird der Linearregler LR3 (beispielsweise bei den hierin beschriebenen Spannungswandleranordnungen) den positiven Stromrippel ΔI von der Ausgangsspannung zur Eingangsspannung gegenüber der Drossel L1 kompensieren. Der negative Stromrippel -ΔI wird hingegen beispielsweise von Linearregler LR4 von der Eingangsspannung der Quelle Vin zum Massepotenzial der Quelle Vin kompensiert. Idealerweise würde die Ausgangsspannung dabei etwa das Doppelte der Eingangsspannung betragen. In typischen Anwendungen ist die Ausgangsspannung jedoch konstant und um 25% größer bis etwa doppelt so groß wie der Maximalwert der Eingangsspannung Vin.

Da die Eingangsspannung (beispielsweise) etwa proportional dem sinusförmigen Verlauf des in Fig. 16 gezeigten Stromverlaufes ist, die Ausgangsspannung hingegen etwa konstant, würde bei einer erfindungsgemäßen Ausführung eines Boost-Konverters nach Fig. 13 lediglich in der Nähe des Maximums der Sinusfunktion die gezeigte Kompensation des Stromrippels zur optimalen Reduzierung von Verlusten in den Linearreglern führen. In der Nähe des Nulldurchganges der gleichgerichteten Sinusspannung würde beispielsweise erfindungsgemäß eine Kompensation des Stromrippels nur durch LR4 erfolgen, so dass der gesamte Stromrippel = -2 ΔI von LR4 negativ wird (bzw. durch LR4 übernommen wird).

Im Fall einer Ausführung mit einem SEPIC-Konverter nach Figur 15 kann die Ausgangsspannung erfindungsgemäß (beispielsweise) etwa (z. B. mit einer Toleranz von +/- 10%) halb so groß wie der Spitzenwert der gleichgerichteten sinusförmigen Eingangsspannung gewählt werden. In diesem Fall wird beispielsweise nach Tabelle 4 in der Nähe des Spitzenwertes Fall 5 eintreten, so dass Linearregler LR1 aktiviert wird und der Stromrippel = - 2 ΔI von LR1 auf den Ausgang RL abgeleitet wird. In der Nähe des Nulldurchganges wird beispielsweise wiederum in Fall 3 nach Tabelle 4 nur LR4 aktiviert um die geringsten Verluste der Linearregler zu erreichen. Ist die Ausgangsspannung etwa gleich der Eingangsspannung, so tritt beispielsweise Fall 2 ein. Ist die Ausgangsspannung größer als die Eingangsspannung und etwa doppelt so groß wie diese, so tritt beispielsweise wiederum der in Fig. 16 gezeigte Fall 4 ein.

Es wird somit (beispielsweise, bei manchen Ausführungsbeispielen) ein idealer Gleichstrom aus einer Quelle entnommen, welcher im Falle einer gleichgerichteten sinusförmigen Spannung Vin dazu führt, dass diese Anordnung ohne weitere Netzfilter nur mit einem Gleichrichter am Eingang eines Wechselstromnetzes ausgeführt werden kann. Um parasitäre harmonische Oberschwingungen des Stromes im Netznulldurchgang zu unterdrücken, welche durch den Eingangsgleichrichter verursacht werden können, kann optional zusätzlich im Netznulldurchgang eine vorgegebenen Funktion der kapazitiven Umladung der Gleichrichter des Netzeingangs durch den Linearregler LR3 nachgebildet werden, um auch im Netznulldurchgang eine vollständige Unterdrückung von Stromrippel hochfrequenter Störungen zu erreichen.

Zusammenfassend ist somit festzustellen, dass bei den hierin beschriebenen Spannungswandleranordnungen optional eine Regelung der durch die Eingangsregelelemente (die hierin auch als Linearregler bezeichnet werden) fließenden Ströme erfolgen kann, um beispielsweise ein fest oder variabel vorgegebenes Verhältnis zwischen einer Eingangsspannung und einem Eingangsstrom zu erzielen. Verschiedene Ausgestaltungen der Regelung sind möglich, wie beispielsweise in Fig. 13b, 13c, 13d, 15b, 15c gezeigt ist.

Ferner kann durch eine Steuerung der Spannungswandleranordnung, die in den Figuren nicht gezeigt ist, eine Information über eine Relation zwischen der Eingangsspannung $V_{in}$ und der Ausgangsspannung $V_{out}$ erhalten werden. Die Steuerung kann beispielsweise basierend auf der Relation zwischen der Eingangsspannung und der Ausgangsspannung verschiedene Fälle unterscheiden, und zwar beispielsweise die in den Tabellen 2 und/oder 3 und/oder 4 gezeigten Fälle. Selbstverständlich ist es aber auch möglich, dass die Steuerung nicht alle der in den Tabellen 2 und/oder 3 und/oder 4 gezeigten Fälle unterscheidet, sondern beispielsweise nur diejenigen Fälle, die in der konkreten Anwendung der Spannungswandleranordnung tatsächlich vorkommen. Basierend darauf, welche der in den genannten Tabellen gezeigten Relation zwischen der Eingangsspannung und der Ausgangsspannung aktuell vorliegt, kann die Steuerung dann entscheiden, welches bzw. welche der Eingangsregelelemente bzw. Linearregler aktiviert werden sollen, also beispielsweise welcher bzw. welche der Linearregler für die Kompensation des Rippels des getakteten Spannungswandlers verwendet werden sollen.

Tabelle 2 zeigt beispielsweise Fälle 1 bis 5, die für eine Rippelstromkompensation nur an der Last verwendet werden. Ferner zeigt Tabelle 2 Fälle 6 bis 11, die für eine Rippelstromkompensation nur an der Eingangsseite (also bei der Eingangsspannungsquelle) verwendet werden. Fälle 11 bis 17 sind im Übrigen einsetzbar, falls sowohl eine Rippeistromkompensation am Eingang (also auf der Seite der Eingangsspannungsquelle) als auch am Ausgang (an der Last) erfolgen soll.

Somit ist darauf hinzuweisen, dass es ausreichend sein kann, wenn die Steuerung der Spannungswandleranordnung beispielsweise zwischen den Fällen 1 bis 5 umschalten kann oder wenn die Steuerung der Spannungswandleranordnung beispielsweise zwischen den Fällen 6 bis 10 umschalten kann, oder wenn die Steuerung der Spannungswandleranordnung beispielsweise zwischen den Fällen 11 bis 17 umschalten kann.

Weiterhin sei darauf hingewiesen, dass die Fälle 6 bis 10, wie sie in der Tabelle 2 gezeigt sind, beispielsweise den Fällen 1 bis 5, wie sie in der Tabelle 4 gezeigt sind, entsprechen können.

Im Übrigen können beispielsweise die Fälle 1 bis 4, wie sie in der Tabelle 3 gezeigt sind, den Fällen 6 bis 9 gemäß Tabelle 2 oder den Fällen 1 bis 4 gemäß der Tabelle 4 entsprechen, wobei bei dem Aufwärts-Wandler beispielsweise der Fall 5 gemäß Tabelle 4 oder der Fall 10 gemäß Tabelle 2 typischerweise in einem Regelbetrieb nicht auftritt, da bei einem Aufwärts-Wandler die Ausgangsspannung größer ist als die Eingangsspannung.

Ergänzend sei darauf hingewiesen, dass beispielsweise bei den Fällen 7 und 9 gemäß Tabelle 2 oder bei den Fällen 2 und 4 gemäß Tabelle 3 oder bei den Fällen 2 und 4 gemäß Tabelle 4 jeweils eine Abweichung von +/- 10% oder +/- 20%oder von +/-1V oder +/-2V oder +/-5V tolerierbar ist, so dass beispielsweise der Fall 2 gemäß Tabellen 3 und 4 durch die Steuerung der Spannungswandleranordnung ausgewählt werden kann, wenn die Eingangsspannung von der Ausgangsspannung um höchstens +/- 10% (oder um einen anderen vorgegebenen Toleranzwert) abweicht, und so dass beispielsweise der Fall 4 gemäß den Tabellen 3 und 4 durch die Steuerung der Spannungswandleranordnung gewählt werden kann, wenn die Eingangsspannung von der halben Ausgangsspannung höchstens um +/- 10% oder um +/- 20% (oder um einen anderen vorgegebenen Toleranzwert) abweicht.

Weiterhin sei darauf hingewiesen, dass die hierin beschriebenen Regelfunktionen optional natürlich auch durch andere Hardware-Anordnungen erzielt werden können, wobei beispielsweise der grundsätzliche Mechanismus, dass die Linearregler angesteuert werden, um ein festes oder einstellbares Verhältnis zwischen der Eingangsspannung und dem Eingangsstrom herzustellen, beibehalten werden sollte. Details im Hinblick auf die variable Spannungteilung sowie auf die Messung des Stroms können hier optional variiert werden. Auch die Fragestellung, wie bzw. inwieweit die Ströme durch die Eingangsregelelemente bzw. durch die Linearregler LR1, LR3, LR4 berücksichtigt werden, kann je nach den Gegebenheiten variiert werden.

## 3. Wirkungen und Vorteile

Im Folgenden werden einige Vorteile und Wirkungen von Ausführungsbeispielen gemäß der vorliegenden Erfindung erläutert. Es sei allerdings darauf hingewiesen, dass Ausführungsbeispiele gemäß der vorliegenden Erfindung nicht notwendigerweise die hierin beschriebenen Vorteile bzw. Wirkungen aufweisen müssen, und dass manche Ausführungsbeispiele beispielsweise die entsprechenden Vorteile und Wirkungen nur teilweise realisieren.

Die Vorteile von Ausführungsbeispielen der vorliegenden Erfindung sind insbesondere, dass die Vorteile eines linear unterstützten Schaltnetzteiles mit abwärts gewandelter Spannung vom Eingang zur Last (linear unterstützter Buck-Konverter bzw. Abwärtswandler) kombiniert werden mit einer Aufwärtswandlung der Spannung zur Last hin. Die Vorteile des linear unterstützten Abwärtswandler sind beispielsweise

- Ein hoher Wirkungsgrad, da lediglich der Schaltrippel durch den Linearregler kompensiert wird, nicht aber der gesamte Laststrom
- Eine extrem hohe Regeldynamik, da der Linearregler beispielsweise jede dynamische Laständerung und Eingangsspannungsänderung zu kompensieren imstande ist
- Die Einsparung von Eingangspufferkondensatoren, welche meist temperaturempfindlich, platzaufwendig und lebensdauerbegrenzend sind

Die Vorteile eines linear unterstützten Aufwärtswandlers, wie zum Beispiel des Boost-Konverters sind beispielsweise

- ein hoher Wirkungsgrad, da nur der Schaltrippel kompensiert wird und nicht der gesamte Eingangsstrom
- eine sehr hohe Regeldynamik, da die Linearregler auch dem hochfrequenten Schalten des Boost-Konverters folgen können, und nicht nur beispielsweise einer niederfrequenten sinusförmigen Eingangsstromkurve zur Leistungsfaktorkorrektur
- Die Einsparung von Eingangsfilterkondensatoren vor oder nach einem Eingangsgleichrichter im Falle einer sinusförmigen Eingangsspannung, und vor allem die Einsparung von Netzfilterdrosseln für den Fall eines Wechselstromoder Gleichstromnetzes

Diese Vorteile werden durch die Erfindung eines linear unterstützten SEPIC-Konverters erweitert, beispielsweise indem

- eine Aufwärtswandlung wie auch eine Abwärtswandlung der Spannung erreicht bzw. ermöglicht wird
- eine galvanische Trennung durch eine vergleichsweise kleine Koppelkapazität den Einschaltstrom beim Anlegen der Eingangsspannung verhindert
- eine Verbesserung des Wirkungsgrades gegenüber einem linear unterstützten Boost-Konverter in bestimmten Betriebsbereichen erreicht wird, indem bei typischen Anwendungen der Leistungsfaktorkorrektur am Netzeingang einer sinusförmigen Spannung die Ausgangsspannung etwa halb so groß wie den Maximalwert der Eingangsspannung gewählt wird, oder etwa der Funktion $\Delta V_{out} = V_{in} - V_{in\_min}$ folgen.

## 4. Alternative Lösungen

Wie im Folgenden ausgeführt wird, ist es schwierig, alternative Lösungen zu finden, die keine wesentlichen Nachteile aufweisen (und die beispielsweise eine Umgehung der Erfindung ermöglichen würden).

Die Erfindung kann nur umgangen werden indem der Aufwand gegenüber der erfindungsgemäßen Schaltungsausführung erhöht wird. Beispielsweise kann man die lineare Assistenz, also die Linearregler, oder Regelelemente, aus Hilfsquellen und nicht wie in der Erfindung aus der Wandleranordnung selbst, bereitstellen, was einen erhöhten Aufwand bedeutet. Dieses ist in aller Regel nicht wirtschaftlich.

## 5. Wichtige Aspekte von Ausführungsbeispielen

Im Folgenden werden einige wichtige Aspekte erläutert, die optional bei Ausführungsbeispielen der Erfindung verwirklicht sein können.

Ein Ausführungsbeispiel gemäß der Erfindung lässt sich gut erkennen, indem eine entsprechender Spannungswandler bezüglich folgender elektrischer Merkmale getestet bzw. gemessen wird:

Die Ausgangsgleichspannung ist bevorzugt größer als die Eingangsgleichspannung des Wandlers und zugleich kann bevorzugt ein rippelfreier Gleichstrom an einer Ausgangslast gemessen werden, wobei die Ausgangslast direkt mit einer Induktivität des Wandlers verbunden ist, was optisch und elektrisch leicht nachgewiesen werden kann. Oder es kann die Eingangsgleichspannung größer oder kleiner oder gleich der Ausgangsspannung sein und es kann ein rippelfreier Gleichstrom am Eingang gemessen werden, wobei die Eingangsquelle direkt mit einer Induktivität des Wandlers verbunden ist. Zugleich sollte der Schaltungsaufwand dem eines etwa leistungsgleichen PWM-Wandlers entsprechen und sollte nicht deutlich größer als bei einem solchen sein. Das größte Potenzial der Ausgangsspannung (Pluspol) sollte nicht auf Masse oder unterhalb des niedrigsten Potenzials der Eingangsspannung (Minuspol) liegen. Das größte Potenzial der Eingangsspannung (Pluspol) sollte ebenso nicht auf Masse oder unterhalb des niedrigsten Potenzials der Ausgangsspannung (Minuspol) liegen.

## 6. Technisches Anwendungsgebiet

Die Anwendung der Erfindung wird beispielsweise in folgenden typischen Applikationen gesehen:

1. Schaltnetzteile für Solar-Mikro-Inverter
2. Vollständig Integrierte Stromversorgungen auf Chips
3. Schaltnetzteile für Explosionsschutz ohne Elektrolytkondensatoren
4. Hochstabile Spannungsversorgungen für medizinische und Labor-Anwendungen
5. Leistungsfaktorkorrektur für sinusförmige und andere Eingangsspannungsverläufe
6. Präzisions-Stromsenken für beliebige Eingangsstromkurven

1. Für sogenannte Mikro-Inverter von Solaranlagen wird die Erfindung eingesetzt um die Pufferkondensatoren zu vermeiden oder extrem zu verkleinern. Dabei wird die Eigenschaft des Zeta-Konverters genutzt, die Spannung von einem Solarpanel hochzusetzen um einen Wechselrichter mit Netzspannungsausgang zu betreiben. Der Solarumrichter wird dadurch in einem kleineren Volumen realisierbar indem die volumenintensiven Pufferkondensatoren eingespart werden. Zugleich erhöht sich damit die Lebensdauer des Mikro-Inverters, da Elektrolytkondensatoren meist zuerst ausfallen.

2. Vollständig integrierte Stromversorgungen auf Chips können heute mit Schaltfrequenzen von mehr als 100 MHz betrieben werden, indem integrierte Induktivitäten auf Treiberchips mit Si-CMOS oder GaN auf Si-NMOS - Technologien Verwendung finden, welche Schaltflanken von > 10 V/ns zulassen. Durch Eliminierung von Ausgangskondensatoren kann sowohl das Bauvolumen extrem verkleinert werden, wenn mehrerer Stromversorgungen in einem Gerät erforderlich sind um verschiedene Spannungen, beispielsweise für Controller und Sensorik zur Verfügung zu stellen. Solche Versorgungen tragen der ständigen Verkleinerung von Kommunikationsgeräten Rechnung.

3. Explosionsgeschützte Schaltnetzteile müssen sehr aufwendig verkapselt werden und sind nur bis zu einer bestimmten Temperatur zuverlässig. Im Brandfall können vor allem Elektrolytkondensatoren bei hoher Temperatur ausfallen oder auch explodieren. Der geringe Mehraufwand eines linear unterstützten Wandlers und geringe zusätzliche Verluste in den Linearreglern lassen sich tolerieren indem damit eine erhöhte Zuverlässigkeit und eine deutlich höhere Temperatur erlaubt werden kann ohne dass die Stromversorgung ausfällt. Vor allem für sicherheitsrelevante Anwendungen (Sicherheitssystem für Brandfall usw.) bietet die Erfindung die Möglichkeit der Versorgung aus kleinen oder stark absinkenden Versorgungsspannungen, welche ein linear unterstützter Abwärtswandler nicht zur Verfügung stellen kann, und welche durch einen anderen Aufwärtswandler (Boost-Wandler, Sepic-Wandler, konventioneller Cuk-Wandler) mit linearer Unterstützung nicht mit ausreichend hoher Effizienz erreicht werden kann.

4. Spannungsversorgungen für medizinische Anwendungen müssen oftmals sehr stabil sein um die hohen Anforderungen an Zuverlässigkeit zu erfüllen. Gleichzeitig wird eine hohe Miniaturisierung verlangt um bei batterieversorgten Geräten in kleinsten Abmessungen zu operieren und zusätzlich die Erwärmung durch Verluste so gering wie möglich zu halten (hoher Wirkungsgrad). Dazu rechtfertigt sich die Einsparung von Kondensatoren ebenso wie die sichere Aufwärtswandlung einer Spannung auch bei absinkender Batteriespannung.

5. Leistungsfaktorkorrektur bis zu einer Leistung von einigen Hundert Watt erfordert sehr oft zusätzliche Netzfilter, welche einen großen Teil des Gerätes mit Anteilen bis ca. 30% ausmachen können. Durch die vorliegenden Erfindung werden solche Netzfilter komplett eingespart, da Linearregler auch hochfrequente Harmonische kompensieren können ohne dass die induktiven Bauelemente der PFC-Stufe (Drosseln) signifikant vergrößert werden müssen, so dass eine Volumeneinsparung und Kosteneinsparung erreicht wird.

6. In der Messtechnik werden Präzisionsstromsenken meist unter hohen Verlustleistungen über Verstärkerklasse A, B oder AB realisiert, welche in der Leistung damit begrenzt sind und eine hohe Verlustleistung erzeugen. Dieser Nachteil wird durch die vorliegende Erfindung überwunden indem die Stromkurve des aus einer zu prüfenden Quelle entnommenen Laststromes durch einen Schaltregler verlustarm entnommen wird, und der zugleich auftretende Rippelstrom durch Linearregler kompensiert wird.

Zusammenfassend ist somit festzuhalten, dass die Spannungswandleranordnungen, die hierin beschrieben sind, in all den oben genannten Anwendungen (sowie natürlich auch in weiteren Anwendungen) vorteilhaft eingesetzt werden können.

## 7. Weitere Aspekte

Weitere Ausführungsbeispiele gemäß der Erfindung werden durch die beigefügten Patentansprüche definiert.

Es sei darauf hingewiesen, dass die Ausführungsbeispiele gemäß den Ansprüchen mit allen Merkmalen, Funktionalitäten und Details ergänzt werden können, die hierin beschrieben sind (jedenfalls soweit dies nicht zu irgendwelchen Widersprüchen führt).

Merkmale, Funktionalitäten und Details der Ansprüche können auch mit den Hierin beschriebenen Ausführungsbeispielen kombiniert werden, um zusätzliche Ausführungsbeispiele zu erhalten.

Es sei darauf hingewiesen, dass Merkmale und Funktionalitäten, die in einzelnen oder einigen der Ausführungsbeispielen gezeigt sind, auch in anderen der Ausführungsbeispiele eingesetzt werden können, soweit dem keine gravierenden technischen Gründe entgegenstehen.

Weiterhin sei darauf hingewiesen, dass auch Teil-Funktionalitäten der hierin beschriebenen Ausführungsbeispiele eingesetzt werden können, sofern dem keine wesentlichen technischen Gründe entgegenstehen.

## 8. Weitere Details und Anmerkungen

Die Fig. 13 und 15 enthalten zusätzliche Bausteine, wie das proportionale Verhältnis zwischen Eingangsspannung und Eingangsstrom, die Kompensation des an die Ausgangsleistung angepassten Proportionalitätsfaktors nach Gleichung (4) durch einen zeitlich verzögernden Low-Pass-Filter (Tiefpassfilter), sowie die gegenüber dem Low-Pass-Filter nochmals verzögerten Regelgeschwindigkeit des Regler "Control" bzw. "Regelung" gegenüber der auftretenden Eingangsfrequenz der Spannung Vin bzw. VinAC um die PFC zu gewährleisten, indem der Strom der Eingangsquelle etwa dem sinusförmigen Verlauf der Eingangsspannung folgt.

Einige wichtige (aber nicht essentielle) Aspekte bei Ausführungsbeispielen gemäß den Fig. 13 und 15 bestehen beispielsweise in Folgenden:

- der Schaltungstechnik der invertierenden Verstärker; und/oder
- der Steuerung der Linearregler einmal auf dem Potenzialniveau des positiven Eingangsknotens mit kleiner Spannung +/- 5 bis 10 Volt um diesen Knoten herum; und/oder
- der Korrektur der Spannungsreferenz (oder auch der Stromreferenz, die in den Figuren nicht gezeigt ist) durch Strommessung in den Linearreglern; und/oder
- der Regelgeschwindigkeit der Linearregler als größtmögliche gegenüber der verzögerten Regelgeschwindigkeit der der Anpassung der Spannungsreferenz Vuref (oder Stromreferenz Viref) zur Einstellung des leistungsabhängigen Eingangsstromes und Minimierung der Verluste in den Linearreglern durch ausschließliche Rippelkompensation ohne Gleichanteil; und/oder
- der Regelgeschwindigkeit der Schalreglers für die Leistungsfaktorkorrektur als noch kleiner gegenüber der Regelgeschwindigkeit zur Anpassung des Referenzwertes zur Einstellung des leistungsabhängigen Eingangsstromes um den Leistungsfaktor zu maximieren; und/oder
- der Ausführung der Eingangsquelle Vin durch eine gleichgerichtete Wechselspannung.

Weitere wichtige (aber nicht essentielle) Aspekte bestehen in Folgendem:

- der Implementierung der Ansteuerung von LR3 und LR4 mit den Verstärkern Amp und Ampl zur Proportionalität von Strom und Spannung,
- der Darstellung der Quelle Vin als Brückengleichrichter aus dem Netzeingang,
- der Regelung der Referenz des Proportionalitätsfaktors zwischen Spannung und Strom durch Veränderung des Spannungsteilers (oder des Stromverstärkers) mit Hilfe von invertierenden Verstärkern, welche mit einem Tiefpass nur Frequenzen unterhalb der Schaltfrequenz des Schaltreglers verstärken um die Leistung aus der Eingangsquelle an die Leistung des Ausganges vom Schaltregler (RL) anzupassen.

Gemäß einem weiteren Aspekt können eine oder mehrere Schalttransistoren der Schaltregler (beispielsweise der getakteten Spannungswandler) (oder sogar alle Schalttransistoren der Schaltregler) Galliumnitrid (GaN)-Transistoren oder Siliziumkarbid (SiC)-Transistoren sein.

Gemäß einem weiteren Aspekt können eine oder mehrere Dioden bzw. Gleichrichterdioden der Schaltregler (beispielsweise der getakteten Spannungswandler) (oder sogar alle Dioden bzw. Gleichrichterdioden der Schaltregler) Galliumnitrid (GaN)-Dioden oder Siliziumkarbid (SiC)-Dioden sein.

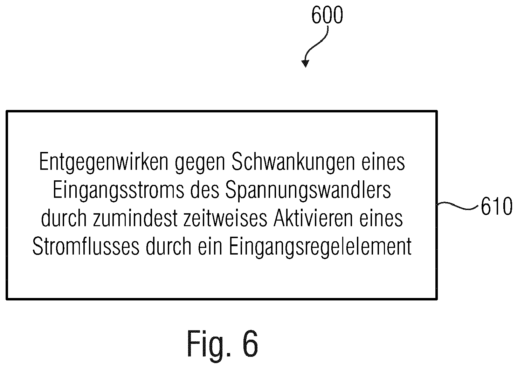

## 9. Verfahren gemäß Fig. 6

Fig. 6 zeigt ein Flussdiagramm eines Verfahrens 600 gemäß einem Ausführungsbeispiel der vorliegenden Erfindung.

Fig. 6 zeigt ein Verfahren zum Betrieb einer Spannungswandleranordnung mit einem getakteten Spannungswandler und einem ersten Eingangsregelelement, das zwischen einen ersten Eingangsspannungsknoten und einen zweiten Eingangsspannungsknoten geschaltet ist, wobei der zweite Eingangsspannungsknoten ein Bezugspotential aufweist. Das Verfahren umfasst ein Entgegenwirken 610 gegen Schwankungen eines Eingangsstroms des Spannungswandlers (bzw. der Spannungswandleranordnung) durch zumindest zeitweises Aktivieren eines Stromflusses durch das Eingangsregelelement.

Das Verfahren 600 gemäß Fig. 6 kann optional um alle Merkmale, Funktionalitäten und Details ergänzt werden, die hierin beschrieben sind. Insbesondere kann das Verfahren 600 auch um Merkmale und Details ergänzt werden, die hierin in Bezug auf die Spannungswandleranordnungen beschrieben sind. Das Verfahren 600 kann im Übrigen auch in Verbindung mit den entsprechenden Spannungswandleranordnungen, die hierin beschrieben sind, verwendet werden.

## 10. Schlussfolgerungen

Zusammenfassend ist somit festzuhalten, dass Ausführungsbeispiele gemäß der Erfindung einen Stromrippel am Eingang (beispielsweise einer Spannungswandleranordnung) unterdrücken, indem der Stromrippel aus einer Quelle, die beispielsweise (aber nicht notwendigerweise) größer als die momentane Eingangsspannung eines sinusförmigen Verlaufs ist, durch einen Linearregler kompensiert wird. Diesbezüglich waren bisher keine technischen Lösungen bekannt.

Ausführungsbeispiele der vorliegenden Erfindung ermöglichen es damit, Vorteile eines Schaltreglers und eines Linearreglers gleichzeitig zu nutzen und deren Nachteile jeweils zu vermeiden. Gewünschte Vorteile (die bei Ausführungsbeispiele gemäß der vorliegenden Erfindung erreicht werden können) sind somit ein hoher Wirkungsgrad, die Vermeidung größer Glättungskapazitäten, die Vermeidung von Netzfiltern, eine hohe Regeldynamik, rippelfreier Gleichstrom und rippelfreie Gleichspannung an der Ausgangslast oder an der Eingangsquelle oder beliebig wählbare Eingangsspannung gegenüber der Ausgangsspannung.

Es sei darauf hingewiesen, dass bei Ausführungsbeispielen der Erfindung optional einer oder mehrere der genannten Vorteile erzielt werden können. Ausführungsbeispiele gemäß der vorliegenden Erfindung beseitigen somit neben allen oder zumindest einigen Nachteilen, welche durch den Stand der Technik bzw. durch herkömmliche Lösungen bezüglich des beschriebenen technischen Problems beseitigt werden, beispielsweise zuerst den Nachteil, dass der Stromrippel am Eingang des Schaltreglers durch einen Linearregler kompensiert wird. Im anderen Worten, Ausführungsbeispiele gemäß der vorliegenden Erfindung beseitigen neben allen oder zumindest einigen Nachteilen, welche durch den Stand der Technik bezüglich des beschriebenen technischen Problems beseitigt werden, wesentliche Nachteile, indem der Stromrippel am Eingang des Schaltreglers (beispielsweise des getakteten Spannungswandlers) durch einen Linearregler kompensiert wird. Zusätzlich wird bei den Ausführungsbeispielen die Einschränkung beseitigt, dass die Eingangsspannung größer als die Ausgangsspannung des Konverters sein muss.

Zusammenfassend ist somit festzuhalten, dass Ausführungsbeispiele gemäß der vorliegenden Erfindung einen wesentlich verbesserten Kompromiss zwischen Effizienz, Realisierungsaufwand und Störungsunterdrückung liefern als herkömmliche Spannungswandler.

Referenzen

[1] H. Martinez-Garcia: Capacitorless DC-DC Regulator as a Candidate Topology for Photovoltaic Solar Facilities, International Conference on Renewable Energies and Power Quality (ICREPQ14), La Coruna, Spain, 25th-27th March 2015

[2] H. Martinez-Garcia, Antoni Grau-Saldes: Linear-Assisted DC/DC Converters with Variable Frequency: On their Complex Control Strategies, (COMPENG 2014) Proceedings 2014 Complexity in Engineering, 978-1-4799-4079-0/14/$31.00, IEEE

[3] H. Martinez-Garcia, Alireza Saberkari: Four-Quadrant Linear-Assisted DC/DC Voltage Regulator, Mixed Signal Letter, Analog Integr Circ Sig Process (2016), 88: pp 151-160, DOI 10.1007/s10470-016-0747-8, Springer-Verlag

[4] Application Note AN3180: A 200 W ripple-free input current PFC pre-regulator with the L6563S, ST Microelectronics 2010, Doc ID 17273 Rev 1

[5] Jeff Falin: Designing DC/DC converters based on ZETA topology, Application Note "High-Performance Analog Products" www.ti.com/aaj 2Q 2010, Analog Applications Journal, Texas Instruments 2010

[6] S.Subasree, A.Balamani: "Energy Efficient Zeta Converter with Coupled Inductor for PV Applications", International Journal for Research and Development in Engineering (IJRDE) www.ijrde.com ISSN: 2279-0500 Special Issue: pp- 076-082, Methods Enriching Power and Energy Development (MEPED) 2014

[7] ON Semiconductor, Application Note AND8481/D: A High-Efficiency, 300 W Bridgeless PFC Stage

[8] NXP Semiconductors: Totem-Pole Bridgeless PFC Design Using MC56F82748, Design Reference Manual, Document Number: DRM174, Rev. 0, 11/2016

[9] Jae-Won Yang and Hyun-Lark Do, Bridgeless SEPIC Converter With a Ripple-Free Input Current, IEEE TRANSACTIONS ON POWER ELECTRONICS, VOL. 28, NO. 7, JULY 2013

[10] Yungtaek Jang and Milan M. Jovanovic , Bridgeless Buck PFC Rectifier, 978-1-4244-4783-1/10/$25.00 ©2010 IEEE

**Patentansprüche**

**1.** Eine Spannungswandleranordnung (500; 1000; 1200; 1300; 1380; 1390; 1395; 1400; 1500;1580;1590), mit folgenden Merkmalen:

einem getakteten Spannungswandler (510; 1030; 1330; 1330′; 1330″; 1330‴; 1530; 1530′), der in der Lage ist basierend auf einer Eingangsspannung ($U_{ein}$, $V_{in}$; $V_{IN}$) eine Ausgangsspannung ($V_{aus}$; $V_{out}$; $V_{Out}$) zu erzeugen; und

einem ersten Eingangsregelelement (LR4; 520; 1050;1250; 1350; 1550), das zwischen einen ersten Eingangsspannungsknoten (504; 1032; 1232; 1332; 1432; 1532) und einen zweiten Eingangsspannungsknoten (506; 1034; 1234; 1334; 1434; 1534) geschaltet ist, wobei der zweite Eingangsspannungsknoten ein Bezugspotential aufweist,

wobei das erste Eingangsregelelement (LR4) ausgelegt ist, um einen Stromfluss ($I_{regel}$; $I_{LR4}$) zu ermöglichen, um Schwankungen eines Eingangsstroms ($I_{ein}$; $I_{IN}$; $I_{in}$) der Spannungswandleranordnung entgegenzuwirken.

2. Spannungswandleranordnung (500; 1000; 1200; 1300; 1380; 1390; 1395; 1400; 1500;1580;1590) gemäß Anspruch 1,

wobei die Spannungswandleranordnung ausgelegt ist, um einen Stromfluss ($I_{LR3}$) über ein zweites Eingangsregelelement (LR3; 1060;1260;1360; 1560) zu ermöglichen, um Schwankungen des Eingangsstroms der Spannungswandleranordnung entgegenzuwirken;
wobei die Spannungswandleranordnung das zweite Eingangsregelelement (LR3) aufweist, und wobei das zweite Eingangsregelelementzwischen den ersten Eingangsspannungsknoten (504; 1032; 1232; 1332; 1432; 1532) und einem ersten Ausgangsspannungsknoten (1042; 1242; 1342; 1542) geschaltet ist, wobei der erste Ausgangsspannungsknoten ein Potential aufweist, das sich von dem Bezugspotential unterscheidet, und
wobei das zweite Eingangsregelelement (LR3) ausgelegt ist, um zumindest zeitweise einen Stromfluss ($I_{LR3}$) zwischen dem ersten Ausgangsspannungsknoten und dem ersten Eingangsspannungsknoten zu ermöglichen;
wobei das zweite Eingangsregelelement (LR3) ausgelegt ist, um einen Stromfluss ($I_{LR3}$) zwischen dem ersten Eingangsspannungsknoten und dem ersten Ausgangsspannungsknoten zu ermöglichen, um Schwankungen des Eingangsstroms der Spannungswandleranordnung entgegenzuwirken.

3. Spannungswandleranordnung (500; 1000; 1200; 1300; 1380; 1390; 1395; 1400; 1500;1580;1590) gemäß Anspruch 1 oder 2, wobei die Spannungswandleranordnung so ausgelegt ist, dass ein Eingangsstrom ($I_{takt}$) des getakteten Spannungswandlers, abgesehen von Stromschwankungen, die höchstens 10 % einer Stromamplitude des Eingangsstroms des getakteten Spannungswandlers betragen, in einem Zeitabschnitt proportional zu einer Eingangs-spannung ($U_{ein}$, $V_{in}$; $V_{IN}$) verläuft, wobei eine Frequenz der Eingangsspannung kleiner ist als eine Schaltfrequenz des getakteten Spannungswandlers,
wobei die Spannungswandleranordnung ausgelegt ist, um einen Stromfluss durch das erste Eingangsregelelement (LR4; 520; 1050;1250; 1350; 1550) so anzupassen, dass der Stromfluss durch das erste Eingangsregelelement (LR4) zumindest zeitweise den Stromschwankungen des Eingangsstroms des getakteten Spannungswandlers entgegenwirkt.

4. Spannungswandleranordnung (500; 1000; 1200; 1300; 1380; 1390; 1395; 1400; 1500;1580;1590) gemäß einem der Ansprüche 1 bis 3,

wobei die Spannungswandleranordnung ein drittes Eingangsregelelement (LR1; 1070; 1470; 1570) aufweist, wobei das dritte Eingangsregelelement zwischen den ersten Eingangsspannungsknoten (504; 1032; 1232; 1332; 1432; 1532) und einen ersten Ausgangsspannungsknoten (1042; 1242; 1342;1542) geschaltet ist, wobei der erste Ausgangsspannungsknoten ein Potential aufweist, das sich von dem Bezugspotential unterscheidet, und
wobei das dritte Eingangsregelelement (LR1) ausgelegt ist, um zumindest zeitweise einen Stromfluss ($I_{LR1}$) zwischen dem ersten Eingangsspannungsknoten und dem ersten Ausgangsspannungsknoten zu ermöglichen, der einen Stromfluss ($I_{LR3}$) durch das zweite Eingangsregelelement (LR3; 1060;1260;1360; 1560) entgegengerichtet ist;
wobei die Spannungswandleranordnung das zweite Eingangsregelelement (LR3) aufweist, und wobei das zweite Eingangsregelelement zwischen den ersten Eingangsspannungsknoten und den ersten Ausgangsspannungsknoten geschaltet ist,
wobei die Spannungswandleranordnung ausgelegt ist, um einen Stromfluss ($I_{LR3}$) über das zweite Eingangsregelelement (LR3) zu ermöglichen, wenn die Eingangsspannung ($U_{ein}$, Vin; $V_{IN}$) der Spannungswandleranordnung größer ist als eine Differenz der Ausgangsspannung ($V_{aus}$; $V_{out}$; $V_{Out}$) der Spannungswandleranord-nung und der Eingangsspannung ($U_{ein}$, $V_{in}$; $V_{IN}$),
wobei die Spannungswandleranordnung ausgelegt ist, um einen Stromfluss ($I_{LR4}$) über das erste Eingangsregelelement (LR4) zu ermöglichen, wenn die Eingangsspannung von der Ausgangsspannung um höchstens 10% oder um höchstens eine vorgegebene Abweichung abweicht,
wobei die Spannungswandleranordnung ausgelegt ist, um einen Stromfluss ($I_{LR4}$) über das erste Eingangsregelelement (LR4) zu ermöglichen, wenn die Eingangsspannung ($U_{ein}$, $V_{in}$; $V_{IN}$) kleiner ist als die Differenz der Ausgangsspannung ($V_{aus}$; $V_{out}$; $V_{Out}$) und der Eingangsspannung ($U_{ein}$, $V_{in}$; $V_{IN}$),
wobei die Spannungswandleranordnung ausgelegt ist, um einen Stromfluss ($I_{LR3}$) über das zweite Eingangsregelelement (LR3) und das erste Eingangsregelelement (LR4) zu ermöglichen, wenn die Eingangsspannung ($U_{ein}$, $V_{in}$; $V_{IN}$) um höchstens 10% oder um höchstens eine vorgegeben Abweichung von der Hälfte der Aus-

gangsspannung (V$_{aus}$; V$_{out}$; V$_{Out}$) abweicht,
wobei die Spannungswandleranordnung ausgelegt ist, um einen Stromfluss über das dritte Eingangsregelelement (LR1) zu ermöglichen, wenn die Eingangsspannung (U$_{ein}$, V$_{in}$; V$_{IN}$) größer ist als die Ausgangsspannung (V$_{aus}$; V$_{out}$; V$_{Out}$).

5. Spannungswandleranordnung (500; 1000; 1200; 1300; 1380; 1390; 1395; 1400; 1500;1580;1590) gemäß einem der Ansprüche 1 bis 4,

wobei die Spannungswandleranordnung ein zweites Eingangsregelelement (LR3; 1060;1260;1360; 1560) aufweist, das zwischen den ersten Eingangsspannungsknoten (504; 1032; 1232; 1332; 1432; 1532), und einen ersten Ausgangsspannungsknoten (1042; 1242; 1342;1542), der von einem Bezugspotentialknoten verschieden ist, geschaltet ist,
wobei der getaktete Spannungswandler ausgelegt ist, um in einem Betriebszustand, in dem ein Betrag der Eingangsspannung (U$_{ein}$, V$_{in}$; V$_{IN}$) einem Betrag einer Potentialdifferenz zwischen dem ersten Eingangsspannungsknoten und dem ersten Ausgangsspannungsknoten entspricht, und in dem der Betrag der Eingangsspannung kleiner ist als ein Betrag der Ausgangsspannung (V$_{aus}$; V$_{out}$; V$_{Out}$), einen pulsierenden Eingangsstrom (I$_{takt}$) aufzuweisen,
wobei das erste Eingangsregelelement und das zweite Eingangsregelelement ausgelegt sind, um in dem Betriebszustand, in dem der Betrag der Eingangsspannung dem Betrag der Potentialdifferenz zwischen dem ersten Eingangsspannungsknoten und dem ersten Ausgangsspannungsknoten entspricht, und in dem der Betrag der Eingangsspannung kleiner ist als der Betrag der Ausgangsspannung, Schwankungen des Eingangsstroms (I$_{takt}$) des getakteten Spannungswandlers zumindest teilweise zu kompensieren, indem das erste Eingangsregelelement (LR4) einen zeitlich pulsierenden Stromfluss (IL$_{R4}$) zwischen dem ersten Eingangsspannungsknoten und dem Bezugspotentialknoten (506; 1034; 1234; 1334; 1434; 1534) ermöglicht, und indem das zweite Eingangsregelelement (LR3) einen zeitlich pulsierenden Stromfluss (I$_{LR3}$) zwischen dem ersten Ausgangsspannungsknoten und dem ersten Eingangsspannungsknoten ermöglicht,
wobei der pulsierende Stromfluss (I$_{LR3}$) durch das zweite Eingangsregelelement (LR3) und der pulsierende Stromfluss (I$_{LR4}$) durch das erste Eingangsregelelement (LR4) sich zeitlich abwechseln.

6. Spannungswandleranordnung (500; 1000; 1200; 1300; 1380; 1390; 1395; 1400; 1500;1580;1590) gemäß einem der Ansprüche 1 bis 5,

wobei die Spannungswandleranordnung ein zweites Eingangsregelelement (LR3; 1060;1260;1360; 1560) aufweist, das zwischen den ersten Eingangsspannungsknoten (504; 1032; 1232; 1332; 1432; 1532), und einen ersten Ausgangsspannungsknoten (1042; 1242; 1342;1542), der von einem Bezugspotentialknoten 506; 1034; 1234; 1334; 1434; 1534; 1044; 1244; 1344; 1544) verschieden ist, geschaltet ist,
wobei der getaktete Spannungswandler ausgelegt ist, um in einem Betriebszustand, in dem ein Betrag der Eingangsspannung (U$_{ein}$, V$_{in}$; V$_{IN}$) größer ist als ein Betrag der Potentialdifferenz zwischen dem ersten Eingangsspannungsknoten (504; 1032; 1232; 1332; 1432; 1532) und dem ersten Ausgangsspannungsknoten(1042; 1242; 1342;1542), und in dem der Betrag der Eingangsspannung kleiner ist als ein Betrag der Ausgangsspannung (V$_{aus}$; V$_{out}$; V$_{Out}$),
einen pulsierenden Eingangsstrom aufzuweisen,
wobei das zweite Eingangsregelelement (LR3; 1060;1260;1360; 1560) ausgelegt ist, um in dem Betriebszustand, in dem der Betrag der Eingangsspannung größer ist als der Betrag der Potentialdifferenz zwischen dem ersten Eingangsspannungsknoten und dem ersten Ausgangsspannungsknoten, und in dem der Betrag der Eingangsspannung kleiner ist als der Betrag der Ausgangsspannung, Schwankungen des Eingangsstroms (I$_{takt}$) des getakteten Spannungswandlers (510; 1030; 1330; 1330′; 1330″; 1330‴; 1530; 1530′) zumindest teilweise zu kompensieren, indem das zweite Eingangsregelelement (LR3) einen zeitlich pulsierenden Stromfluss (I$_{LR3}$) zwischen dem ersten Ausgangsspannungsknoten und dem ersten Eingangsspannungsknoten ermöglicht.

7. Spannungswandleranordnung (500; 1000; 1200; 1300; 1380; 1390; 1395; 1400; 1500;1580;1590) gemäß einem der Ansprüche 1 bis 6,

wobei der getaktete Spannungswandler (510; 1030; 1330; 1330′; 1330″; 1330‴; 1530; 1530′) ausgelegt ist, um in einem Betriebszustand, in dem ein Betrag der Eingangsspannung (U$_{ein}$, V$_{in}$; V$_{IN}$) einem Betrag der Ausgangsspannung (V$_{aus}$; V$_{out}$; V$_{Out}$) entspricht, einen pulsierenden Eingangsstrom (I$_{takt}$) aufzuweisen,
wobei das erste Eingangsregelelement (LR4; 520; 1050;1250; 1350; 1550) ausgelegt ist, um in dem Betriebszustand, in dem der Betrag der Eingangsspannung einem Betrag der Ausgangsspannung entspricht, Schwankungen des Eingangsstroms des getakteten Spannungswandlers zumindest teilweise zu kompensieren, indem das erste Eingangsregelelement (LR4) einen zeitlich pulsierenden Stromfluss ($I_{LR4}$) zwischen dem ersten Eingangsspannungsknoten (504; 1032; 1232; 1332; 1432; 1532) und dem Bezugspotentialknoten (506; 1034; 1234; 1334; 1434; 1534; 1044; 1244; 1344; 1544) ermöglicht.

8. Spannungswandleranordnung (500; 1000; 1200; 1300; 1380; 1390; 1395; 1400; 1500;1580;1590) gemäß einem der Ansprüche 1 bis 7,

   wobei der getaktete Spannungswandler ausgelegt ist, um in einem Betriebszustand, in dem ein Betrag der Eingangsspannung ($U_{ein}$, $V_{in}$; $V_{IN}$) kleiner ist als ein Betrag der Potentialdifferenz zwischen dem ersten Eingangsspannungsknoten (504; 1032; 1232; 1332; 1432; 1532) und dem ersten Ausgangsspannungsknoten (1042; 1242; 1342;1542), und in dem der Betrag der Eingangsspannung kleiner ist als ein Betrag der Ausgangsspannung,
   einen pulsierenden Eingangsstrom ($I_{takt}$) zu aufzuweisen,
   wobei das erste Eingangsregelelement (LR4; 520; 1050;1250; 1350; 1550) ausgelegt ist, um in dem Betriebszustand, in dem der Betrag der Eingangsspannung ($U_{-ein}$, $V_{in}$; $V_{IN}$) kleiner ist als der Betrag der Potentialdifferenz zwischen dem ersten Eingangsspannungsknoten (504; 1032; 1232; 1332; 1432; 1532) und dem ersten Ausgangsspannungsknoten (1042; 1242; 1342;1542), und in dem der Betrag der Eingangsspannung kleiner ist als der Betrag der Ausgangsspannung, Schwankungen des Eingangsstroms ($I_{takt}$) des getakteten Spannungswandlers zumindest teilweise zu kompensieren, indem das erste Eingangsregelelement (LR4) einen zeitlich pulsierenden Stromfluss ($I_{LR4}$) zwischen dem ersten Eingangsspannungsknoten und dem Bezugspotentialknoten (506; 1034; 1234; 1334; 1434; 1534; 1044; 1244; 1344; 1544) ermöglicht.

9. Spannungswandleranordnung (500; 1000; 1200; 1300; 1380; 1390; 1395; 1400; 1500;1580;1590) gemäß einem der Ansprüche 1 bis 8,

   wobei die Spannungswandleranordnung ein drittes Eingangsregelelement (LR1; 1070; 1470; 1570) aufweist,
   wobei das dritte Eingangsregelelement zwischen dem ersten Eingangsspannungsknoten (504; 1032; 1232; 1332; 1432; 1532) und einem ersten Ausgangsspannungsknoten (1042; 1242; 1342;1542) geschaltet ist,
   wobei der getaktete Spannungswandler ausgelegt ist, um in einem Betriebszustand, in dem ein Betrag der Eingangsspannung ($U_{ein}$, $V_{in}$; $V_{IN}$) größer ist als ein Betrag der Ausgangsspannung, einen pulsierenden Eingangsstrom ($I_{takt}$) aufzuweisen,
   wobei das dritte Eingangsregelelement (LR1) ausgelegt ist, um in dem Betriebszustand, in dem der Betrag der Eingangsspannung größer ist als der Betrag der Ausgangsspannung, Schwankungen des Eingangsstroms des getakteten Spannungswandlers zumindest teilweise zu kompensieren, indem das dritte Eingangsregelelement (LR1) einen zeitlich pulsierenden Stromfluss ($I_{LR1}$) zwischen dem ersten Eingangsspannungsknoten und dem ersten Ausgangsspannungsknoten ermöglicht.

10. Spannungswandleranordnung (500; 1000; 1200; 1300; 1380; 1390; 1395; 1400; 1500;1580;1590) gemäß einem der Ansprüche 1 bis 9,

    wobei die Spannungswandleranordnung ausgelegt ist, um einen Eingangsstrom ($I_{ein}$; $I_{IN}$; $I_{in}$) aufzunehmen, so dass ein zeitlicher Verlauf des Eingangsstroms zumindest in einem Zeitabschnitt etwa proportional zu einer Eingangsspannung ($U_{ein}$, $V_{in}$; $V_{IN}$) ist, wobei eine Frequenz der Eingangsspannung kleiner ist als eine Schaltfrequenz des getakteten Spannungswandlers (510; 1030; 1330; 1330′; 1330″; 1330‴; 1530; 1530′),
    und
    wobei die Spannungswandleranordnung so ausgelegt ist, dass ein pulsierender Verlauf eines Eingangsstromes ($I_{ein}$; $I_{IN}$; $I_{in}$) der Spannungswandleranordnung in einem ersten Zeitbereich, der einem Nullwert der Sinus-Halbwelle benachbart ist, und der sich über eine Mehrzahl von Perioden des Eingangsstromes ($I_{takt}$) des getakteten Spannungswandlers (510; 1030; 1330; 1330′; 1330″; 1330‴; 1530; 1530′) erstreckt, betragsmäßig größer ist als der Eingangsstrom ($I_{takt}$) des getakteten Spannungswandlers.

11. Spannungswandleranordnung (500; 1000; 1200; 1300; 1380; 1390; 1395; 1400; 1500;1580;1590) gemäß einem der Ansprüche 1 bis 10, wobei die Spannungswandleranordnung ausgelegt ist, um Schwankungen eines Eingangsstromes ($I_{takt}$) des getakteten Spannungswandlers (510; 1030; 1330; 1330′; 1330″; 1330‴; 1530; 1530′) durch einen zeitlich veränderlichen Stromfluss durch das erste Eingangsregelelement (LR4; 520; 1050;1250; 1350; 1550) zumindest teilweise zu kompensieren, wenn ein Betrag der Eingangsspannung ($U_{ein}$, $V_{in}$; $V_{IN}$) kleiner ist als ein Betrag einer Differenz zwischen der Eingangsspannung ($U_{ein}$, $V_{in}$; $V_{IN}$) und der Ausgangsspannung ($V_{aus}$; $V_{out}$; $V_{Out}$) und wenn der Betrag der Eingangsspannung kleiner als der Betrag der Ausgangsspannung ist; und/oder

wobei die Spannungswandleranordnung ausgelegt ist, um Schwankungen eines Eingangsstromes ($I_{takt}$)des getakteten Spannungswandlers durch einen zeitlich veränderlichen Stromfluss ($I_{LR3}$) durch ein zweites Eingangsregelelement (LR3) zumindest teilweise zu kompensieren, wenn ein Betrag der Eingangsspannung größer ist als ein Betrag einer Differenz zwischen der Eingangsspannung und der Ausgangsspannung und wenn der Betrag der Eingangsspannung kleiner als der Betrag der Ausgangsspannung ist,

wobei das zweite Eingangsregelelement (LR3; 1060;1260;1360; 1560) zwischen den ersten Eingangsspannungsknoten und einem ersten Ausgangsspannungsknoten geschaltet ist, wobei der erste Ausgangsspannungsknoten ein Potential aufweist, das sich von dem Bezugspotential unterscheidet; und/oder

wobei die Spannungswandleranordnung ausgelegt ist, um Schwankungen eines Eingangsstromes ($I_{takt}$) des getakteten Spannungswandlers durch einen zeitlich veränderlichen, abwechselnden Stromfluss ($I_{LR4}$,$I_{LR3}$) durch das erste Eingangsregelelement (LR4; 520; 1050;1250; 1350; 1550) und durch ein zweites Eingangsregelelement (LR3; 1060;1260;1360; 1560) zumindest teilweise zu kompensieren, wenn ein Betrag der Eingangsspannung ($U_{ein}$, $V_{in}$; $V_{IN}$) etwa 50 Prozent eines Betrags der Ausgangsspannung ($V_{aus}$; $V_{out}$; $V_{Out}$) beträgt und wenn der Betrag der Eingangsspannung kleiner als der Betrag der Ausgangsspannung ist,

oder wenn ein Betrag der Eingangsspannung zwischen 40 Prozent und 60 Prozent eines Betrags der Ausgangsspannung beträgt und wenn der Betrag der Eingangsspannung kleiner als der Betrag der Ausgangsspannung ist,

wobei das zweite Eingangsregelelement (LR3; 1060;1260;1360; 1560) zwischen den ersten Eingangsspannungsknoten (504; 1032; 1232; 1332; 1432; 1532) und einem ersten Ausgangsspannungsknoten (1042; 1242; 1342;1542) geschaltet ist, wobei der erste Ausgangsspannungsknoten ein Potential aufweist, das sich von dem Bezugspotential unterscheidet; und/oder

wobei die Spannungswandleranordnung ausgelegt ist, um Schwankungen eines Eingangsstromes ($I_{takt}$) des getakteten Spannungswandlers durch einen zeitlich veränderlichen Stromfluss ($I_{LR1}$)durch ein drittes Eingangsregelelement (LR1; 1070; 1470; 1570) zumindest teilweise zu kompensieren, wenn ein Betrag der Eingangsspannung größer ist als ein Betrag der Ausgangsspannung,

wobei das dritte Eingangsregelelement (LR3; 1070; 1470; 1570) zwischen den ersten Eingangsspannungsknoten und einem ersten Ausgangsspannungsknoten geschaltet ist, wobei der erste Ausgangsspannungsknoten ein Potential aufweist, das sich von dem Bezugspotential unterscheidet.

12. Spannungswandleranordnung (500; 1000; 1200; 1300; 1380; 1390; 1395; 1400; 1500;1580;1590) gemäß Anspruch 11,

wobei die Spannungswandleranordnung so ausgelegt ist, dass in einem zweiten Zeitbereich, während dem die Eingangsspannung ($U_{ein}$, $V_{in}$; $V_{IN}$) der Spannungswandleranordnung kleiner ist als die Ausgangsspannung ($V_{aus}$; $V_{out}$; $V_{Out}$) der Spannungswandleranordnung, und der zeitlich näher bei einem Maximum der Sinus-Halbwelle liegt als der erste Zeitbereich, ein pulsierender Verlauf eines Eingangsstromes ($I_{takt}$)des getakteten Spannungswandlers (510; 1030; 1330; 1330′; 1330″; 1330‴; 1530; 1530′) betragsmäßig größer ist als der Eingangsstrom ($I_{ein}$; $I_{IN}$; $I_{in}$) der Spannungswandleranordnung; und/oder

wobei die Spannungswandleranordnung so ausgelegt ist, dass in einem dritten Zeitbereich, während dem die Eingangsspannung ($U_{ein}$, $V_{in}$; $V_{IN}$) der Spannungswandleranordnung kleiner ist als die Ausgangsspannung ($V_{aus}$; $V_{out}$; $V_{Out}$) der Spannungswandleranordnung, und der zeitlich näher bei einem Maximum der Sinus-Halbwelle liegt als der erste Zeitbereich, ein pulsierender Verlauf eines Eingangsstromes ($I_{takt}$) des getakteten Spannungswandlers innerhalb einer Periode des pulsierenden Verlaufs zeitweise betragsmäßig kleiner ist als der Eingangsstrom ($I_{ein}$; $I_{IN}$; $I_{in}$) der Spannungswandleranordnung und zeitweise betragsmäßig größer ist als der Eingangsstrom ($I_{ein}$; $I_{IN}$; $I_{in}$) der Spannungswandleranordnung; und/oder

wobei die Spannungswandleranordnung so ausgelegt ist, dass in einem viertem Zeitbereich, während dem die Eingangsspannung ($U_{ein}$, $V_{in}$; $V_{IN}$) der Spannungswandleranordnung größer ist als die Ausgangsspannung ($V_{aus}$; $V_{out}$; $V_{out}$) der Spannungswandleranordnung, und der zeitlich näher bei einem Maximum der Sinus-Halbwelle liegt als der erste Zeitbereich, ein pulsierender Verlauf eines Eingangsstromes ($I_{takt}$) des getakteten Spannungswandlers (510; 1030; 1330; 1330′; 1330″; 1330‴; 1530; 1530′) betragsmäßig kleiner ist als der

Eingangsstrom ($I_{ein}$; $I_{IN}$; $I_{in}$) der Spannungswandleranordnung.

13. Spannungswandleranordnung (500; 1000; 1200; 1300; 1380; 1390; 1395; 1400; 1500;1580;1590) gemäß einem der Ansprüche 1 bis 12, wobei eine Regelfrequenz eines unter Verwendung des ersten Eingangsregelelements (LR4; 520; 1050;1250; 1350; 1550) gebildeten Linearreglers größer ist als eine Taktfrequenz des getakteten Spannungswandlers (510; 1030; 1330; 1330′; 1330″; 1330‴; 1530; 1530′), und/oder

wobei eine Regelfrequenz eines unter Verwendung des zweiten Eingangsregelelements (LR3; 1060;1260;1360; 1560) gebildeten Linearreglers größer ist als eine Taktfrequenz des getakteten Spannungswandlers, und/oder
wobei eine Regelfrequenz eines unter Verwendung des dritten Eingangsregelelements (LR1; 1070; 1470; 1570) gebildeten Linearreglers größer ist als eine Taktfrequenz des getakteten Spannungswandlers.

14. Eine Spannungswandleranordnung (500; 1000; 1200; 1300; 1380; 1390; 1395; 1400; 1500;1580;1590) gemäß Anspruch 1,
wobei die Spannungswandleranordnung ausgelegt ist, um einen Strom durch das erste Eingangsregelelement so zu steuern oder zu regeln, dass eine Summe aus einem durch das erste Eingangsregelelement fließenden Strom und einem Eingangsstrom des getakteten Spannungswandlers zumindest näherungsweise konstant ist.

15. Eine Spannungswandleranordnung (500; 1000; 1200; 1300; 1380; 1390; 1395; 1400; 1500;1580;1590) gemäß Anspruch 1,

wobei die Spannungswandleranordnung ausgelegt ist, um einen Stromfluss ($I_{LR3}$) über ein zweites Eingangsregelelement (LR3; 1060;1260;1360; 1560) zu ermöglichen, um Schwankungen des Eingangsstroms der Spannungswandleranordnung entgegenzuwirken, und um die Wirkung des ersten Eingangsregelelements zu ergänzen;
wobei die Spannungswandleranordnung das zweite Eingangsregelelement (LR3) aufweist, und wobei das zweite Eingangsregelelement zwischen den ersten Eingangsspannungsknoten (504; 1032; 1232; 1332; 1432; 1532) und einem ersten Ausgangsspannungsknoten (1042; 1242; 1342;1542) geschaltet ist, wobei der erste Ausgangsspannungsknoten ein Potential aufweist, das sich von dem Bezugspotential unterscheidet, und
wobei das zweite Eingangsregelelement (LR3) ausgelegt ist, um zumindest zeitweise einen Stromfluss ($I_{LR3}$) zwischen dem ersten Ausgangsspannungsknoten und dem ersten Eingangsspannungsknoten zu ermöglichen;
wobei das zweite Eingangsregelelement (LR3) ausgelegt ist, um einen Stromfluss ($I_{LR3}$) zwischen dem ersten Eingangsspannungsknoten und dem ersten Ausgangsspannungsknoten zu ermöglichen, um Schwankungen des Eingangsstroms der Spannungswandleranordnung entgegenzuwirken.

16. Verfahren (600) zum Betrieb einer Spannungswandleranordnung (500; 1000; 1200; 1300; 1380; 1390; 1395; 1400; 1500;1580;1590), mit einem getakteten Spannungswandler (510; 1030; 1330; 1330′; 1330″; 1330‴; 1530; 1530′), und

einem ersten Eingangsregelelement (LR4; 520; 1050;1250; 1350; 1550), das zwischen einen ersten Eingangsspannungsknoten (504; 1032; 1232; 1332; 1432; 1532) und einen zweiten Eingangsspannungsknoten (506; 1034; 1234; 1334; 1434; 1534) geschaltet ist, wobei der zweite Eingangsspannungsknoten ein Bezugspotential aufweist,
wobei das Verfahren ein
Entgegenwirken (610) gegen Schwankungen eines Eingangsstroms des Spannungswandlers durch zumindest zeitweises Aktivieren eines Stromflusses durch das Eingangsregelelement aufweist.

## Claims

1. A voltage converter arrangement (500; 1000; 1200; 1300; 1380; 1390; 1395; 1400; 1500; 1580; 1590), comprising:

a clocked voltage converter (510; 1030; 1330; 1330′; 1330″; 1330‴; 1530; 1530′) capable of generating an output voltage ($V_{aus}$; $V_{out}$; $V_{Out}$) on the basis of an input voltage ($U_{ein}$, $V_{in}$; $V_{IN}$); and
a first input regulating element (LR4; 520; 1050; 1250; 1350; 1550) connected between a first input voltage node (504; 1032; 1232; 1332; 1432; 1532) and a second input voltage node (506; 1034; 1234; 1334; 1434; 1534), the second input voltage node having a reference potential,
wherein the first input regulating element (LR4) is configured to allow a current flow ($I_{regel}$; $I_{LR4}$) in order to counteract fluctuations in an input current ($I_{ein}$; $I_{IN}$; $I_{in}$) of the voltage converter arrangement.

2. Voltage converter arrangement (500; 1000; 1200; 1300; 1380; 1390; 1395; 1400; 1500; 1580; 1590) as claimed in claim 1,

the voltage converter arrangement being configured to allow a current flow ($I_{LR3}$) via a second input regulating element (LR3; 1060; 1260; 1360; 1560) in order to counteract fluctuations in the input current of the voltage converter arrangement;
wherein the voltage converter arrangement comprises the second input regulating element (LR3), and wherein the second input regulating element is connected between the first input voltage node (504; 1032; 1232; 1332; 1432; 1532) and a first output voltage node (1042; 1242; 1342; 1542), the first output voltage node having a potential different from the reference potential, and
wherein the second input regulating element (LR3) is configured to at least temporarily allow a current flow ($I_{LR3}$) between the first output voltage node and the first input voltage node;
wherein the second input regulating element (LR3) is configured to allow a current flow ($I_{LR3}$) between the first input voltage node and the first output voltage node so as to counteract variations in the input current of the voltage converter arrangement.

3. Voltage converter arrangement (500; 1000; 1200; 1300; 1380; 1390; 1395; 1400; 1500; 1580; 1590) as claimed in claims 1 or 2, the voltage converter arrangement being adapted such that apart from current fluctuations which are at most 10% of a current amplitude of the input current of the clocked voltage converter, an input current ($I_{takt}$) of the clocked voltage converter runs proportional, within a time range, to an input voltage ($U_{ein}$, $V_{in}$; $V_{IN}$), wherein a frequency of the input voltage is smaller than a switching frequency of the clocked voltage converter,
wherein the voltage converter arrangement is configured to adapt a current flow through the first input regulating element (LR4; 520; 1050; 1250; 1350; 1550) such that the current flow through the first input regulating element (LR4) at least temporarily counteracts the current fluctuations in the input current of the clocked voltage converter.

4. Voltage converter arrangement (500; 1000; 1200; 1300; 1380; 1390; 1395; 1400; 1500; 1580; 1590) as claimed in any of claims 1 to 3,

the voltage converter arrangement comprising a third input regulating element (LR1; 1070; 1470; 1570), the third input regulating element being connected between the first input voltage node (504; 1032; 1232; 1332; 1432; 1532) and a first output voltage node (1042; 1242; 1342; 1542), the first output voltage node having a potential different from the reference potential, and
wherein the third input regulating element (LR1) is configured to at least temporarily allow a current flow ($I_{LR1}$) between the first input voltage node and the first output voltage node which is opposite to a current flow ($I_{LR3}$) through the second input regulating element (LR3; 1060; 1260; 1360; 1560);
wherein the voltage converter arrangement comprises the second input regulating element (LR3), and wherein the second input regulating element is connected between the first input voltage node and the first output voltage node,
wherein the voltage converter arrangement is configured to allow a current flow ($I_{LR3}$) via the second input regulating element (LR3) when the input voltage ($U_{ein}$, $V_{in}$; $V_{IN}$) of the voltage converter arrangement is larger than a difference between the output voltage ($V_{aus}$; $V_{out}$; $V_{Out}$) of the voltage converter arrangement and the input voltage ($U_{ein}$, $V_{in}$; $V_{IN}$),
wherein the voltage converter arrangement is configured to allow a current flow ($I_{LR4}$) via the first input regulating element (LR4) when the input voltage deviates from the output voltage by at most 10% or by at most a predetermined deviation,
wherein the voltage converter arrangement is configured to allow a current flow ($I_{LR4}$) via the first input regulating element (LR4) when the input voltage ($U_{ein}$, $V_{in}$; $V_{IN}$) is smaller than the difference between the output voltage ($V_{aus}$; $V_{out}$; $V_{Out}$) and the input voltage ($U_{ein}$, $V_{in}$; $V_{IN}$),
wherein the voltage converter arrangement is configured to allow a current flow ($I_{LR3}$) via the second input regulating element (LR3) and the first input regulating element (LR4) when the input voltage ($U_{ein}$, $V_{in}$; $V_{IN}$) deviates by at most 10% or by at most a predetermined deviation from half the output voltage ($V_{aus}$; $V_{out}$; $V_{Out}$),
wherein the voltage converter arrangement is configured to allow current to flow via the third input regulating element (LR1) when the input voltage ($U_{ein}$, $V_{in}$; $V_{IN}$) is larger than the output voltage ($V_{aus}$; $V_{out}$; $V_{Out}$).

5. Voltage converter arrangement (500; 1000; 1200; 1300; 1380; 1390; 1395; 1400; 1500; 1580; 1590) as claimed in any of claims 1 to 4,

the voltage converter arrangement comprising a second input regulating element (LR3; 1060; 1260; 1360; 1560) connected between the first input voltage node (504; 1032; 1232; 1332; 1432; 1532) and a first output voltage node (1042; 1242; 1342; 1542) different from a reference potential node,

wherein the clocked voltage converter is configured to be to have a pulsating input current ($I_{takt}$) in an operating state in which an amount of the input voltage ($U_{ein}$, $V_{in}$; $V_{IN}$) corresponds to an amount of a potential difference between the first input voltage node and the first output voltage node, and in which the amount of the input voltage is smaller than an amount of the output voltage ($V_{aus}$; $V_{out}$; $V_{Out}$),

wherein the first input regulating element and the second input regulating element are configured, in that operating state in which the amount of the input voltage corresponds to the amount of the potential difference between the first input voltage node and the first output voltage node, and in which the amount of the input voltage is smaller than the amount of the output voltage, to at least partially compensate for fluctuations in the input current ($I_{takt}$) of the clocked voltage converter, in that the first input regulating element (LR4) generates a temporally pulsating current flow ($I_{LR4}$) between the first input voltage node and the reference potential node (506; 1034; 1234; 1334; 1434; 1534), and in that the second input regulating element (LR3) enables a temporally pulsating current flow ($I_{LR3}$) between the first output voltage node and the first input voltage node,

wherein the pulsating current flow ($I_{LR3}$) through the second input regulating element (LR3) and the pulsating current flow ($I_{LR4}$) through the first input regulating element (LR4) alternate in time.

6. Voltage converter arrangement (500; 1000; 1200; 1300; 1380; 1390; 1395; 1400; 1500; 1580; 1590) as claimed in any of claims 1 to 5,

the voltage converter arrangement comprising a second input regulating element (LR3; 1060; 1260; 1360; 1560) connected between the first input voltage node (504; 1032; 1232; 1332; 1432; 1532) and a first output voltage node (1042; 1242; 1342; 1542) different from a reference potential node 506; 1034; 1234; 1334; 1434; 1534; 1044; 1244; 1344; 1544),

wherein the clocked voltage converter is configured to have a pulsating input current in an operating state in which an amount of the input voltage ($U_{ein}$, $V_{in}$; $V_{IN}$) is larger than an amount of the potential difference between the first input voltage node (504; 1032; 1232; 1332; 1432; 1532) and the first output voltage node (1042; 1242; 1342; 1542), and in which the amount of the input voltage is smaller than an amount of the output voltage ($V_{aus}$; $V_{out}$; $V_{Out}$),

wherein the second input regulating element (LR3; 1060; 1260; 1360; 1560) is configured, in that operating state in which the amount of the input voltage is larger than the amount of the potential difference between the first input voltage node and the first output voltage node, and in which the amount of the input voltage is smaller than the amount of the output voltage, to at least partially compensate for fluctuations in the input current ($I_{takt}$) of the clocked voltage converter (510; 1030; 1330; 1330′; 1330″; 1330‴; 1530; 1530′) in that the second input regulating element (LR3) enables a time-pulsating current flow ($I_{LR3}$) between the first output voltage node and the first input voltage node.

7. Voltage converter arrangement (500; 1000; 1200; 1300; 1380; 1390; 1395; 1400; 1500; 1580; 1590) as claimed in any of claims 1 to 6,

wherein the clocked voltage converter (510; 1030; 1330; 1330′; 1330″; 1330‴; 1530; 1530′) is configured to have a pulsating input current in an operating state in which an amount of the input voltage ($U_{ein}$, $V_{in}$; $V_{IN}$) corresponds to an amount of the output voltage ($V_{aus}$; $V_{out}$; $V_{Out}$),

wherein the first input regulating element (LR4; 520; 1050; 1250; 1350; 1550) is configured, in that operating state in which the amount of the input voltage corresponds to an amount of the output voltage, to at least partially compensate for fluctuations in the input current of the clocked voltage converter in that the first input regulating element (LR4) generates a temporally pulsating current flow ($I_{LR4}$) between the first input voltage node (504; 1032; 1232; 1332; 1432; 1532) and the reference potential node (506; 1034; 1234; 1334; 1434; 1534; 1044; 1244; 1344; 1544).

8. Voltage converter arrangement (500; 1000; 1200; 1300; 1380; 1390; 1395; 1400; 1500; 1580; 1590) as claimed in any of claims 1 to 7,

wherein the clocked voltage converter is configured to have a pulsating input current ($I_{takt}$) in an operating state in which an amount of the input voltage ($U_{ein}$, $V_{in}$; $V_{IN}$) is smaller than an amount of the potential difference between the first input voltage node (504; 1032; 1232; 1332; 1432; 1532) and the first output voltage node (1042; 1242; 1342; 1542), and in which the amount of the input voltage is smaller than an amount of the output voltage,

wherein the first input regulating element (LR4; 520; 1050; 1250; 1350; 1550) is configured, in that operating state in which the amount of the input voltage ($U_{ein}$, $V_{in}$; $V_{IN}$) is smaller than the amount of the potential difference between the first input voltage node (504; 1032; 1232; 1332; 1432; 1532) and the first output voltage node (1042; 1242; 1342; 1542), and in which the amount of the input voltage is smaller than the amount of the output voltage, to at least partially compensate for fluctuations in the input current ($I_{takt}$) of the clocked voltage converter in that the first input regulating element (LR4) enables a temporally pulsating current flow ($I_{LR4}$) between the first input voltage node and the reference potential node (506; 1034; 1234; 1334; 1434; 1534; 1044; 1244; 1344; 1544).

9. Voltage converter arrangement (500; 1000; 1200; 1300; 1380; 1390; 1395; 1400; 1500; 1580; 1590) as claimed in any of claims 1 to 8,

the voltage converter arrangement comprising a third input regulating element (LR1; 1070; 1470; 1570), the third input regulating element being connected between the first input voltage node (504; 1032; 1232; 1332; 1432; 1532) and a first output voltage node (1042; 1242; 1342; 1542),
wherein the clocked voltage converter is configured to have a pulsating input current ($I_{takt}$) in an operating state in which an amount of the input voltage ($U_{ein}$, $V_{in}$; $V_{IN}$) is larger than an amount of the output voltage,
wherein the third input regulating element (LR1) is configured, in that operating state in which the amount of the input voltage is larger than the amount of the output voltage, to at least partially compensate for fluctuations in the input current of the clocked voltage converter in that the third input regulating element (LR1) enables a temporally pulsating current flow ($I_{LR1}$) between the first input voltage node and the first output voltage node.

10. Voltage converter arrangement (500; 1000; 1200; 1300; 1380; 1390; 1395; 1400; 1500; 1580; 1590) as claimed in any of claims 1 to 9,

wherein the voltage converter arrangement is configured to receive an input current ($I_{ein}$; $I_{IN}$; $I_{in}$) such that a time curve of the input current is approximately proportional to an input voltage ($U_{ein}$, $V_{in}$; $V_{IN}$) at least within a time range, wherein a frequency of the input voltage is smaller than a switching frequency of the clocked voltage converter (510; 1030; 1330; 1330′; 1330″; 1330‴; 1530; 1530′),
and
wherein the voltage converter arrangement is configured such that a pulsating characteristic of an input current ($I_{ein}$; $I_{IN}$; $I_{in}$) of the voltage converter arrangement in a first time range, which is adjacent to a zero value of the sinusoidal half-wave and which extends over a plurality of periods of the input current ($I_{takt}$) of the clocked voltage converter (510; 1030; 1330; 1330′; 1330″; 1330‴; 1530; 1530′), is larger in amount than the input current ($I_{takt}$) of the clocked voltage converter.

11. Voltage converter arrangement (500; 1000; 1200; 1300; 1380; 1390; 1395; 1400; 1500; 1580; 1590) as claimed in any of claims 1 to 10, wherein the voltage converter arrangement is configured to compensate for fluctuations in an input current ($I_{takt}$) of the clocked voltage converter (510; 1030; 1330; 1330′; 1330″; 1330‴; 1530; 1530′) by means of a time-varying current flow through the first input regulating element (LR4; 520; 1050; 1250; 1350; 1550) when an amount of the input voltage ($U_{ein}$, $V_{in}$; $V_{IN}$) is smaller than an amount of a difference between the input voltage ($U_{ein}$, $V_{in}$; $V_{IN}$) and the output voltage ($V_{aus}$; $V_{out}$; $V_{Out}$) and when the amount of the input voltage is smaller than the amount of the output voltage;
and/or

wherein the voltage converter arrangement is configured to at least partially compensate for fluctuations in an input current ($I_{takt}$) of the clocked voltage converter by means of a time-varying current flow ($I_{LR3}$) through a second input regulating element (LR3) when an amount of the input voltage is larger than an amount of a difference between the input voltage and the output voltage and when the amount of the input voltage is smaller than the amount of the output voltage,
wherein the second input regulating element (LR3; 1060; 1260; 1360; 1560) is connected between the first input voltage node and a first output voltage node, the first output voltage node having a potential different from the reference potential;
and/or
the voltage converter arrangement being configured to at least partially compensate for fluctuations in an input current ($I_{takt}$) of the clocked voltage converter by means of a time-varying, alternating current flow ($I_{LR4}$, $I_{LR3}$) through the first input regulating element (LR4; 520; 1050; 1250; 1350; 1550) and through a second input regulating element (LR3; 1060; 1260; 1360; 1560), when an amount of the input voltage ($U_{ein}$, $V_{in}$; $V_{IN}$) is about 50 percent of an amount of the output voltage ($V_{aus}$; $V_{out}$; $V_{Out}$) and when the amount of the input voltage is less than the amount of the output voltage,

or when an amount of the input voltage is between 40 percent and 60 percent of an amount of the output voltage and when the amount of the input voltage is less than the amount of the output voltage,

wherein the second input regulating element (LR3; 1060; 1260; 1360; 1560) is connected between the first input voltage node (504; 1032; 1232; 1332; 1432; 1532) and a first output voltage node (1042; 1242; 1342; 1542), the first output voltage node having a potential different from the reference potential;

and/or

wherein the voltage converter arrangement is configured to at least partially compensate for fluctuations in an input current ($I_{takt}$) of the clocked voltage converter by means of a time-varying current flow ($I_{LR1}$) through a third input regulating element (LR1; 1070; 1470; 1570) when an amount of the input voltage is larger than an amount of the output voltage,

wherein the third input regulating element (LR3; 1070; 1470; 1570) is connected between the first input voltage node and a first output voltage node, the first output voltage node having a potential different from the reference potential.

12. Voltage converter arrangement (500; 1000; 1200; 1300; 1380; 1390; 1395; 1400; 1500; 1580; 1590) as claimed in claim 11,

wherein the voltage converter arrangement is configured such that within a second time range during which the input voltage ($U_{ein}$, $V_{in}$; $V_{IN}$) of the voltage converter arrangement is smaller than the output voltage ($V_{aus}$; $V_{out}$; $V_{Out}$) of the voltage converter arrangement, and which is closer in time to a maximum of the sinusoidal half-wave than is the first time range, a pulsating characteristic of an input current ($I_{takt}$) of the clocked voltage converter (510; 1030; 1330; 1330′; 1330″; 1330‴; 1530; 1530′) is larger in amount than the input current ($I_{ein}$; $I_{IN}$; $I_{in}$) of the voltage converter arrangement;

and/or

wherein the voltage converter arrangement is configured such that within a third time range during which the input voltage ($U_{ein}$, $V_{in}$; $V_{IN}$) of the voltage converter arrangement is smaller than the output voltage ($V_{aus}$; $V_{out}$; $V_{Out}$) of the voltage converter arrangement, and which is closer in time to a maximum of the sinusoidal half-wave than the first time range, a pulsating characteristic of an input current ($I_{takt}$) of the clocked voltage converter within a period of the pulsating pattern is temporarily smaller in amount than the input current ($I_{ein}$; $I_{IN}$; $I_{in}$) of the voltage converter arrangement and is temporarily larger in amount than the input current ($I_{ein}$; $I_{IN}$; $I_{in}$) of the voltage converter arrangement;

and/or

wherein the voltage converter arrangement is configured such that within a fourth time range during which the input voltage ($U_{ein}$, $V_{in}$; $V_{IN}$) of the voltage converter arrangement is larger than the output voltage ($V_{aus}$; $V_{out}$; $V_{Out}$) of the voltage converter arrangement, and which is closer in time to a maximum of the sinusoidal half-wave than the first time range, a pulsating characteristic of an input current ($I_{takt}$) of the clocked voltage converter (510; 1030; 1330; 1330′; 1330″; 1330‴; 1530; 1530′) is smaller in amount than the input current ($I_{ein}$; $I_{IN}$; $I_{in}$) of the voltage converter arrangement.

13. Voltage converter arrangement (500; 1000; 1200; 1300; 1380; 1390; 1395; 1400; 1500; 1580; 1590) as claimed in any of claims 1 to 12, wherein a regulating frequency of a linear regulator formed by using the first input regulating element (LR4; 520; 1050; 1250; 1350; 1550) is larger than a clock frequency of the clocked voltage converter (510; 1030; 1330; 1330'; 1330"; 1330‴; 1530; 1530'), and/or

wherein a regulating frequency of a linear regulator formed while using the second input regulating element (LR3; 1060; 1260; 1360; 1560) is larger than a clock frequency of the clocked voltage converter, and/or

wherein a regulating frequency of a linear regulator formed while using the third input regulating element (LR1; 1070; 1470; 1570) is larger than a clock frequency of the clocked voltage converter.

14. Voltage converter arrangement (500; 1000; 1200; 1300; 1380; 1390; 1395; 1400; 1500; 1580; 1590) as claimed in claim 1,

the voltage converter arrangement being configured to control or regulate a current flowing through the first input regulating element such that a sum of a current flowing through the first input regulating element and an input current of the clocked voltage converter is at least approximately constant.

15. Voltage converter arrangement (500; 1000; 1200; 1300; 1380; 1390; 1395; 1400; 1500; 1580; 1590) as claimed in claim 1,

the voltage converter arrangement being configured to allow to allow a current flow ($I_{LR3}$) via a second input regulating element (LR3; 1060; 1260; 1360; 1560) in order to counteract fluctuations in the input current of the voltage converter arrangement and to supplement the action of the first input regulating element;
the voltage converter arrangement comprising the second input regulating element (LR3), and the second input regulating element being connected between the first input voltage node (504; 1032; 1232; 1332; 1432; 1532) and a first output voltage node (1042; 1242; 1342; 1542), the first output voltage node having a potential different from the reference potential, and
wherein the second input regulating element (LR3) is configured to at least temporarily allow a current flow ($I_{LR3}$) between the first output voltage node and the first input voltage node;
wherein the second input regulating element (LR3) is configured to allow a current flow ($I_{LR3}$) between the first input voltage node and the first output voltage node so as to counteract variations in the input current of the voltage converter arrangement.

16. Method (600) of operating a voltage converter arrangement (500; 1000; 1200; 1300; 1380; 1390; 1395; 1400; 1500; 1580; 1590), comprising a clocked voltage converter (510; 1030; 1330; 1330'; 1330"; 1330‴; 1530; 1530'), and

a first input regulating element (LR4; 520; 1050; 1250; 1350; 1550) connected between a first input voltage node (504; 1032; 1232; 1332; 1432; 1532) and a second input voltage node (506; 1034; 1234; 1334; 1434; 1534), the second input voltage node having a reference potential,
wherein the method comprises
counteracting (610) fluctuations in an input current of the voltage converter by at least temporarily activating a current flow through the input regulating element.

**Revendications**

1. Aménagement de conversion de tension (500; 1000; 1200; 1300; 1380; 1390; 1395; 1400; 1500; 1580; 1590), aux caractéristiques suivantes:

un convertisseur de tension cadencé (510; 1030; 1330; 1330'; 1330"; 1330‴; 1530; 1530') qui est à même de générer, sur base d'une tension d'entrée ($U_{ein}$, $V_{in}$; $V_{IN}$), une tension de sortie ($V_{aus}$; $V_{out}$; $V_{out}$); et
un premier élément de régulation d'entrée (LR4; 520; 1050; 1250; 1350; 1550) qui est connecté entre un premier nœud de tension d'entrée (504; 1032; 1232; 1332; 1432; 1532) et un deuxième nœud de tension d'entrée (506; 1034; 1234; 1334; 1434; 1534), où le deuxième nœud de tension d'entrée présente un potentiel de référence, dans lequel le premier élément de régulation d'entrée (LR4) est conçu pour permettre une circulation de courant ($I_{regel}$; $I_{LR4}$) pour contrecarrer les fluctuations d'un courant d'entrée ($I_{ein}$; $I_{IN}$; $I_{in}$) de l'aménagement de conversion de tension.

2. Aménagement de conversion de tension (500; 1000; 1200; 1300; 1380; 1390; 1395; 1400; 1500; 1580; 1590) selon la revendication 1,

dans lequel l'aménagement de conversion de tension est conçu pour permettre une circulation de courant ($I_{LR3}$) à travers un deuxième élément de régulation d'entrée (LR3; 1060; 1260; 1360; 1560) pour contrecarrer les fluctuations du courant d'entrée de l'aménagement de conversion de tension;
dans lequel l'aménagement de conversion de tension présente le deuxième élément de régulation d'entrée (LR3), et dans lequel le deuxième élément de régulation d'entrée est connecté entre le premier nœud de tension d'entrée (504; 1032; 1232; 1332; 1432; 1532) et un premier nœud de tension de sortie (1042; 1242; 1342; 1542), dans lequel le premier nœud de tension de sortie présente un potentiel qui diffère du potentiel de référence, et
dans lequel le deuxième élément de régulation d'entrée (LR3) est conçu pour permettre au moins temporairement une circulation de courant ($I_{LR3}$) entre le premier nœud de tension de sortie et le premier nœud de tension d'entrée;
dans lequel le deuxième élément de régulation d'entrée (LR3) est conçu pour permettre une circulation de courant ($I_{LR3}$) entre le premier nœud de tension d'entrée et le premier nœud de tension de sortie pour contrecarrer les fluctuations du courant d'entrée de l'aménagement de conversion de tension.

**EP 3 729 623 B1**

**3.** Aménagement de conversion de tension (500; 1000; 1200; 1300; 1380; 1390; 1395; 1400; 1500; 1580; 1590) selon la revendication 1 ou 2, dans lequel l'aménagement de conversion de tension est conçu de sorte qu'un courant d'entrée ($I_{takt}$) du convertisseur de tension cadencé évolue, à l'exception des fluctuations de courant qui sont de tout au plus 10 % d'une amplitude de courant du courant d'entrée du convertisseur de tension cadencé, dans un segment de temps proportionnel à une tension d'entrée ($U_{ein}$, $V_{in}$; $V_{IN}$) dans lequel une fréquence de la tension d'entrée est inférieure à une fréquence de commutation du convertisseur de tension cadencé,
dans lequel l'aménagement de conversion de tension est conçu pour adapter une circulation de courant à travers le premier élément de régulation d'entrée (LR4; 520; 1050; 1250; 1350; 1550) de sorte que la circulation de courant à travers le premier élément de régulation d'entrée (LR4) contrecarre au moins temporairement les fluctuations de courant du courant d'entrée du convertisseur de tension cadencé.

**4.** Aménagement de conversion de tension (500; 1000; 1200; 1300; 1380; 1390; 1395; 1400; 1500; 1580; 1590) selon l'une des revendications 1 à 3,

dans lequel l'aménagement de conversion de tension présente un troisième élément de régulation d'entrée (LR1; 1070; 1470; 1570), dans lequel le troisième élément de régulation d'entrée est connecté entre le premier nœud de tension d'entrée (504; 1032; 1232; 1332; 1432; 1532) et un premier nœud de tension de sortie (1042; 1242; 1342; 1542), dans lequel le premier nœud de tension de sortie présente un potentiel qui diffère du potentiel de référence, et

dans lequel le troisième élément de régulation d'entrée (LR1) est conçu pour permettre au moins temporairement une circulation de courant ($I_{LR1}$) entre le premier nœud de tension d'entrée et le premier nœud de tension de sortie ($I_{LR3}$) qui est orientée dans la direction opposée à une circulation de courant à travers le deuxième élément de régulation d'entrée (LR3; 1060; 1260; 1360; 1560);
dans lequel l'aménagement de conversion de tension présente le deuxième élément de régulation d'entrée (LR3), et dans lequel le deuxième élément de régulation d'entrée est connecté entre le premier nœud de tension d'entrée et le premier nœud de tension de sortie,
dans lequel l'aménagement de conversion de tension est conçu pour permettre une circulation de courant ($I_{LR3}$) à travers le deuxième élément de régulation d'entrée (LR3) lorsque la tension d'entrée ($U_{ein}$, $V_{in}$; $V_{IN}$) de l'aménagement de conversion de tension est supérieure à une différence entre la tension de sortie ($V_{aus}$; $V_{out}$; $V_{Out}$) de l'aménagement de conversion de tension et la tension d'entrée ($U_{ein}$, $V_{in}$; $V_{IN}$),
dans lequel l'aménagement de conversion de tension est conçu pour permettre une circulation de courant ($I_{LR4}$) à travers le premier élément de régulation d'entrée (LR4) lorsque la tension d'entrée s'écarte de la tension de sortie de tout au plus 10 % ou de tout au plus un écart prédéterminé,
dans lequel l'aménagement de conversion de tension est conçu pour permettre une circulation de courant ($I_{LR4}$) à travers le premier élément de régulation d'entrée (LR4) lorsque la tension d'entrée ($U_{ein}$, $V_{in}$; $V_{IN}$) est inférieure à la différence entre la tension de sortie ($V_{aus}$; $V_{out}$; $V_{Out}$) et la tension d'entrée ($U_{ein}$, $V_{in}$; $V_{IN}$),
dans lequel l'aménagement de conversion de tension est conçu pour permettre une circulation de courant ($I_{LR3}$) à travers le deuxième élément de régulation d'entrée (LR3) et le premier élément de régulation d'entrée (LR4) lorsque la tension d'entrée ($U_{ein}$, $V_{in}$; $V_{IN}$) s'écarte de tout au plus 10 % ou de tout au plus un écart prédéterminé de la moitié de la tension de sortie ($V_{aus}$; $V_{out}$; $V_{Out}$),
dans lequel l'aménagement de conversion de tension est conçu pour permettre une circulation de courant à travers le troisième élément de régulation d'entrée (LR1) lorsque la tension d'entrée ($U_{ein}$, $V_{in}$; $V_{IN}$) est supérieure à la tension de sortie ($V_{aus}$; $V_{out}$; $V_{Out}$).

**5.** Aménagement de conversion de tension (500; 1000; 1200; 1300; 1380; 1390; 1395; 1400; 1500; 1580; 1590) selon l'une des revendications 1 à 4,

dans lequel l'aménagement de conversion de tension présente un deuxième élément de régulation d'entrée (LR3; 1060; 1260; 1360; 1560) qui est connecté entre le premier nœud de tension d'entrée (504; 1032; 1232; 1332; 1432; 1532) et un premier nœud de tension de sortie (1042; 1242; 1342, 1542) qui est différent d'un nœud de potentiel de référence,
dans lequel le convertisseur de tension cadencé est conçu pour présenter, dans un état de fonctionnement dans lequel une quantité de la tension d'entrée ($U_{ein}$, $V_{in}$; $V_{IN}$) correspond à une quantité d'une différence de potentiel entre le premier nœud de tension d'entrée et le premier nœud de tension de sortie et dans lequel la quantité de tension d'entrée est inférieure à une quantité de la tension de sortie ($V_{aus}$; $V_{out}$; $V_{Out}$), un courant d'entrée puisé ($I_{takt}$),
dans lequel le premier élément de régulation d'entrée et le deuxième élément de régulation d'entrée sont conçus pour compenser, dans l'état de fonctionnement dans lequel la quantité de la tension d'entrée correspond à la quantité de la différence de potentiel entre le premier nœud de tension d'entrée et le premier nœud de tension de sortie, et dans lequel la quantité de tension d'entrée est inférieure à la quantité de tension de sortie, au moins partiellement les fluctuations du courant d'entrée ($I_{takt}$) du convertisseur de tension cadencé par le fait que le premier élément de régulation d'entrée (LR4) permet une circulation de courant pulsée dans le temps ($I_{LR4}$) entre le premier nœud de tension d'entrée et le nœud de potentiel de référence (506; 1034; 1234; 1334; 1434; 1534), et que le deuxième élément de régulation d'entrée (LR3) permet une circulation de courant pulsée dans le temps ($I_{LR3}$) entre le premier nœud de tension de sortie et le premier nœud de tension d'entrée,

dans lequel la circulation de courant pulsée ($I_{LR3}$) à travers le deuxième élément de régulation d'entrée (LR3) et la circulation de courant puisée ($I_{LR4}$) à travers le premier élément de régulation d'entrée (LR4) sont alternées dans le temps.

6. Aménagement de conversion de tension (500; 1000; 1200; 1300; 1380; 1390; 1395; 1400; 1500; 1580; 1590) selon l'une des revendications 1 à 5,

dans lequel l'aménagement de conversion de tension présente un deuxième élément de régulation d'entrée (LR3; 1060; 1260; 1360; 1560) qui est connecté entre le premier nœud de tension d'entrée (504; 1032; 1232; 1332; 1432; 1532) et un premier nœud de tension de sortie (1042; 1242; 1342; 1542) qui est différent d'un nœud de potentiel de référence (506; 1034; 1234; 1334; 1434; 1534; 1044; 1244; 1344; 1544),

dans lequel le convertisseur de tension cadencé est conçu de manière à présenter, dans un état de fonctionnement dans lequel une quantité de la tension d'entrée ($U_{ein}$, $V_{in}$; $V_{IN}$) est supérieure à une quantité de la différence de potentiel entre le premier nœud de tension d'entrée (504; 1032; 1232; 1332; 1432; 1532) et le premier nœud de tension de sortie (1042; 1242; 1342; 1542) et dans lequel la quantité de tension d'entrée est inférieure à une quantité de la tension de sortie ($V_{aus}$; $V_{out}$; $V_{Out}$), un courant d'entrée pulsé,

dans lequel le deuxième élément de régulation d'entrée (LR3; 1060; 1260; 1360; 1560) est conçu pour compenser, dans l'état de fonctionnement dans lequel la quantité de la tension d'entrée est supérieure à la quantité de la différence de potentiel entre le premier nœud de tension d'entrée et le premier nœud de tension de sortie et dans lequel la quantité de la tension d'entrée est inférieure à la quantité de la tension de sortie, au moins partiellement les fluctuations du courant d'entrée ($I_{takt}$) du convertisseur de tension cadencé (510; 1030; 1330; 1330'; 1330"; 1330'''; 1530; 1530) par le fait que le deuxième élément de régulation d'entrée (LR3) permet une circulation de courant puisé dans le temps ($I_{LR3}$) entre le premier nœud de tension de sortie et le premier nœud de tension d'entrée.

7. Aménagement de conversion de tension (500; 1000; 1200; 1300; 1380; 1390; 1395; 1400; 1500; 1580; 1590) selon l'une des revendications 1 à 6,

dans lequel le convertisseur de tension cadencé (510; 1030; 1330; 1330'; 1330"; 1330'''; 1530; 1530') est conçu pour présenter, dans un état de fonctionnement dans lequel une quantité de la tension d'entrée ($U_{ein}$, $V_{in}$; $V_{IN}$) correspond à une quantité de la tension de sortie ($V_{aus}$; $V_{out}$, $V_{Out}$), un courant d'entrée pulsé ($I_{takt}$),

dans lequel le premier élément de régulation d'entrée (LR4; 520; 1050; 1250; 1350; 1550) est conçu pour compenser, dans l'état de fonctionnement dans lequel la quantité de la tension d'entrée correspond à une quantité de la tension de sortie, au moins partiellement les fluctuations du courant d'entrée du convertisseur de tension cadencé par le fait que le premier élément de régulation d'entrée (LR4) permet une circulation de courant puisée dans le temps ($I_{LR4}$) entre le premier nœud de tension d'entrée (504; 1032; 1232; 1332; 1432; 1532) et le nœud de potentiel de référence (506; 1034; 1234; 1334; 1434; 1534; 1044; 1244; 1344; 1544).

8. Aménagement de conversion de tension (500; 1000; 1200; 1300; 1380; 1390; 1395; 1400; 1500; 1580; 1590) selon l'une des revendications 1 à 7,

dans lequel le convertisseur de tension cadencé est conçu pour présenter, dans un état de fonctionnement dans lequel une quantité de la tension d'entrée ($U_{ein}$, $V_{in}$; $V_{IN}$) est inférieure à une quantité de la différence de potentiel entre le premier nœud de tension d'entrée (504; 1032; 1232; 1332; 1432; 1532) et le premier nœud de tension de sortie (1042; 1242; 1342; 1542) et dans lequel la quantité de la tension d'entrée est inférieure à une quantité de la tension de sortie, un courant d'entrée puisé ($I_{takt}$),

dans lequel le premier élément de régulation d'entrée (LR4; 520; 1050; 1250; 1350; 1550) est conçu pour compenser, dans l'état de fonctionnement dans lequel la quantité de la tension d'entrée ($U_{ein}$, $V_{in}$; $V_{IN}$) est inférieure à la quantité de la différence de potentiel entre le premier nœud de tension d'entrée (504; 1032; 1232; 1332; 1432; 1532) et le premier nœud de tension de sortie (1042; 1242; 1342, 1542) et dans lequel la quantité de la tension d'entrée est inférieure à la quantité de la tension de sortie, au moins partiellement les fluctuations du courant d'entrée (I$_{takt}$) du convertisseur de tension cadencé par le fait que le premier élément de régulation d'entrée (LR4) permet une circulation de courant puisé dans le temps (I$_{LR4}$) entre le premier nœud de tension d'entrée et le nœud de potentiel de référence (506; 1034; 1234; 1334; 1434; 1534; 1044; 1244; 1344; 1544).

9. Aménagement de conversion de tension (500; 1000; 1200; 1300; 1380; 1390; 1395; 1400; 1500; 1580; 1590) selon l'une des revendications 1 à 8,

dans lequel l'aménagement de conversion de tension présente un troisième élément de régulation d'entrée (LR1; 1070; 1470; 1570), dans lequel le troisième élément de régulation d'entrée est connecté entre le premier nœud de tension d'entrée (504; 1032; 1232; 1332; 1432; 1532) et un premier nœud de tension de sortie (1042; 1242; 1342; 1542),
dans lequel le convertisseur de tension cadencé est conçu pour présenter, dans un état de fonctionnement dans lequel une quantité de la tension d'entrée (U$_{ein}$, V$_{in}$; V$_{IN}$) est supérieure à une quantité de la tension de sortie, un courant d'entrée puisé (I$_{takt}$),
dans lequel le troisième élément de régulation d'entrée (LR1) est conçu pour compenser, dans l'état de fonctionnement dans lequel la quantité de tension d'entrée est supérieure à la quantité de tension de sortie, au moins partiellement les fluctuations du courant d'entrée du convertisseur de tension cadencé par le fait que le troisième élément de régulation d'entrée (LR1) permet une circulation de courant puisée dans le temps (I$_{LR1}$) entre le premier nœud de tension d'entrée et le premier nœud de tension de sortie.

10. Aménagement de conversion de tension (500; 1000; 1200; 1300; 1380; 1390; 1395; 1400; 1500; 1580; 1590) selon l'une des revendications 1 à 9,

dans lequel l'aménagement de conversion de tension est conçu pour recevoir un courant d'entrée (I$_{ein}$; I$_{IN}$; Iin) de sorte qu'une évolution dans le temps du courant d'entrée, au moins dans un segment de temps, soit environ proportionnelle à une tension d'entrée (U$_{ein}$, V$_{in}$; V$_{IN}$), dans lequel une fréquence de la tension d'entrée est inférieure à une fréquence de commutation du convertisseur de tension cadencé (510; 1030; 1330; 1330'; 1330"; 1330'''; 1530; 1530'),
et
dans lequel l'aménagement de conversion de tension est conçu de sorte qu'une évolution puisée d'un courant d'entrée (I$_{ein}$; I$_{IN}$; I$_{in}$) de l'aménagement de conversion de tension dans un premier intervalle de temps qui est proche d'une valeur zéro de la demi-onde sinusoïdale et qui s'étend sur une pluralité de périodes du courant d'entrée (I$_{takt}$) du convertisseur de tension cadencé (510; 1030; 1330; 1330'; 1330"; 1330'''; 1530; 1530') soit supérieure au courant d'entrée (I$_{takt}$) du convertisseur de tension cadencé.

11. Aménagement de conversion de tension (500; 1000; 1200; 1300; 1380; 1390; 1395; 1400; 1500; 1580; 1590) selon l'une des revendications 1 à 10, dans lequel l'aménagement de conversion de tension est conçu pour compenser au moins partiellement les fluctuations d'un courant d'entrée (I$_{takt}$) du convertisseur de tension cadencé (510; 1030; 1330; 1330'; 1330"; 1330'''; 1530; 1530') par une circulation de courant variable dans le temps à travers le premier élément de régulation d'entrée (LR4; 520; 1050; 1250; 1350; 1550) lorsqu'une quantité de tension d'entrée (U$_{ein}$, V$_{in}$; V$_{IN}$) est inférieure à une quantité d'une différence entre la tension d'entrée (U$_{ein}$, V$_{in}$; V$_{IN}$) et la tension de sortie (V$_{aus}$; V$_{out}$; V$_{Out}$) et lorsque la quantité de la tension d'entrée est inférieure à la quantité de la tension de sortie; et/ou

dans lequel l'aménagement de conversion de tension est conçu pour compenser au moins partiellement les fluctuations d'un courant d'entrée (I$_{takt}$) du convertisseur de tension cadencé par une circulation de courant variable dans le temps (I$_{LR3}$) à travers un deuxième élément de régulation d'entrée (LR3) lorsqu'une quantité de la tension d'entrée est supérieure à une quantité d'une différence entre la tension d'entrée et la tension de sortie et que la quantité de tension d'entrée est inférieure à la quantité de la tension de sortie,
dans lequel le deuxième élément de régulation d'entrée (LR3; 1060; 1260; 1360; 1560) est connecté entre le premier nœud de tension d'entrée et un premier nœud de tension de sortie, où le premier nœud de tension de sortie présente un potentiel qui diffère du potentiel de référence;
et/ou
dans lequel l'aménagement de conversion de tension est conçu pour compenser au moins partiellement les fluctuations d'un courant d'entrée (I$_{takt}$) du convertisseur de tension cadencé par une circulation de courant alternatif variable dans le temps (I$_{LR4}$, I$_{LR3}$) à travers le premier élément de régulation d'entrée (LR4; 520; 1050; 1250; 1350; 1550) et à travers un deuxième élément de régulation d'entrée (LR3; 1060; 1260; 1360; 1560) lorsqu'une quantité de la tension d'entrée (U$_{ein}$, V$_{in}$; V$_{IN}$) est d'environ 50 pour cent d'une quantité de la tension

de sortie ($V_{aus}$; $V_{out}$; $V_{Out}$) et que la quantité de tension d'entrée est inférieure à la quantité de tension de sortie, ou lorsqu'une quantité de la tension d'entrée est comprise entre 40 pour cent et 60 pour cent d'une quantité de la tension de sortie et que la quantité de la tension d'entrée est inférieure à la quantité de la tension de sortie, dans lequel le deuxième élément de régulation d'entrée (LR3; 1060; 1260; 1360; 1560) est connecté entre le premier nœud de tension d'entrée (504; 1032; 1232; 1332; 1432; 1532) et un premier nœud de tension de sortie (1042; 1242; 1342; 1542), où le premier nœud de tension de sortie présente un potentiel qui diffère du potentiel de référence;

et/ ou

dans lequel l'aménagement de conversion de tension est conçu pour compenser au moins partiellement les fluctuations d'un courant d'entrée ($I_{takt}$) du convertisseur de tension cadencé par une circulation de courant variable dans le temps ($I_{LR1}$) à travers un troisième élément de régulation d'entrée (LR1; 1070; 1470; 1570) lorsqu'une quantité de la tension d'entrée est supérieure à une quantité de la tension de sortie, dans lequel le troisième élément de régulation d'entrée (LR3; 1070; 1470; 1570) est connecté entre le premier nœud de tension d'entrée et un premier nœud de tension de sortie, dans lequel le premier nœud de tension de sortie présente un potentiel qui diffère du potentiel de référence.

12. Aménagement de conversion de tension (500; 1000; 1200; 1300; 1380; 1390; 1395; 1400; 1500; 1580; 1590) selon la revendication 11,

dans lequel l'aménagement de conversion de tension est conçu de sorte que, dans un deuxième intervalle de temps pendant lequel la tension d'entrée ($U_{ein}$, $V_{in}$; $V_{IN}$) de l'aménagement de conversion de tension est inférieure à la tension de sortie ($V_{aus}$; $V_{out}$; $V_{Out}$) de l'aménagement de conversion de tension et qui est plus proche dans le temps d'un maximum de la demi-onde sinusoïdale que le premier intervalle de temps, une évolution pulsée d'un courant d'entrée ($I_{takt}$) du convertisseur de tension cadencé (510; 1030; 1330; 1330'; 1330"; 1330''' ; 1530; 1530') soit supérieure au courant d'entrée ($I_{ein}$; $I_{IN}$; $I_{in}$) de l'aménagement de conversion de tension;

et/ou

dans lequel l'aménagement de conversion de tension est conçu de sorte que, dans un troisième intervalle de temps pendant lequel la tension d'entrée ($U_{ein}$, $V_{in}$; $V_{IN}$) de l'aménagement de conversion de tension est inférieure à la tension de sortie ($V_{aus}$; $V_{out}$; $V_{Out}$) de l'aménagement de conversion de tension, et qui est plus proche dans le temps d'un maximum de la demi-onde sinusoïdale que le premier intervalle de temps, une évolution pulsée d'un courant d'entrée ($I_{takt}$) du convertisseur de tension cadencé dans une période de l'évolution pulsée soit temporairement inférieure en quantité au courant d'entrée ($I_{ein}$; $I_{IN}$; $I_{in}$) de l'aménagement de conversion de tension et soit temporairement supérieure en quantité au courant d'entrée ($I_{ein}$; $I_{IN}$; $I_{in}$) de l'aménagement de conversion de tension;

et/ou

dans lequel l'aménagement de conversion de tension est conçu de sorte que, dans un quatrième intervalle de temps pendant lequel la tension d'entrée ($U_{ein}$, $V_{in}$; $V_{IN}$) de l'aménagement de conversion de tension est supérieure à la tension de sortie ($V_{aus}$; $V_{out}$; $V_{Out}$) de l'aménagement de conversion de tension et qui est plus proche dans le temps d'un maximum de la demi-onde sinusoïdale que le premier intervalle de temps, une évolution puisée d'un courant d'entrée ($I_{takt}$) du convertisseur de tension cadencé (510; 1030; 1330; 1330'; 1330"; 1330'''; 1530; 1530') soit inférieure en quantité au courant d'entrée ($I_{ein}$; $I_{IN}$; $I_{in}$) de l'aménagement de conversion de tension.

13. Aménagement de conversion de tension (500; 1000; 1200; 1300; 1380; 1390; 1395; 1400; 1500; 1580; 1590) selon l'une des revendications 1 à 12, dans lequel une fréquence de régulation d'un régulateur linéaire formé à l'aide du premier élément de régulation d'entrée (LR4; 520; 1050; 1250; 1350; 1550) est supérieure à une fréquence d'horloge du convertisseur de tension cadencé (510; 1030; 1330; 1330'; 1330"; 1330'''; 1530; 1530'), et/ou

dans lequel une fréquence de régulation d'un régulateur linéaire formé à l'aide du deuxième élément de régulation d'entrée (LR3; 1060; 1260; 1360; 1560) est supérieure à une fréquence d'horloge du convertisseur de tension cadencé, et/ou

dans lequel une fréquence de régulation d'un régulateur linéaire formé à l'aide du troisième élément de régulation d'entrée (LR1; 1070; 1470; 1570) est supérieure à une fréquence d'horloge du convertisseur de tension cadencé.

14. Aménagement de conversion de tension (500; 1000; 1200; 1300; 1380; 1390; 1395; 1400; 1500; 1580; 1590) selon la revendication 1,

dans lequel l'aménagement de conversion de tension est conçu pour commander ou réguler un courant à travers le premier élément de régulation d'entrée de sorte qu'une somme d'un courant circulant à travers le premier élément de régulation d'entrée et d'un courant d'entrée du convertisseur de tension cadencé soit au moins approximativement constante.

**15.** Aménagement de conversion de tension (500; 1000; 1200; 1300; 1380; 1390; 1395; 1400; 1500; 1580; 1590) selon la revendication 1,

dans lequel l'aménagement de conversion de tension est conçu pour permettre une circulation de courant ($I_{LR3}$) à travers un deuxième élément de régulation d'entrée (LR3; 1060; 1260; 1360; 1560) pour contrecarrer les fluctuations du courant d'entrée de l'aménagement de conversion de tension, et pour compléter l'effet du premier élément de régulation d'entrée;

dans lequel l'aménagement de conversion de tension présente le deuxième élément de régulation d'entrée (LR3), et dans lequel le deuxième élément de régulation d'entrée est connecté entre le premier nœud de tension d'entrée (504; 1032; 1232; 1332; 1432; 1532) et un premier nœud de tension de sortie (1042; 1242; 1342; 1542), dans lequel le premier nœud de tension de sortie présente un potentiel qui diffère du potentiel de référence, et

dans lequel le deuxième élément de régulation d'entrée (LR3) est conçu pour permettre au moins temporairement une circulation de courant ($I_{LR3}$) entre le premier nœud de tension de sortie et le premier nœud de tension d'entrée;

dans lequel le deuxième élément de régulation d'entrée (LR3) est conçu pour permettre une circulation de courant ($I_{LR3}$) entre le premier nœud de tension d'entrée et le premier nœud de tension de sortie pour contrecarrer les fluctuations du courant d'entrée de l'aménagement de conversion de tension.

**16.** Procédé (600) permettant de faire fonctionner un aménagement de conversion de tension (500; 1000; 1200; 1300; 1380; 1390; 1395; 1400; 1500; 1580; 1590), avec

un convertisseur de tension cadencé (510; 1030; 1330; 1330'; 1330"; 1330‴; 1530; 1530'), et

un premier élément de régulation d'entrée (LR4; 520; 1050; 1250; 1350; 1550) qui est connecté entre un premier nœud de tension d'entrée (504; 1032; 1232; 1332; 1432; 1532) et un deuxième nœud de tension d'entrée (506; 1034; 1234; 1334; 1434; 1534), où le deuxième nœud de tension d'entrée présente un potentiel de référence,

dans lequel le procédé présente le fait de contrecarrer (610) les fluctuations d'un courant d'entrée du convertisseur de tension par le fait d'activer au moins temporairement une circulation de courant à travers l'élément de régulation d'entrée.

Herkömmliche Lösung - Linear unterstützter Abwärtswandler

## Fig. 1

Herkömmliche Lösung - Ausführung eines Buck-Konverters, kombiniert mit zwei Linearreglern

## Fig. 2

Herkömmliche Lösung - Regelfunktion eines Buck-Konverters,
kombiniert mit zwei Linearreglern

Fig. 3

Herkömmliche Lösung - Kurvenverläufe der Regelfunktion eines Konverters,
kombiniert mit Linearreglern

Fig. 4

Fig. 5

EP 3 729 623 B1

600

Entgegenwirken gegen Schwankungen eines
Eingangsstroms des Spannungswandlers
durch zumindest zeitweises Aktivieren eines
Stromflusses durch ein Eingangsregelelement

610

Fig. 6

Rippelstromkompensation des PWM-Wandlers durch Linearregler LR3 und LR4 (Fall 4 nach Tabelle 3 und Tabelle 4) (blau — — — –: Eingangsstrom des getakteten Spannungswandlers; rot --------: Strom durch LR3 und LR4)

Fig. 7

Rippelstromkompensation des PWM-Wandlers durch Linearregler LR3 (Fall 1 nach Tabelle 3 und Tabelle 4) (blau — — – : Eingangsstrom des getakteten Spannungswandlers; rot -------- : Strom durch LR3)

Fig. 8

Rippelstromkompensation des PWM-Wandlers durch Linearregler LR4 bzw. LR1 (Fälle 2, 3, und 5 nach Tabelle 3 und Tabelle 4) (blau— — –: Eingangsstrom des getakteten Spannungswandlers; rot -------: Strom durch LR4 bzw. LR1)

Fig. 9

Fig. 10

Erfindungsgemäße Ausführung – transformator-gekoppelter Cuk-Konverter, kombiniert mit vier Linearreglern

Fig. 11a

Herkömmlicher PFC-Boost-Wandler

Fig. 11b

Herkömmlicher PFC-Sepic-Wandler

Fig. 11c

Herkömmlicher brückenloser PFC-Sepic-Wandler

Fig. 11d

Herkömmlicher brückenloser PFC-Boost-Wandler

Erfindungsgemäße Ausführung (Ausführungsbeispiel) - Linear unterstützter
Aufwärtswandler, kombiniert mit zwei Linearreglern

Fig. 12

Erfindungsgemäße Ausführung (Ausführungsbeispiel) – Linear unterstützter Boost-Wandler, kombiniert mit zwei Linearreglern

Fig. 13a

EP 3 729 623 B1

Erfindungsgemäße Ausführung (Ausführungsbeispiel) - Linear unterstützter Boost-Wandler nach Fig. 13a, kombiniert mit zwei Linearreglern und Implementierung einer erfindungsgemäßen Regelfunktion des linear unterstützten Aufwärts-Konverters zur Rippelstromunterdrückung am Eingang

Fig. 13b

Erfindungsgemäße Ausführung (Ausführungsbeispiel) - Linear unterstützter Boost-Wandler nach Fig. 13a, kombiniert mit zwei Linearreglern und Implementierung einer erfindungsgemäßen Regelfunktion des linear unterstützten Aufwärts-Konverters zur Rippelstromunterdrückung am Eingang und spannungsgesteuerte Leistungsfaktorkorrektur mit variabler Spannungsreferenz über Funktion $K_v(s)$

Fig. 13c

EP 3 729 623 B1

Erfindungsgemäße Ausführung (Ausführungsbeispiel) - Linear unterstützter Boost-Wandler nach Fig. 13a, kombiniert mit zwei Linearreglern und Implementierung einer erfindungsgemäßen Regelfunktion des linear unterstützten Aufwärts-Konverters zur Rippelstromunterdrückung am Eingang und spannungsgesteuerte Leistungsfaktorkorrektur mit variabler Spannungsreferenz über Funktion zweier invertierender Verstärker mit Zeitverzögerung (Low-Pass-Filter Ry2, Ry3, Cy3 und Ry5, Ry6, Cy6)

Fig. 13d

EP 3 729 623 B1

Erfindungsgemäße Ausführung (Ausführungsbeispiel) - Linear unterstützter
Aufwärts/Abwärtswandler, kombiniert mit drei Linearreglern

Fig. 14

Erfindungsgemäße Ausführung (Ausführungsbeispiel) - SEPIC-Konverter, kombiniert mit drei Linearreglern

Fig. 15a

EP 3 729 623 B1

Erfindungsgemäße Ausführung (Ausführungsbeispiel) – Linear unterstützter SEPIC-Wandler nach Fig. 15a, kombiniert mit drei Linearreglern und Implementierung einer erfindungsgemäßen Regelfunktion des linear unterstützten Aufwärts-/Abwärts-Wandlers zur Rippelstromunterdrückung am Eingang und spannungsgesteuerte Leistungsfaktorkorrektur mit variabler Spannungsreferenz über Funktion $K_V(s)$

Fig. 15b

Erfindungsgemäße Ausführung (Ausführungsbeispiel) - Linear unterstützter SEPIC-Wandler nach Fig. 15a, kombiniert mit drei Linearreglern und Implementierung einer erfindungsgemäßen Regelfunktion des linear unterstützten Aufwärts-/Abwärts-Wandlers zur Rippelstromunterdrückung am Eingang und spannungsgesteuerte Leistungsfaktorkorrektur mit variabler Spannungsreferenz über Funktion $K_V(s)$ sowie Korrekturfunktion der Spannungsreferenz Vuref durch Erfassung der Ströme $I_{reg1}$, $I_{reg3}$ und $I_{reg4}$ in den Linearreglern

Fig. 15c

EP 3 729 623 B1

Erfindungsgemäße Ausführung einer Eingangsspannungsquelle $V_{in}$ durch eine gleichgerichtete Wechselspannung mit Vollbrückengleichrichter

## Fig. 15d

Kompensation des Stromrippels des Eingangsstromes $i_{Vin(t)}$ für eine gleichgerichtete sinusförmige Eingangsspannung Vin durch die Ströme in Linearreglern Lr3 ind Lr4 nach Fall 4 in Tabelle 4 (Beispiel)

Fig. 16

Tabelle 2: Aktivierungsfunktion der Linearregler für Ausführung nach Abbildung 10

| Rippelstromkompensation | Bedingungen | | Aktivierte Linearregler |
|---|---|---|---|
| **nur für L2 an RL** | **Fall 1:** | Vout < (Vin-Vout) und Vin > Vout | LR2 |
| | **Fall 2:** | Vin ≈ Vout | LR2 |
| | **Fall 3:** | Vout > (Vin-Vout) und Vin > Vout | LR1 |
| | **Fall 4:** | Vout ≈ (Vin-Vout) und Vin > Vout | LR1 und LR2 |
| | **Fall 5:** | Vin < Vout | LR3 |
| **nur für L1 an Vin** | **Fall 6:** | Vin < (Vout-Vin) und Vout > Vin | LR4 |
| | **Fall 7:** | Vin ≈ Vout | LR4 |
| | **Fall 8:** | Vin > (Vout-Vin) und Vout > Vin | LR3 |
| | **Fall 9:** | Vin ≈ (Vout-Vin) und Vout > Vin | LR3 und LR4 |
| | **Fall 10:** | Vout < Vin | LR1 |
| **für L1 an Vin und L2 an RL** | **Fall 11:** | Vout < (Vin-Vout) und Vin > Vout | LR2 und LR1 |
| | **Fall 12:** | Vin ≈ Vout | LR2 und LR4 |
| | **Fall 13:** | Vout > (Vin-Vout) und Vin > Vout | LR2 und LR1 **oder** LR2 und LR4 |
| | **Fall 14:** | Vout ≈ (Vin-Vout) und Vin > Vout | LR2 und LR1 **oder** LR2 und LR4 |
| | **Fall 15:** | Vin < (Vout-Vin) und Vout > Vin | LR3 und LR4 |
| | **Fall 16:** | Vin > (Vout-Vin) und Vout > Vin | LR3 und LR4 **oder** LR2 und LR4 |
| | **Fall 17:** | Vin ≈ (Vout-Vin) und Vout > Vin | LR3 und LR4 **oder** LR2 und LR4 |

Fig. 17

Tabelle 3: Aktivierungsfunktion der Linearregler für Ausführung nach
Fig. 12 und 13

| Bedingungen | Aktivierte Linearregler |
|---|---|
| Fall 1: Vin > (Vout-Vin) | LR3 |
| Fall 2: Vin ≈ Vout | LR4 |
| Fall 3: Vin < (Vout-Vin) | LR4 |
| Fall 4: Vin ≈ Vout/2 | LR3 und LR4 |

Fig. 18

Tabelle 4: Aktivierungsfunktion der Linearregler für Ausführung nach
Fig. 14 und 15

| Bedingungen | Aktivierte Linearregler |
|---|---|
| Fall 1: Vin > (Vout-Vin) und Vout>Vin | LR3 |
| Fall 2: Vin ≈ Vout | LR4 |
| Fall 3: Vin < (Vout-Vin) und Vout>Vin | LR4 |
| Fall 4: Vin ≈ (Vout-Vin) und Vout>Vin | LR3 und LR4 |
| Fall 5: Vin > Vout | LR1 |

Fig. 19

EP 3 729 623 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4355352 A

**In der Beschreibung aufgeführte Nicht-Patentliteratur**

- **H. MARTINEZ-GARCIA.** Capacitorless DC-DC Regulator as a Candidate Topology for Photovoltaic Solar Facilities. *International Conference on Renewable Energies and Power Quality (ICREPQ14), La Coruna, Spain,* 25. Marz 2015
- Linear-Assisted DC/DC Converters with Variable Frequency: On their Complex Control Strategies. **H. MARTINEZ-GARCIA ; ANTONI GRAU-SALDES.** Proceedings 2014 Complexity in Engineering. IEEE
- Four-Quadrant Linear-Assisted DC/DC Voltage Regulator, Mixed Signal Letter. **H. MARTINEZ-GARCIA ; ALIREZA SABERKARI.** Analog Integr Circ Sig Process. Springer-Verlag, 2016, vol. 88, 151-160
- Application Note AN3180: A 200 W ripple-free input current PFC pre-regulator with the L6563S. *ST Microelectronics,* 2010
- **JEFF FALIN.** Designing DC/DC converters based on ZETA topology, Application Note. *High-Performance Analog Products,* 2010
- **S.SUBASREE ; A.BALAMANI.** Energy Efficient Zeta Converter with Coupled Inductor for PV Applications. *International Journal for Research and Development in Engineering (IJRDE),* 2014, ISSN 2279-0500, 076-082
- **JAE-WON YANG ; HYUN-LARK DO.** Bridgeless SEPIC Converter With a Ripple-Free Input Current. *IEEE TRANSACTIONS ON POWER ELECTRONICS,* Juli 2013, vol. 28 (7
- **YUNGTAEK JANG ; MILAN M. JOVANOVIC.** Bridgeless Buck PFC Rectifier. IEEE